# EUROPÄISCHE PATENTSCHRIFT

(11) **EP 3 126 186 B1**
(45) Veröffentlichungstag und Bekanntmachung des Hinweises auf die Patenterteilung: **18.03.2026**
(21) Anmeldenummer: 15722093.0
(22) Anmeldetag: 22.04.2015
(51) Int. Cl.: B60L 13/03, B65G 54/02

(54) **AUTONOM ELEKTROMAGNETISCHER TRANSPORTTRÄGER VON LEBENSMITTELPORTIONEN**
AUTONOMOUSLY ELECTROMAGNETIC TRANSPORT CARRIER OF FOOD PORTIONS
SUPPORT DE TRANSPORT ÉLECTROMAGNÉTIQUE AUTONOME DE PORTIONS DE PRODUITS ALIMENTAIRES

(30) Priorität: 25.04.2014 DE 102014105848; 07.05.2014 DE 102014106400
(43) Veröffentlichungstag der Anmeldung: 08.02.2017
(60) Teilanmeldung: 26156422.3
(73) Patentinhaber: Weber Food Technology SE & Co. KG, 35236 Breidenbach (DE)
(72) Erfinder: BAUER, Sigfrid, 17091 Gross Teetzleben (DE); BURK, Alexander, 35232 Dautphetal (DE); ECKHARDT, Christoph, 35236 Breidenbach (DE); HORST, Theodor, 35287 Amöneburg-Rossdorf (DE); KUHMICHEL, Christoph, 57334 Bad Laasphe (DE); LEHMANN, Stefan, 17034 Neubrandenburg (DE); LISCHINSKI, Gerd, 17349 Schönbeck (DE); NISPEL, Thomas, 35232 Dautphetal (DE); ROTHER, Ingo, 35236 Breidenbach (DE); SCHRÖDER, Jens, 17036 Neubrandenburg (DE); VON KEUDELL, Leopold, 88682 Salem (DE); ZECHER, Steffen, 35460 Staufenberg (DE)
(74) Vertreter: Manitz Finsterwald Patent- und Rechtsanwaltspartnerschaft mbB
(86) Internationale Anmeldenummer: PCT/EP2015/058727
(87) Internationale Veröffentlichungsnummer: WO 2015/162182

(56) Entgegenhaltungen:
- EP-A1- 0 647 552
- EP-A1- 1 216 938
- EP-A1- 2 460 446
- EP-A1- 2 653 036
- EP-A1- 2 673 224
- EP-A1- 2 894 101
- EP-A2- 0 246 098
- WO-A1-2016/096856
- DE-A1- 10 043 304
- DE-A1- 102006 025 545
- GB-A- 2 185 720
- US-A- 4 800 999
- US-A- 5 156 093
- US-A- 5 947 361
- US-B1- 6 390 276

## Beschreibung

Die Erfindung betrifft das Bewegen von Portionen, die jeweils wenigstens eine von einem Lebensmittelprodukt, insbesondere mittels einer Aufschneidevorrichtung, insbesondere eines Hochgeschwindigkeitsslicers, abgetrennte Scheibe umfassen.

Insbesondere bei der Produktion von Ein- oder Mehrsortenverpackungen, die eine oder mehrere Portionen aus beispielsweise Wurst- und/oder Käsescheiben enthalten, werden Fördersysteme benötigt, um die mittels eines oder mehrerer Aufschneidevorrichtungen, insbesondere sogenannter Slicer, erzeugten und Portionen oder zumindest Teilportionen bildenden Lebensmittelscheiben einer Verpackungsmaschine zuzuführen.

Die Förderstrecke dient in der Praxis nicht lediglich dem Transport der Portionen vom Slicer zur Verpackungsmaschine, sondern hat zusätzliche, von der jeweiligen Anwendung abhängige Funktionen zu erfüllen, die dem Fachmann grundsätzlich bekannt sind und von denen an dieser Stelle lediglich beispielhaft die Pufferung und die Formatbildung genannt werden sollen. Unmittelbar im Anschluss an den Slicer sind außerdem Portionierungs- sowie Komplettierungsaufgaben zu erfüllen. Ferner müssen die Portionen gewogen werden.

Eine immer größer werdende Bedeutung kommt zudem einem sogenannten Mehrspurbetrieb zu, bei dem mehrere Lebensmittelprodukte gleichzeitig mittels eines Slicers aufgeschnitten werden. Das nachgeordnete Fördersystem muss zu einem derartigen Mehrspurbetrieb und vor allem dazu in der Lage sein, aus den in der jeweiligen Anzahl von Spuren erzeugten Portionen diejenigen auch als Formatsätze bezeichneten Formate zu bilden, die von der nachgeordneten Verpackungsmaschine gefordert werden bzw. verarbeitet werden können.

Diese und weitere Aufgaben eines Fördersystems auf dem Gebiet der Handhabung von Portionen aus mittels Slicern von insbesondere laib- oder stangenförmigen Lebensmittelprodukten abgetrennten Scheiben werden derzeit mit Förderbandsystemen zufriedenstellend gelöst. Allerdings sind Förderbandsysteme mit einem hohen mechanischen Aufwand verbunden. Problematisch insbesondere im Hinblick auf den geforderten schonenden Transport der Portionen sind außerdem insbesondere die Übergänge zwischen aufeinanderfolgenden Förderbandabschnitten. Des Weiteren lassen sich mit Förderbändern naturgemäß nur gerade Förderstrecken oder aus geradlinigen Abschnitten bestehende Förderstrecken realisieren, d.h. die Flexibilität bei der Auslegung einer Förderstrecke ist bei Förderbandsystemen begrenzt. Genauso sind die Möglichkeiten der gesamten Anlage begrenzt, z.B. bezüglich der zu verarbeitenden Produkte und der Portions- und Formatbildungsmöglichkeiten. Außerdem ist in Verbindung mit im Lebensmittelbereich eingesetzten Förderbandsystemen ein vergleichsweise hoher Aufwand bei der Reinigung erforderlich, um die hohen Hygienestandards einhalten zu können.

Eine Vorrichtung die die Merkmale des Oberbegriffs des Anspruchs 1 offenbart ist aus US 5 156 093 A bekannt.

Vor diesem Hintergrund ist eine Aufgabe der Erfindung, eine Möglichkeit für den Transport von Lebensmittelportionen zu schaffen, bei der die oben erwähnten Nachteile nicht bestehen und die dennoch die derzeit gestellten Anforderungen bei möglichst hoher Flexibilität erfüllen kann.

Die Lösung dieser Aufgabe erfolgt durch die Merkmale des Anspruchs 1, der eine Vorrichtung zum Bewegen von Portionen betrifft, die jeweils wenigstens eine von einem Lebensmittelprodukt, insbesondere mittels einer Aufschneidevorrichtung, insbesondere eines Hochgeschwindigkeitsslicers, abgetrennte Scheibe umfassen. Erfindungsgemäß umfasst diese Vorrichtung eine Mehrzahl individuell bewegbarer Transportmover für jeweils wenigstens eine Portion, ein Bahnsystem für die Transportmover, in welchem die Transportmover entlang wenigstens einer vorgegebenen Bahn in einer Transportrichtung bewegbar sind, und eine Steuereinrichtung zum Steuern der Bewegungen der Transportmover in dem Bahnsystem, wobei die Transportmover jeweils zumindest einen mit dem Bahnsystem zusammenwirkenden Läufer und wenigstens einen am Läufer mittels eines Halters angebrachten Träger für zumindest eine Portion umfassen.

Im Rahmen der Erfindung ist der Begriff "Portion" breit zu verstehen. Eine Portion kann dementsprechend aus nur einer einzigen Scheibe bestehen. Alternativ kann eine Portion mehrere Scheiben umfassen, die in einer grundsätzlich beliebigen Relativanordnung vorliegen können, beispielsweise in einer sogenannten Stapel- oder Schindelanordnung, wie sie auf dem hier in Rede stehenden technischen Gebiet dem Fachmann bekannt sind. Bei der Portion kann es sich um eine Gesamtportion handeln, wie sie abschließend verpackt und im Handel angeboten wird. Alternativ kann die Portion eine Teilportion sein, die erst zusammen mit einer oder mehreren weiteren Teilportionen, die wiederum jeweils eine oder mehrere Scheiben umfassen können, eine Gesamtportion bildet. Die Teilportionen einer Gesamtportion können aus unterschiedlichen Produktsorten gebildet sein, so dass durch Zusammenstellen mehrerer Teilportionen eine Mehrsortenportion erzeugt werden kann und nach deren Verpackung somit eine Mehrsortenpackung vorliegt. Bei den Scheiben kann es sich beispielsweise um vergleichsweise dünne Scheiben handeln, wie sie in Form von Wurst- oder Käseaufschnitt allgemein bekannt sind. Alternativ kann es sich bei den Scheiben jeweils um im Vergleich zu Aufschnitt relativ dicke Stücke wie beispielsweise Schnitzel oder Steaks handeln, insbesondere um Frischfleischstücke.

Mit anderen Worten handelt es sich im Rahmen der Erfindung bei einer Portion um die im Hinblick auf die Transportaufgabe kleinste Einheit, die einerseits über eine bestimmte Strecke transportiert werden muss und die gegebenenfalls - je nach Anwendung - andererseits zusätzlich zu weiteren Portionen in Beziehung gesetzt werden muss, um die jeweiligen Anforderungen der Gesamtanlage, die eine oder mehrere Aufschneidevorrichtungen, insbesondere Slicer, das Transportsystem sowie eine oder mehrere Verpackungsmaschinen umfasst, zu erfüllen, beispielsweise hinsichtlich der Bildung von Formaten, wie sie für die jeweils vorgesehene Verpackungsmaschine bereitgestellt werden müssen.

Erfindungsgemäß wurde erkannt, dass mit einem Individualsystem mit individuell bewegbaren Transportern für die Portionen alle aktuell geforderten und auch zukünftig vorstellbaren Anforderungen an ein Transportsystem für Lebensmittelportionen in idealer Weise abgebildet werden können. Während der Stand der Technik der Vorstellung verhaftet ist, den Transport von Lebensmittelportionen mittels Förderbandsystemen bewerkstelligen zu müssen, bedeutet die Erfindung eine Abkehr von einem derartigen Gemeinschaftstransport hin zu einem "Individualverkehr", bei dem die Portionen - im durch das Bahnsystem vorgegebenen Rahmen - unabhängig voneinander bewegt werden können und insbesondere im Gesamtsystem auch individuell registriert werden können.

Erfindungsgemäß umfasst das Transportsystem eine Mehrzahl von Transportmovern, deren Gesamtanzahl von der jeweiligen Anwendung abhängig ist. Ein Aspekt der Erfindung besteht darin, nicht bloß einige wenige Portionen zu bewegen und hierfür nur eine relativ geringe Zahl von z.B. weniger als 10 Transportmovern vorzusehen. Vielmehr ist erfindungsgemäß insbesondere vorgesehen, dass das Bahnsystem mehrere Dutzende bis einige Hundert Transportmover umfasst, d.h. es kann gewissermaßen ein regelrechter "Schwarm" von Transportmovern im Bahnsystem vorhanden sein, um eine Vielzahl von Portionen zu transportieren und gegebenenfalls Zusatzfunktionen durchzuführen wie z.B. eine Pufferung von Portionen.

Ein wesentlicher Vorteil des erfindungsgemäßen Transportsystems gegenüber herkömmlichen Förderbandsystemen besteht darin, dass das Bahnsystem für die Mover keine beweglichen Teile erfordert und deshalb gegen Verschmutzungen vergleichsweise unempfindlich bzw. leicht zu reinigen ist. Das Bahnsystem kann insbesondere derart geschützt bzw. gekapselt hergestellt werden, dass selbst bei unter Hygienegesichtspunkten äußerst anspruchsvollen Bedingungen, wie sie bei der Verarbeitung von Lebensmittelprodukten und den damit verbundenen Reinigungsanforderungen herrschen, hohe Hygienestandards erfüllt und strenge Normen eingehalten werden können. Insbesondere ist es erfindungsgemäß möglich, ein IP69K-fähiges Transportsystem mit vertretbarem Aufwand zu realisieren.

Das erfindungsgemäße Transportprinzip kann auf unterschiedliche Art und Weise konkret technisch umgesetzt und im Hinblick auf die jeweiligen konkreten Anforderungen ausgestaltet werden, worauf nachstehend näher eingegangen wird.

Die Offenbarung betrifft außerdem ein nicht beanspruchtes Verfahren zum Bewegen von Portionen, die jeweils wenigstens eine von einem Lebensmittelprodukt, insbesondere mittels einer Aufschneidevorrichtung, insbesondere eines Hochgeschwindigkeitsslicers, abgetrennte Scheibe umfassen. Bei dem Verfahren werden die Portionen mittels einer Mehrzahl individuell bewegbarer Transportmover bewegt, die mittels einer Steuereinrichtung in einem Bahnsystem entlang wenigstens einer vorgegebenen Bahn bewegt werden.

Die Erfindung betrifft außerdem ein System zum Verarbeiten von Lebensmittelprodukten, mit zumindest einer Vorrichtung zum Aufschneiden von Lebensmittelprodukten, insbesondere einem Hochgeschwindigkeitsslicer, und mit einem eine Vorrichtung der hier beschriebenen Art umfassenden Transportsystem.

Ferner betrifft die Offenbarung eine nicht beanspruchte Verwendung eines eine Vorrichtung der hier beschriebenen Art umfassenden Transportsystems zum Bewegen von Portionen, die jeweils wenigstens eine von einem Lebensmittelprodukt, insbesondere mittels einer Aufschneidevorrichtung, insbesondere eines Hochgeschwindigkeitsslicers, abgetrennte Scheibe umfassen.

Bei dieser Verwendung wird insbesondere ein Verfahren der hier beschriebenen Art durchgeführt. Die erfindungsgemäße Vorrichtung ist insbesondere zur Durchführung eines Verfahrens der hier beschriebenen Art ausgebildet. Das erfindungsgemäße Verfahren wird insbesondere mit einer Vorrichtung der hier beschriebenen Art durchgeführt.

Mögliche Weiterbildungen der Erfindung sind auch im nachfolgenden Teil der Beschreibung, in der Figurenbeschreibung, in der Zeichnung sowie in den Ansprüchen angegeben.

Vorzugsweise ist zumindest ein und insbesondere jeder Träger zur unmittelbaren Aufnahme zumindest einer Portion ausgebildet und umfasst insbesondere eine zumindest im Wesentlichen ebene Auflagefläche für die Portion. Hierdurch ist es nicht erforderlich, die Transportmover mit Teilen der endgültigen Verpackung, beispielsweise einem auch als Tray bezeichneten Verpackungsunterteil, zu versehen, da die Portion unmittelbar vom Transportmover bzw. dessen Träger selbst aufgenommen werden kann. Dies hat beispielsweise den Vorteil, dass die Übergabe einer Portion an die Verpackung an einem gezielt dafür optimierten Bereich und in einer gezielt hierfür optimierten Art und Weise übergeben werden kann. Insbesondere ist es nicht erforderlich, Teile einer Verpackung im Bahnsystem zu bewegen. So ist es beispielsweise nicht nötig, bei der Produktion von Mehrsortenpackungen die einzelnen Teilportionen nacheinander durch Umherfahren eines Verpackungsbestandteils, wie z.B. eines sogenannten Trays, einzusammeln.

Ferner kann erfindungsgemäß vorgesehen sein, dass zumindest ein und insbesondere jeder Träger während des Betriebs zum Verbleib am Transportmover oder zur lediglich vorübergehenden Trennung vom Transportmover und anschließenden Weiterverwendung oder Wiederverwertung an dem oder einem anderen Transportmover ausgebildet ist. Die Träger, von denen die Portionen aufgenommen werden, sind hierbei also auch bei eventuell vorübergehender Trennung vom jeweiligen Transportmover ein Bestandteil des Transportsystems und sind folglich keine externen Komponenten wie beispielsweise Teile einer Verpackung.

Die erfindungsgemäße Verwendung eines Bahnsystems mit einer oder mehreren Bahnen für die Transportmover bedeutet nicht zwangsläufig, dass die Transportmover ausschließlich eindimensional wie beispielsweise einzelne Wagen einer Achterbahn bewegbar sind. Als eine Bahn im Sinne der Erfindung ist auch eine Strecke zu verstehen, auf welcher die Transportmover auch quer zur Transportrichtung bewegbar sind, beispielsweise wie Autos auf einer eine ausreichende Breite aufweisenden Straße.

Ungeachtet dieser möglichen Ausgestaltung der Erfindung ist gemäß einer bevorzugten Weiterbildung vorgesehen, dass die Transportmover in dem Bahnsystem zumindest abschnittsweise ausschließlich eindimensional bewegbar sind.

Dabei ist insbesondere vorgesehen, dass die Transportmover von dem Bahnsystem zwangsgeführt sind.

Eine Führung für die Transportmover kann beispielsweise ein Schienensystem umfassen, insbesondere ein Schienenpaar, das parallel zueinander verlaufende Schienen umfasst, von denen oder zwischen denen der Transportmover geführt wird.

Der Transportmover kann auf einer Führung beispielsweise gleiten oder rollen.

Eine Führung des Transportmovers kann über dessen Läufer erfolgen. Hierzu kann der Läufer Schlitze oder Nuten aufweisen, die mit einer oder mehreren Schienen eines Führungsschienensystems in Eingriff stehen. Es ist aber nicht zwingend, dass derartige Führungsmittel der Transportmover an deren Läufern vorgesehen sind. Eine Führung des Transportmovers kann völlig unabhängig von dem Läufer erfolgen. Insbesondere kann der Läufer ausschließlich einem Antrieb des Transportmovers dienen.

Vorzugsweise ist vorgesehen, dass die Transportmover in dem Bahnsystem herausfallsicher angeordnet sind. Dies kann insbesondere durch Hintergreifen, Untergreifen und/oder Umgreifen einer Führung erfolgen, insbesondere mittels des Läufers.

Eine derartige herausfallsichere Anordnung ist insbesondere dann von Vorteil, wenn das Bahnsystem solche Bahnabschnitte umfasst, in denen die Transportmover bzw. deren Läufer seitlich oder unten angeordnet sind.

In einem Ausführungsbeispiel ist vorgesehen, dass das Bahnsystem für die Transportmover einen Antriebsabschnitt und eine mit dem Antriebsabschnitt verbundene Führung umfasst. Hierdurch können die Funktionen "Antreiben" einerseits und "Führen" andererseits in dem Bahnsystem zumindest für einige und insbesondere für alle Bahnabschnitte voneinander getrennt werden.

Der Antriebsabschnitt kann insbesondere als Stator eines Linearmotors ausgebildet sein, der mit den Läufern der Transportmover zusammenwirkt. Auf ein solches Antriebsprinzip, das eines von mehreren im Rahmen der Erfindung möglichen Antriebsprinzipien darstellt, wird nachstehend näher eingegangen.

Erfindungsgemäß ist vorgesehen, dass der Antrieb für die Transportmover jeweils von dem Läufer und dem Bahnsystem gebildet ist, wobei jeweils der Läufer und das Bahnsystem gemeinsam einen elektromagnetischen Antrieb für den Transportmover bilden.

Der Antrieb für die Transportmover kann jeweils als Linearmotor ausgebildet sein, insbesondere als linearer Synchronmotor oder als linearer Induktionsmotor.

Derartige Linearmotoren sind im Zusammenhang mit einer Vielzahl von Anwendungen grundsätzlich bekannt. Von Vorteil ist ein derartiges Antriebsprinzip unter anderem dann, wenn vergleichsweise geringe Lasten zu transportieren sind, wie es in dem hier in Rede stehenden Bereich des Transports von Lebensmittelportionen der Fall ist.

Ein für die Erfindung grundsätzlich verwendbares Transportsystem, auf das hiermit im Hinblick auf das Erfordernis der Ausführbarkeit der Erfindung ausdrücklich Bezug genommen wird, wird von der Firma MagneMotion Inc. mit Sitz in Devens, Massachusetts, USA, angeboten. Dieses System basiert auf einem sogenannten LSM-Antrieb, also auf einem Antrieb durch lineare Synchronmotoren, der von einem sogenannten linearen Induktionsmotor (LIM-Antrieb) zu unterscheiden ist. Im Unterschied zu einem LIM-Antrieb wird bei einem LSM-Antrieb ein Magnetfeld nicht mittels des sogenannten elektromagnetischen Wanderfeldes induziert, sondern das Magnetfeld wird durch Permanentmagnete bereitgestellt. Wenn der Läufer des Linearmotors die Permanentmagnete trägt und der Stator des Linearmotors das elektromagnetische Wanderfeld erzeugt, dann kann man sich das Antriebsprinzip eines LSM-Antriebs bildlich so vorstellen, dass der mit dem Permanentmagneten versehene Transporter von dem sich längs des Stators bewegenden Magnetfeld über die Transportstrecke gezogen wird. Ein solches Transportsystem bzw. Antriebsprinzip ist beispielsweise in WO 2003/029651 A2 und WO 2010/085670 A1 beschrieben. Auf diese Dokumente wird hiermit bezüglich der Offenbarung eines möglichen Antriebs- bzw. Funktionsprinzips für die Erfindung ausdrücklich Bezug genommen.

Das Bahnsystem bzw. die einzelnen Bahnen eines solchen Transportsystems können in eine Vielzahl aufeinanderfolgender Bahnelemente unterteilt werden, die gewissermaßen jeweils einen Einzel-Linearmotor bilden und von einer Steuereinrichtung individuell ansteuerbar sind. Wenn gleichzeitig die im Bahnsystem befindlichen Transportmover mittels der Steuereinrichtung identifizierbar sind, dann können auf diese Weise grundsätzlich beliebig viele Transportmover gleichzeitig in einem grundsätzlich beliebig komplexen Bahnsystem betrieben und dabei individuell bewegt werden.

Für die Identifizierung bzw. Lokalisierung der einzelnen Transporter im Bahnsystem verwendet die vorstehend erwähnte Firma MagneMotion Inc. eine Technik, bei der jeder Transporter mit einem Transducer versehen ist, der in den vom Bahnsystem gebildeten Stator ein Signal induziert, wodurch es der Steuereinrichtung ermöglicht wird, die exakte Position des Transporters mit einer von der Größe des Gesamtsystems abhängigen Genauigkeit von Bruchteilen eines Millimeters oder Bruchteilen eines Zentimeters zu bestimmen. Ein Vorteil dieses Systems besteht darin, dass keine externen Sensoren benötigt werden. Bei dem Steuersystem der Firma MagneMotion Inc. ist außerdem durch eine Unterteilung der Bahnen in eine Vielzahl von - gewissermaßen jeweils einen Einzel-Linearmotor darstellenden - Bahnelementen sichergestellt, dass keine Kollisionen zwischen aufeinanderfolgenden Transportern auftreten. So kann ein Transporter nur dann in das nächste Bahnelement einfahren, wenn dies von der Steuereinrichtung gestattet wird, was insbesondere dann nicht der Fall ist, wenn sich ein anderer Transporter in dem Bahnelement befindet.

Vor dem Hintergrund dieses grundsätzlich bekannten Transportsystems ist bei der Erfindung in einem möglichen Ausführungsbeispiel vorgesehen, dass das Bahnsystem als Stator des Linearmotors ausgebildet ist.

Insbesondere ist der Läufer jeweils ein Bestandteil eines linearen Synchronmotors, wobei insbesondere der Läufer zumindest einen Permanentmagneten umfasst und das Bahnsystem als Motorstator ausgebildet ist.

Insbesondere ist das Bahnsystem in eine Vielzahl von, insbesondere jeweils einen Einzel-Linearmotor darstellenden, Bahnelementen unterteilt, die von der Steuereinrichtung individuell ansteuerbar sind.

Die Transportmover sind vorzugsweise von der Steuereinrichtung identifizierbar.

Des Weiteren sind die Transportmover vorzugsweise von der Steuereinrichtung im Bahnsystem lokalisierbar.

Wie eingangs bereits erwähnt, kommt insbesondere aufgrund des damit verbundenen erhöhten Produktdurchsatzes einem gleichzeitigen Aufschneiden mehrerer Lebensmittelprodukte mittels eines einzigen Slicers und somit einem Mehrspurbetrieb beim Aufschneiden von Lebensmittelprodukten und beim anschließenden Transport der dabei erzeugten Scheiben bzw. aus den Scheiben gebildeten Portionen in der Praxis eine immer größere Bedeutung zu.

Vor diesem Hintergrund ist gemäß einem Ausführungsbeispiel der Erfindung vorgesehen, dass das Bahnsystem zu einem Mehrspurbetrieb ausgebildet ist und insbesondere mehrere Bahnen oder Bahnabschnitte umfasst, die zumindest abschnittsweise parallel zueinander verlaufen.

Das Bahnsystem kann zumindest einen Beladebereich, in welchem Portionen von den Transportmovern aufgenommen werden, und wenigstens einen Entladebereich umfassen, in welchem die Portionen von den Transportmovern abgegeben werden. Es können für jede Spur des Bahnsystems, insbesondere also für jeden der mehreren parallel zueinander verlaufenden Bahnabschnitte ein eigener Beladebereich sowie ein eigener Entladebereich vorgesehen sein. Alternativ können mehrere Spuren bzw. Bahnabschnitte einen gemeinsamen Beladebereich und einen gemeinsamen Entladebereich umfassen.

Gemäß einem bevorzugten Ausführungsbeispiel ist das Bahnsystem zwischen dem Beladebereich und dem Entladebereich zumindest abschnittsweise mehrspurig ausgebildet.

Bei einem Mehrspurbetrieb kann vorgesehen sein, dass zwischen dem Beladebereich und dem Entladebereich des Bahnsystems die Transportmover wenigstens einen Spurwechsel durchführen können.

Des Weiteren kann erfindungsgemäß vorgesehen sein, dass zwischen dem Beladebereich und dem Entladebereich des Bahnsystems wenigstens ein Übergangsbereich vorgesehen ist, an welchem sich die Anzahl der Spuren verändert.

Die erfindungsgemäße Vorrichtung und somit ein auf der Erfindung basierendes Transportsystem kann die aus dem Stand der Technik bekannten Förderbandsysteme vollständig ersetzen. In einem solchen Fall kann insbesondere vorgesehen sein, dass ein Beladebereich des Bahnsystems dazu ausgebildet ist, unter Schwerkrafteinfluss fallende Scheiben und/oder unmittelbar von einer Vorrichtung zum Aufschneiden von Lebensmittelprodukten, insbesondere einem Hochgeschwindigkeitsslicer, kommende Scheiben mittels der Transportmover aufzunehmen. Mit anderen Worten wird in einer solchen Anlage direkt auf die Transportmover bzw. direkt auf deren Träger geschnitten.

Alternativ sind auch sogenannte Hybrid-Anlagen möglich, bei denen das Transportsystem zum einen eine erfindungsgemäße Vorrichtung und zum anderen ein anderes Transport- bzw. Fördersystem für die Portionen umfasst, insbesondere ein herkömmliches Förderbandsystem. Das Förderbandsystem kann beispielsweise entsprechend der bisher bekannten Anlagen unmittelbar an die Aufschneidevorrichtung anschließen und beispielsweise eine Portionierfunktion sowie eine anschließende Wiegefunktion erfüllen, woraufhin eine Übergabe an ein erfindungsgemäß ausgebildetes Transportsystem erfolgt.

Dementsprechend kann gemäß einer Ausführungsform der Erfindung ein Beladebereich des Bahnsystems dazu ausgebildet sein, von einem, insbesondere zumindest ein Förderband umfassenden, Fördersystem kommende Portionen mittels der Transportmover aufzunehmen. Für eine derartige Übernahme von Portionen von einem beispielsweise Förderbänder umfassenden Fördersystem können gemäß einer Variante Roboter vorgesehen sein. Alternativ oder zusätzlich ist es möglich, die Träger der Transportmover derart auszugestalten, dass jeweils von einem Endlosförderband kommende Portionen sicher und zuverlässig auf dem Träger aufgenommen werden können.

In der Praxis besteht eine Funktion der erfindungsgemäßen Vorrichtung insbesondere darin, die Portionen über eine gewisse Strecke zu transportieren, ohne dass dabei zwangsläufig zusätzliche Funktionen erfüllt werden müssen. Derartige Strecken, auf welchen zumindest primär lediglich eine solche Transportfunktion erfüllt wird, werden im Folgenden auch als Normalstrecke bezeichnet. Die Bezeichnung einer Strecke als Normalstrecke schließt aber nicht aus, dass auf dieser Strecke Zusatzfunktionen erfüllt werden können, d.h. es ist nicht ausgeschlossen, dass eine Normalstrecke bildende Bahnabschnitte des Bahnsystems dazu ausgebildet sind, Zusatzfunktionen wie beispielsweise das Wiegen von Transportmovern bzw. von diesen transportierten Portionen auszuführen.

Entsprechend kann das erfindungsgemäße Bahnsystem solche Strecken umfassen, die in erster Linie nicht lediglich für eine Beförderung der Portionen von einem Ort zu einem anderen Ort gedacht sind, auch wenn tatsächlich die Portionen auf solchen Strecken von einem Ort zum anderen bewegt werden. Strecken, bei denen nicht die Transportfunktion einer Normalstrecke, sondern eine wie auch immer geartete andere Funktion im Vordergrund steht, werden im Folgenden auch als Funktionsstrecke bezeichnet.

Dementsprechend ist gemäß einem Ausführungsbeispiel der Erfindung vorgesehen, dass das Bahnsystem zusätzlich zu wenigstens einer, insbesondere von einem Beladebereich zu einem Entladebereich führenden, Normalstrecke zumindest eine Funktionsstrecke für die Transportmover umfasst.

Die Normalstrecke und die Funktionsstrecke können über zumindest eine Verzweigung miteinander verbunden sein, an der über einen oder mehrere eingangsseitig ankommende Bahnabschnitte einlaufende Transportmover jeweils in einem oder mehreren ausgangsseitig abgehenden Bahnabschnitten weiterlaufen können. Derartige Verzweigungen, die auch als Abzweigungen bezeichnet werden und auf die an anderer Stelle noch näher eingegangen wird, können grundsätzlich beliebig komplex sein. So kann beispielsweise eine Verzweigung eine vergleichsweise einfache Weiche bilden, an der über einen einzigen Bahnabschnitt einlaufende Transportmover lediglich in zwei möglichen abgehenden Bahnabschnitten weiterlaufen können. Es sind aber auch wesentlich komplexere Verzweigungen denkbar, die beispielsweise dazu ausgebildet sind, in einem Funktionsbereich des Bahnsystems mit Mehrspurbetrieb den Spurabstand zwischen parallel zueinander verlaufenden Bahnabschnitten zu verändern oder im Rahmen eines Mehrspurbetriebs einen Wechsel der Spurenanzahl zu bewerkstelligen, also von einem n-Spurbetrieb auf einen m-Spurbetrieb zu wechseln. Auch hierauf wird später näher eingegangen.

Gemäß einem Ausführungsbeispiel der Erfindung können die Normalstrecke und die Funktionsstrecke zusammen eine Endlosstrecke bilden. Hierunter ist auch, aber nicht ausschließlich, eine solche Streckenführung zu verstehen, bei welcher die Funktionsstrecke an einer Stelle von der Normalstrecke abzweigt und an einer anderen Stelle wieder in die Normalstrecke einmündet, die Normalstrecke aber nicht an der Abzweigungs- bzw. Einmündungsstelle endet bzw. beginnt. Die Funktionsstrecke kann also eine Schleife oder einen Teil einer Schleife bilden, die von den Transportmovern durchlaufen werden kann, nicht aber durchlaufen werden muss.

Die Normalstrecke und die Funktionsstrecke können in einer gemeinsamen, zumindest im Wesentlichen horizontal verlaufenden Ebene liegen.

Es ist auch möglich, dass die Normalstrecke oder die Funktionsstrecke in unterschiedlichen, jeweils zumindest im Wesentlichen horizontal verlaufenden Ebenen liegen. Für einen solchen Mehrebenen- oder Mehretagenbetrieb kann vorgesehen sein, dass wiederum spezielle Funktionsstrecken oder nicht als Bahnabschnitte des Bahnsystems ausgebildete Zusatzeinrichtungen vorhanden sind, um die Transportmover zwischen den einzelnen Ebenen wechseln zu lassen.

Bei einer weiteren Ausführungsform der Erfindung kann vorgesehen sein, dass die Normalstrecke und die Funktionsstrecke in einer gemeinsamen, zumindest im Wesentlichen vertikal verlaufenden Ebene liegen. Hierzu können spezielle Bahnabschnitte vorgesehen sein, die in vertikaler Richtung oder schräg zur Horizontalen geneigt verlaufen. Für den Übergang zwischen einer horizontalen Bewegung einerseits und einer vertikalen oder schräg zur Horizontalen geneigten Bewegung andererseits können spezielle Übergangsstellen vorgesehen sein, beispielsweise Bahnabschnitte mit speziellen Führungen, an die speziell ausgebildete Transportmover bzw. deren Läufer angepasst sind, oder als Rampe ausgebildete Bahnabschnitte.

In einem Ausführungsbeispiel der Erfindung ist die Funktionsstrecke als eine Aussortier- oder Ausschleusstrecke ausgebildet, über die Transportmover, deren Portionen zumindest ein vorgegebenes oder vorgebbares Kriterium erfüllen oder nicht erfüllen, aus einer Normalstrecke herausführbar sind. Derartige Kriterien sind beispielsweise ein von einem Sollgewicht abweichendes Portionsgewicht, eine von einer Sollanzahl abweichende Anzahl von Scheiben innerhalb einer Portion oder optische Mängel an einer Portion, z.B. an der obersten Scheibe einer Portion.

Gemäß einem weiteren Ausführungsbeispiel der Erfindung kann vorgesehen sein, dass die Funktionsstrecke als Aussortier- oder Ausschleusstrecke für Transportmover ausgebildet ist, die unabhängig von ihren Portionen eine vorgegebene oder vorgebbare Bedingung erfüllen oder nicht erfüllen, aus einer Normalstrecke herausführbar sind.

Ein derartiges Herausführen eines Transportmovers kann beispielsweise dann veranlasst werden, wenn der Transportmover einen nicht mehr tolerierbaren Verschleiß- und/oder Verschmutzungszustand aufweist. Derartige Zustände können beispielsweise mittels geeigneter Sensorik automatisch erkannt werden.

Ein Herausführen von Transportmovern kann insbesondere automatisch erfolgen.

Gemäß einer Ausführungsform der Erfindung ist zumindest eine Funktionsstrecke als, insbesondere von einem Entladebereich zu einem Beladebereich führende, Rückführstrecke für die Transportmover ausgebildet. Während bei einem Endlosförderband das Untertrum gewissermaßen automatisch für eine Rückführung der zum Transportieren von Portionen dienenden Auflagefläche sorgt, ist für die individuell bewegbaren Transportmover eine andere Rückführung vorgesehen, die als eine Rückführstrecke ausgebildet ist. Es ist somit nicht erforderlich, die Transportmover nach Erfüllung ihrer Transportfunktion z.B. von Hand an einer anderen Stelle wieder in das Bahnsystem einzusetzen. Der Vorteil einer derartigen Rückführstrecke besteht darin, dass diese für zusätzliche, gegebenenfalls ohnehin erforderliche Funktionen genutzt werden kann, wobei eine solche Nutzung aber nicht zwingend ist.

In einem Ausführungsbeispiel kann die Rückführstrecke zumindest abschnittsweise von einer Bahn gebildet sein, in welcher die Transportmover gegenüber ihrer Orientierung auf einer Normalstrecke anders, insbesondere auf dem Kopf stehend, orientiert sind. Hierbei werden die Transportmover z.B. gezielt mit nach unten weisenden Auflageflächen der Träger bewegt. In Abhängigkeit von den baulichen Gegebenheiten kann eine derartige Rückführung besonders Platz sparend sein. Außerdem ist eine derartige Rückführung vorteilhaft, wenn die Transportmover, insbesondere deren Träger, auf ihrem Rückweg gereinigt werden können, indem beispielsweise die Rückführstrecke derart geführt wird, dass die Transportmover mit ihren Trägern ein Reinigungsbad durchlaufen.

Das erfindungsgemäße Transportsystem ermöglicht es, die Geschwindigkeit der Transportmover sowie deren Abstand untereinander grundsätzlich beliebig zu verändern. Dies kann bei einer Rückführung der Transportmover zu einer Vereinfachung dahingehend ausgenutzt werden, dass für die Rückführung der Transportmover beispielsweise eine höhere Geschwindigkeit und geringere Abstände zwischen aufeinanderfolgenden Transportmovern zugelassen werden.

Dementsprechend ist bei einer Ausführungsform der Erfindung vorgesehen, dass mehrere Normalstrecken vorgesehen sind und die Anzahl der Normalstrecken kleiner ist als die Anzahl der Rückführstrecken. Vorzugsweise ist für eine Mehrzahl von Normalstrecken nur genau eine Rückführstrecke vorgesehen. Eine solche Rückführstrecke kann beispielsweise in einer Ebene unterhalb der von mehreren Normalstrecken definierten Transportebene verlaufen. Hierdurch braucht für die Rückführung der Transportmover die durch die Normalstrecken vorgegebene Breite der Anlage nicht überschritten zu werden und wird unterhalb der Normalstrecken nur vergleichsweise wenig Platz für die Rückführung beansprucht.

Gemäß einem weiteren Ausführungsbeispiel der Erfindung ist vorgesehen, dass zumindest eine Rückführstrecke als Pufferstrecke ausgebildet ist oder zumindest eine Pufferstrecke umfasst.

Eine Pufferung von Portionen ist auf dem hier in Rede stehenden Gebiet des Aufschneidens von Lebensmittelprodukten insbesondere dann erforderlich, wenn - wie in der Praxis häufig der Fall - pro Zeiteinheit mittels einer oder mehrerer Aufschneidevorrichtungen mehr Portionen erzeugt werden als am Ende der Anlage insbesondere mittels einer Verpackungsmaschine abgeführt werden. Wenn eine oder mehrere ohnehin vorhandene Rückführstrecken für die Transportmover für eine Pufferung genutzt werden, dann wird hierdurch ein vorteilhafter Synergieeffekt erzielt.

Generell kann erfindungsgemäß vorgesehen sein, dass in zumindest eine Rückführstrecke eine Zusatzfunktion integriert ist, insbesondere eine Puffer-, Reinigungs- und/oder Wiederherstellfunktion. Eine Wiederherstellfunktion kann beispielsweise darin bestehen, dass insbesondere zum Zwecke der Reinigung an einer Stelle des Bahnsystems die Träger vorübergehend von ihrem jeweiligen Transportmover getrennt und, beispielsweise im Anschluss an einen Reinigungsvorgang, an einer anderen Stelle des Bahnsystems oder an der gleichen Stelle wieder an dem betreffenden Transportmover oder an einem anderen Transportmover angebracht und somit weiterverwendet bzw. wiederverwertet werden. Eine derartige Wiederherstellfunktion kann erfindungsgemäß in eine Rückführstrecke des Bahnsystems integriert werden.

In einem weiteren Ausführungsbeispiel der Erfindung kann das Bahnsystem wenigstens einen eine Schraubenlinie um eine zumindest im Wesentlichen vertikal verlaufende Mittelachse beschreibenden Bahnabschnitt umfassen. Mittels einer derartigen Schrauben- oder Spiralbahn können die Transportmover - wie Autos in einem Parkhaus - zwischen unterschiedlichen Ebenen wechseln.

Derartige Streckenführungen sind mit Bandfördersystemen nicht möglich, da mit Bandsystemen naturgemäß nur geradlinige Streckenabschnitte dargestellt werden können.

Eine andere Art der Streckenführung, die mit Förderbandsystemen nicht darstellbar ist, besteht darin, gemäß einem weiteren Ausführungsbeispiel der Erfindung im Bahnsystem wenigstens einen einmal oder mehrmals aufeinanderfolgend verwundenen Bahnabschnitt vorzusehen, wobei insbesondere jede Verwindung zumindest näherungsweise 90° umfasst. Eine derartige Verwindung kann als ein kontinuierlicher Übergangsbahnabschnitt zwischen einem Bahnabschnitt vom C-Typ und einem Bahnabschnitt vom U-Typ genutzt werden. Auf derartige Bahnabschnitte unterschiedlichen Typs wird nachstehend noch näher eingegangen.

Wie vorstehend bereits erwähnt, kann es in bestimmten Anwendungen vorteilhaft sein, die Transportmover in unterschiedlichen Ebenen zu bewegen bzw. zwischen unterschiedlichen Ebenen zu wechseln. Insbesondere, aber nicht ausschließlich, für einen derartigen Übergang zwischen unterschiedlichen Ebenen kann das Bahnsystem wenigstens einen zumindest bereichsweise gekrümmten Bahnabschnitt umfassen, wobei die Krümmung in einer zumindest im Wesentlichen vertikalen Ebene verläuft. Ein derartiger Bahnabschnitt kann - in einer Seitenansicht - näherungsweise eine S-form oder eine Z-Form mit sanften gerundeten Übergängen zwischen den geradlinigen Abschnitten aufweisen.

Gemäß einem weiteren Ausführungsbeispiel der Erfindung kann das Bahnsystem wenigstens einen Bahnabschnitt umfassen, der als Rampe oder Brücke oder als Teil einer Rampe oder Brücke ausgebildet ist. Auch ein derartiger Bahnabschnitt definiert eine Bahn für die Transportmover, die insbesondere in einer zumindest im Wesentlichen vertikalen Ebene verläuft.

Ein prinzipieller Vorteil der Erfindung besteht darin, dass für die Transportmover grundsätzlich beliebige Bahnen im dreidimensionalen Raum vorgegeben werden können, d.h. gewissermaßen wie bei einer Achterbahn können zwei gegebene Punkte im Raum durch eine grundsätzlich beliebig verlaufende, von der Bahn definierte Linie überwunden werden, entlang welcher die Transportmover während des Betriebs bewegt werden. Derartige beliebige Trajektorien können mit Förderbandsystemen ersichtlich nicht dargestellt werden.

Dementsprechend ist gemäß einem Ausführungsbeispiel der Erfindung vorgesehen, dass das Bahnsystem wenigstens einen Bahnabschnitt umfasst, der zumindest eine eindimensionale Bahn mit einem ersten Punkt und einem zweiten Punkt umfasst, wobei die Bahn zwischen dem ersten Punkt und dem zweiten Punkt eine Trajektorie oder eine Linie im Raum beschreibt, die nicht ausschließlich geradlinig verläuft und die nicht in einer einzigen Ebene liegt.

Vorstehend wurde bereits erwähnt, dass insbesondere im Rahmen eines Mehrspurbetriebs dem Vorsehen von Verzweigungen im Bahnsystem eine wichtige Rolle zukommen kann.

Dementsprechend kann gemäß einem Ausführungsbeispiel der Erfindung vorgesehen sein, dass das Bahnsystem wenigstens eine Verzweigung aufweist, an der über einen oder mehrere eingangsseitig ankommende Bahnabschnitte einlaufende Transportmover jeweils in einem oder mehreren ausgangsseitig abgehenden Bahnabschnitten weiterlaufen können.

Die Verzweigung kann als Weiche mit beweglicher Stellmechanik ausgebildet sein.

Alternativ kann vorgesehen sein, dass die Verzweigung keine beweglichen Teile aufweist und die Steuereinrichtung dazu ausgebildet ist, den jeweiligen Weg zwischen den Bahnabschnitten durch Ansteuern eines Antriebs für den betreffenden Transportmover vorzugeben.

In einem Ausführungsbeispiel können die Bahnabschnitte der Verzweigung in einer gemeinsamen, zumindest im Wesentlichen vertikal verlaufenden Ebene liegen. Dabei kann insbesondere vorgesehen sein, dass die Bahnabschnitte C-förmig ausgebildet und seitlich offen sind.

In einem Ausführungsbeispiel können an der Verzweigung die Bahnabschnitte zumindest im Wesentlichen unmittelbar ineinander übergehen.

An der Verzweigung kann zumindest ein möglicher Weg für die Transportmover wenigstens abschnittsweise gekrümmt verlaufen.

Es kann vorgesehen sein, dass an der Verzweigung zwischen den Bahnabschnitten sich zumindest ein, insbesondere gerader, intermediärer Bahnabschnitt befindet.

In einem möglichen Ausführungsbeispiel umfasst an der Verzweigung jeder mögliche Weg für die Transportmover ausschließlich geradlinige Abschnitte.

In einem Ausführungsbeispiel der Erfindung ist vorgesehen, dass an der Verzweigung jeder mögliche Weg für die Transportmover wenigstens zwei Richtungswechsel von jeweils 90° beinhaltet.

Gemäß einem Ausführungsbeispiel kann vorgesehen sein, dass an der Verzweigung die Bahnabschnitte relativ zueinander feststehend sind.

In einer weiteren Ausführungsform der Erfindung ist vorgesehen, dass an der Verzweigung zur Auswahl eines jeweiligen Weges für die Transportmover zumindest ein Bahnabschnitt, insbesondere wenigstens ein intermediärer Bahnabschnitt, relativ zu den anderen Bahnabschnitten bewegbar, insbesondere um eine Achse verdrehbar, ist, die senkrecht zu einer Ebene verläuft, in welcher die Bahnabschnitte der Verzweigung liegen. Eine derartige Verzweigung kann also nach Art einer vor allem früher bei Eisenbahnen bekannten Drehscheibe von Lokschuppen ausgebildet sein.

Gemäß einem Ausführungsbeispiel der Erfindung kann das Bahnsystem wenigstens einen Bahnabschnitt umfassen, der als Ganzes verstellbar ist. Ein solches Verstellen kann insbesondere derart erfolgen, dass die jeweilige Bahn zumindest vorübergehend unterbrochen wird.

Mehrere, insbesondere parallel zueinander verlaufende, Bahnabschnitte können unabhängig voneinander oder gemeinsam verstellbar sein.

Die Verstellbewegung der Bahnabschnitte kann eine lineare Translationsbewegung umfassen oder ausschließlich eine lineare Translationsbewegung sein.

Der Bahnabschnitt kann in einer zumindest näherungsweise horizontal verlaufenden Ebene quer zur Transportrichtung verstellbar sein.

Alternativ oder zusätzlich kann der Bahnabschnitt in zumindest näherungsweise vertikaler Richtung verstellbar sein.

In einem Ausführungsbeispiel der Erfindung kann der Bahnabschnitt unter Beibehaltung seiner Orientierung im Raum verstellbar sein.

Die Verstellbewegung des Bahnabschnitts kann eine Schwenkbewegung umfassen oder ausschließlich eine Schwenkbewegung sein. Das Verschwenken kann insbesondere um eine zumindest im Wesentlichen horizontale, quer zur Transportrichtung verlaufende Schwenkachse erfolgen.

In einer Ausführungsform der Erfindung kann zumindest ein beweglicher Bahnabschnitt mit einem verstellbaren Bahnabschnitt gekoppelt und von dem verstellbaren Bahnabschnitt mitnehmbar sein.

In einem weiteren Ausführungsbeispiel der Erfindung ist der verstellbare Bahnabschnitt mit einem vorgeordneten oder nachgeordneten Bahnabschnitt gelenkig verbunden.

Ein besonderer Aspekt der Erfindung besteht darin, das Bahnsystem nicht ausschließlich zum Bewegen von Portionen tragenden Transportmovern einzusetzen, sondern gleichzeitig dazu zu nutzen, bestimmte Zusatzfunktionen auszuführen, um den Transport der Portionen in vielfacher Hinsicht zu optimieren.

Dementsprechend ist gemäß einem Ausführungsbeispiel der Erfindung vorgesehen, dass wenigstens ein in dem Bahnsystem bewegbarer Funktionsmover vorgesehen ist, der einen mit dem Bahnsystem zusammenwirkenden Läufer und zumindest ein Funktionsmittel umfasst, das eine von der Transportfunktion der Transportmover verschiedene Funktion bereitstellt.

Was das grundsätzliche Bewegungsprinzip des oder der Funktionsmover und insbesondere das Antriebsprinzip anbetrifft, so ist insbesondere vorgesehen, dass die Funktionsmover den Transportmovern entsprechen. Insbesondere können die Läufer der Transportmover und der Funktionsmover zumindest im Wesentlichen identisch ausgeführt sein. Wenn - wie vorstehend erläutert - ein von den Movern und dem Bahnsystem gemeinsam gebildeter Linearmotor als Antrieb verwendet wird, insbesondere ein linearer Synchronmotor (LSM-Antrieb), dann ist auch bei den Funktionsmovern vorgesehen, dass deren Läufer einen oder mehrere Permanentmagnete umfasst.

Hinsichtlich des Bewegungs- bzw. Antriebsprinzips und somit hinsichtlich des Zusammenwirkens der Mover mit dem Bahnsystem gelten somit alle vorstehenden und nachfolgenden Ausführungen, die in Bezug auf die Transportmover gemacht wurden, auch für die Funktionsmover, und umgekehrt. Dies gilt auch für alle anderen Ausführungen zu Transportmovern bzw. Funktionsmovern, sofern dies nicht zu Widersprüchen führt. Es wird daher im Rahmen dieser Offenbarung auch einfach von "Movern" gesprochen, und zwar insbesondere dann, wenn es auf die Unterscheidung zwischen Transportmovern einerseits und wie auch immer gearteten Funktionsmovern andererseits nicht ankommt. Auch kann ein Transportmover zumindest zeitweise als ein Funktionsmover wirksam sein und eine oder mehrere nicht ausschließlich dem Transport einer oder mehrerer Portionen dienende Funktionen durchführen, und ein Funktionsmover kann zumindest zeitweise für den Transport einer oder mehrerer Portionen dienen und somit ein Transportmover sein.

Die erfindungsgemäß grundsätzlich gegebene Individualisierung der einzelnen Mover im Bahnsystem kann in vorteilhafter Weise dazu ausgenutzt werden, nicht nur Transportmover, sondern zusätzlich Funktionsmover vorzusehen, und zwar grundsätzlich an beliebigen Stellen im Bahnsystem und insbesondere in den gleichen Bahnen, in denen auch die Transportmover bewegt werden.

Dementsprechend zeichnet sich ein Ausführungsbeispiel der Erfindung dadurch aus, dass der oder jeder Funktionsmover in den gleichen Bahnen wie die Transportmover bewegbar ist.

Insbesondere ist der oder jeder Funktionsmover während des Betriebs gleichzeitig mit den Transportmovern bewegbar.

Der erfindungsgemäß mögliche gemeinsame Betrieb unterschiedlich ausgebildeter Mover im Bahnsystem gestattet es, mehre im Bahnsystem angeordnete und insbesondere in einer Bahn unmittelbar aufeinanderfolgende Mover zusammenwirken zu lassen.

Dementsprechend ist gemäß einem Ausführungsbeispiel der Erfindung vorgesehen, dass zumindest einem Transportmover wenigstens ein Funktionsmover zugeordnet ist, wobei insbesondere der Funktionsmover unmittelbar dem Transportmover oder der Transportmover unmittelbar dem Funktionsmover folgt.

Gemäß einem Ausführungsbeispiel sind mittels der Steuereinrichtung der Transportmover und der Funktionsmover koordiniert bewegbar.

Insbesondere ist vorgesehen, dass der Funktionsmover dazu ausgebildet ist, mit dem Transportmover, insbesondere mit dessen Träger, zusammenzuwirken. Dieses Zusammenwirken kann beispielsweise über eine bevorzugt mechanische Koppeleinrichtung erfolgen, z.B. eine Koppelstange.

Eine mögliche und für die Praxis besonders vorteilhafte Art und Weise einer derartigen Kooperation zwischen Movern kann darin bestehen, einen Funktionsmover dazu einzusetzen, den Träger eines Transportmovers gezielt zu drehen, um auf diese Weise eine auf dem Träger aufliegende Portion in einer gewünschten Weise auszurichten, so dass die Portion auf dem Transportmover und somit bezüglich der Bahn eine bestimmte Orientierung erhält, die beispielsweise für eine weitere Verarbeitung bzw. Handhabung von Vorteil ist. In herkömmlichen Transportsystemen, die mit Förderbändern arbeiten, wird im Stand der Technik ein teilweise extrem hoher Aufwand betrieben, um Portionen durch Verdrehen auszurichten. Durch einen koordinierten Betrieb einander zugeordneter Mover kann in dem erfindungsgemäßen Bahnsystem eine Drehausrichtung von Portionen auf vergleichsweise einfache und dennoch präzise und zuverlässige Weise erfolgen.

Dementsprechend ist gemäß einem Ausführungsbeispiel der Erfindung vorgesehen, dass zumindest ein Funktionsmover dazu ausgebildet ist, den Träger eines Transportmovers relativ zum Läufer zu drehen, insbesondere um eine senkrecht zu einer für die Portion vorgesehene Auflagefläche des Trägers verlaufende Achse.

Ein Einwirken auf einen Transportmover mittels eines oder mehrerer Funktionsmover kann durch eine gezielte Relativbewegung zwischen Transportmover und Funktionsmover bzw. Funktionsmovern erfolgen.

So ist gemäß einem Ausführungsbeispiel der Erfindung vorgesehen, dass mittels der Steuereinrichtung der Transportmover und zumindest ein Funktionsmover während ihrer gemeinsamen Bewegung zusätzlich relativ zueinander bewegbar sind, wobei eine Einrichtung vorgesehen ist, mittels welcher diese Relativbewegung in eine Beaufschlagung des Transportmovers, insbesondere dessen Trägers, umsetzbar ist.

Wenn sich beispielsweise ein Transportmover und ein nachfolgender Funktionsmover mit stets gleicher Geschwindigkeit und somit gleichem Abstand zueinander entlang einer Bahn bewegen, dann erfolgt keine Beaufschlagung des Transportmovers bzw. dessen Trägers durch den Funktionsmover. Beispielsweise wird der Träger des Transportmovers hierbei nicht verdreht. Um den Träger zu verdrehen, wird der Funktionsmover relativ zum Transportmover beschleunigt oder abgebremst. Hierdurch verändert sich der Abstand zwischen Transportmover und Funktionsmover, und diese Abstandsveränderung kann beispielsweise mittels einer Koppelstange zwischen Funktionsmover und Träger des Transportmovers in eine Drehbewegung des Trägers umgesetzt werden.

Allgemein ausgedrückt zeichnet sich ein Aspekt der Erfindung also dadurch aus, dass eine gezielt herbeigeführte Relativbewegung und damit Abstandsveränderung zwischen zwei aufeinanderfolgend in einer Bahn bewegten Movern umgesetzt wird in eine Aktuatorbewegung, mit der eine grundsätzlich beliebige Zusatzfunktion an einem oder beiden Movern ausgeführt werden kann.

In Abhängigkeit von der jeweiligen Anwendung und den jeweiligen Gegebenheiten kann es vorteilhaft sein, wenn der oder die Funktionsmover nicht in den gleichen Bahnen bewegt werden wie die Transportmover, sondern wenn für die Funktionsmover eine oder mehrere separate, im Folgenden auch als Hilfsbahnen bezeichnete Bahnen vorgesehen sind. Die Funktionsmover laufen dann beispielsweise neben den Transportmovern her, was an dem vorstehend erwähnten allgemeinen Grundprinzip aber nichts ändert, wonach durch eine gezielte Beschleunigung oder Verzögerung eines Funktionsmovers eine Abstandsänderung herbeigefügt und diese in eine Aktuatorbewegung beispielsweise zum Verdrehen des Trägers des Transportmovers umgesetzt wird.

Ein derartiges Hilfsbahnkonzept kann beispielsweise dann vorteilhaft sein, wenn es nicht erwünscht ist, dass sich Funktionsmover zwischen Transportmovern befinden, d.h. wenn ausschließlich Transportmover unmittelbar aufeinanderfolgend in einer Bahn vorhanden sein sollen und der Zusatzaufwand zum eventuelle erforderlichen Ausschleusen von zwischen aufeinander folgenden Transportmovern befindlichen Funktionsmovern nicht betrieben werden soll.

Dementsprechend sieht ein Ausführungsbeispiel der Erfindung vor, dass in zumindest einem Streckenabschnitt des Bahnsystems eine Bahn für die Transportmover und wenigstens eine der Bahn zugeordnete, insbesondere parallel zu der Bahn verlaufende Hilfsbahn vorgesehen ist, in der zumindest ein Funktionsmover bewegbar ist.

Es kann vorgesehen sein, dass auf beiden Seiten der Bahn jeweils wenigstens eine Hilfsbahn verläuft und zumindest einem Transportmover wenigstens zwei Funktionsmover zuordenbar sind, von denen der eine in der einen Hilfsbahn und der andere in der anderen Hilfsbahn bewegbar ist.

Erfindungsgemäß sind die Zusatzfunktionen, die mit Funktionsmovern durchgeführt werden können, nicht auf ein Zusammenwirken mit Transportmovern beschränkt. Vielmehr können die Funktionsmover auch andere Aufgaben übernehmen.

So ist gemäß einem Ausführungsbeispiel der Erfindung vorgesehen, dass zumindest ein Funktionsmover als Reinigungsmover zum Reinigen des Bahnsystems ausgebildet ist. Ein oder mehrere Reinigungsmover können zu bestimmten Zeiten oder permanent gemeinsam mit den Transportmovern im Bahnsystem bewegt werden.

Gemäß einem weiteren Ausführungsbeispiel der Erfindung ist vorgesehen, dass zumindest ein Funktionsmover als Kontrollmover zum Kontrollieren des Bahnsystems ausgebildet ist, insbesondere in Bezug auf vorhandene oder potentielle Störungen wie beispielsweise Verschmutzungen oder Verschleiß.

Die Identifizierbarkeit und Lokalisierbarkeit der einzelnen Mover mittels der Steuereinrichtung ermöglicht es dieser, zwischen den einzelnen Movern zu unterscheiden. Wenn sich also unter den Portionen tragenden Transportmovern zusätzliche Mover befinden, die keine Transportfunktion durchführen, sondern zusätzliche Aufgaben erfüllen, dann stört dies den eigentlichen Transportbetrieb nicht.

Gemäß einem weiteren Ausführungsbeispiel der Erfindung ist zumindest ein Funktionsmover als Liftmover ausgebildet, dem ein zumindest im Wesentlichen vertikal verlaufender Bahnabschnitt zugeordnet ist, in welchem der Liftmover bewegbar ist. Derartige Liftmover können beispielsweise dazu eingesetzt werden, Transportmover zwischen unterschiedlichen horizontalen Ebenen des Bahnsystems zu wechseln. Hierzu können an einer Übergabestelle die Funktionsmover in geeigneter Weise mit einem oder mehreren Liftmovern koppelbar sein. Alternativ ist es möglich, eine Übergabestelle derart auszugestalten, dass ein oder mehrere Liftmover nicht einen jeweiligen Transportmover als Ganzes übernehmen, sondern nur dessen Träger. Auf diese Weise können die Liftmover z.B. einen Vertikalpuffer für Portionen bilden.

Gemäß einem weiteren Ausführungsbeispiel der Erfindung kann vorgesehen sein, dass zumindest ein Funktionsmover als Dreh- oder Wendemover ausgebildet ist, dem eine offene oder geschlossene gekrümmte, insbesondere kreisförmige, Bahn zugeordnet ist, in welcher der Dreh- oder Wendemover bewegbar ist. Nachstehend wird ein derartiger Mover auch einfach als Drehmover oder Wendemover bezeichnet.

Ein solches Drehmover-Prinzip kann insbesondere zum Wenden von Portionen eingesetzt werden. Beispielsweise zwei diametral einander gegenüberliegend in einer kreisförmigen Bahn angeordnete Drehmover können den Träger eines einlaufenden Transportmovers übernehmen und anschließend um 180° in der kreisförmigen Bahn bewegt werden. Während des Drehvorgangs kann die Portion zwischen ihrem ursprünglichen, vom einlaufenden Transportmover stammenden Träger und einem zwischen den beiden Drehmovern bereitgestellten Gegenträger angeordnet sein, so dass die Portion nach der 180°-Drehung, also nach dem Wendevorgang, auf dem Gegenträger zu liegen kommt, welcher im Anschluss an den Wendevorgang an einen wartenden Transportmover übergeben wird, mit welchem die auf diese Weise gewendete Portion weitertransportiert wird. Eine solche Dreh- bzw. Wendestation kann mit geeigneter Vertikalbewegbarkeit ausgestattet sein, um die Portion zwischen Träger und Gegenträger zu halten und die jeweilige Auflageebene an das Niveau des einlaufenden Transportmovers bzw. des zur Übernahme des Trägers bzw. Gegenträgers wartenden Transportmovers anzupassen.

Das erfindungsgemäße Individualmover-Prinzip erweist sich hier als besonders vorteilhaft, da ein Wenden von Portionen mittels herkömmlicher Förderbandtechnik zwar grundsätzlich möglich ist, aber einen extrem hohen Aufwand erfordert.

Gemäß einem weiteren Ausführungsbeispiel der Erfindung kann zumindest ein Funktionsmover als Wartungs- und/oder Inspektionsmover ausgebildet sein, der mit zumindest einer Detektionseinrichtung zum Erkennen von Störungen am Bahnsystem versehen ist. Bei solchen Störungen kann es sich insbesondere um Verschmutzungen oder Beschädigungen am Bahnsystem handeln. Bevorzugt ist die Detektionseinrichtung zur Kommunikation mit der Steuereinrichtung ausgebildet.

Das erfindungsgemäße Prinzip, Mover in einem Bahnsystem individuell zu bewegen, ermöglicht es grundsätzlich, die Orientierung der Mover im Raum grundsätzlich beliebig zu wählen, d.h. die Mover müssen nicht in dem Sinne aufrecht stehend in einer jeweiligen Bahn bewegt werden, dass der zwischen dem mit dem Bahnsystem zusammenwirkenden Läufer und dem eine Portion tragenden Träger gelegene Halter nach oben aus der Bahn austritt. Ein Betrieb mit aufrecht stehend bewegten Movern liegt insbesondere dann vor, wenn die Bahn, in der die Mover bewegt werden, eine U-Form aufweist und nach oben offen ist. Ein derartiger Bahn-Typ kann insbesondere dann eingesetzt werden, wenn die Mover in einer zumindest im Wesentlichen horizontalen Ebene bewegt werden soll.

Dementsprechend ist gemäß einem Ausführungsbeispiel vorgesehen, dass zumindest ein, insbesondere horizontal oder zur Horizontalen geneigt verlaufender, Bahnabschnitt des Bahnsystems eine Bahn mit U-Form umfasst, die nach oben oder unten offen ist.

Eine nach unten offene Bahn ermöglicht eine Überkopf-Orientierung der in der Bahn bewegten Mover, was - wie vorstehend bereits erwähnt - beispielsweise zum Reinigen der Träger der Transportmover genutzt werden kann, indem die auf dem Kopf stehenden Transportmover mit ihren Trägern durch ein Reinigungsbad bewegt werden.

Insbesondere dann, wenn Moverbewegungen mit einer vertikalen Komponente erfolgen sollen, kann es von Vorteil sein, wenn Bahnen eingesetzt werden, die nicht nach oben oder nach unten offen sind, sondern die eine C-Form aufweisen und seitlich offen sind.

Dementsprechend ist in einem Ausführungsbeispiel vorgesehen, dass zumindest ein, insbesondere vertikal oder zur Horizontalen geneigt verlaufender, Bahnabschnitt des Bahnsystems eine Bahn mit C-Form umfasst, die seitlich offen ist.

In einer Weiterbildung umfasst zumindest ein, insbesondere vertikal oder zur Horizontalen geneigt verlaufender, Bahnabschnitt des Bahnsystems zwei parallel verlaufende Bahnen, die mit ihren offenen Seiten einander zugewandt sind. Eine derartige Doppel- oder Parallelbahn kann beispielsweise als Vertikalpuffer oder als Lift für Transportmover oder deren Träger eingesetzt werden, indem beispielsweise zwei zur Übernahme eines Transportmovers oder eines Trägers ausgebildete Liftmover in diesem Doppel- oder Parallelbahnabschnitt durch koordiniertes Bewegen zusammenwirken.

Die Art und Weise, wie bei einem jeweiligen Transportmover dessen Träger am mit dem jeweiligen Bahnsystem zusammenwirkenden Läufer gehalten wird, kann erfindungsgemäß vom jeweiligen Bahntyp abhängig gemacht werden. Der Halter kann sich geradlinig zwischen Läufer und Träger erstrecken oder abgewinkelt sein.

So ist gemäß einem Ausführungsbeispiel vorgesehen, dass zumindest ein Transportmover, der insbesondere für eine U-förmige Bahn ausgebildet ist, einen Halter umfasst, der sich zwischen Läufer und Träger zumindest senkrecht zu einer vom Träger definierten Auflageebene für die Portion erstreckt.

In einer alternativen Ausgestaltung kann zumindest ein Transportmover, der insbesondere für eine C-förmige Bahn ausgebildet ist, einen zumindest einmal abgewinkelten Halter umfassen.

Die Größe und/oder die Positionierung des Trägers relativ zum Läufer können in Abhängigkeit von der jeweiligen Anwendung und vom jeweiligen Bahntyp gewählt werden.

Gemäß einem Ausführungsbeispiel besitzt bei zumindest einem Transportmover der Träger zumindest quer zur Transportrichtung eine größere Abmessung als der Läufer.

In einem weiteren Ausführungsbeispiel ist bei zumindest einem Transportmover, der insbesondere für eine U-förmige Bahn ausgebildet ist, der Träger quer zur Transportrichtung zumindest im Wesentlichen mittig bezüglich des Läufers angeordnet.

Gemäß einem weiteren Ausführungsbeispiel ist bei zumindest einem Transportmover, der insbesondere für eine C-förmige Bahn ausgebildet ist, der Träger quer zur Transportrichtung außermittig bezüglich des Läufers, insbesondere wenigstens zur Hälfte und bevorzugt zumindest im Wesentlichen vollständig seitlich neben dem Läufer oder der Bahn, angeordnet.

In Abhängigkeit von der jeweiligen Anwendung und den jeweiligen Gegebenheiten kann es von Vorteil sein, wenn in dem Bahnsystem nicht ausschließlich ein und derselbe Bahntyp vorhanden ist, sondern unterschiedliche Bahntypen zum Einsatz kommen. So können beispielsweise bestimmte Strecken U-förmige Bahnen oder Bahnabschnitte umfassen, während andere Strecken mit Bahnen oder Bahnabschnitten vom C-Typ versehen sind oder eine Kombination von Bahntypen aufweisen.

Um einen zuverlässigen und insbesondere schonenden Transport von Portionen über einen Wechsel des Bahntyps hinweg sicherzustellen, kann gemäß einer Variante vorgesehen sein, dass die Portionen oder die Träger an einer Übergabestelle von einem Mover, der für einen Bahntyp ausgebildet ist, an einen anderen Mover übergeben werden, der für einen anderen Bahntyp ausgebildet ist. Eine derartige Portionsübergabe ist allerdings mit einem gewissen Aufwand verbunden.

Dementsprechend ist gemäß einer anderen Variante der Erfindung vorgesehen, dass Mover eingesetzt werden, die mit unterschiedlichen Bahntypen kompatibel sind und insbesondere hierzu mit speziell ausgebildeten Läufern versehen sind.

Dementsprechend ist gemäß einem Ausführungsbeispiel vorgesehen, dass zumindest ein Transportmover, insbesondere dessen Läufer, mit unterschiedlichen Bahn-Typen, insbesondere sowohl mit einer U-förmigen Bahn als auch mit einer C-förmigen Bahn, und/oder mit unterschiedlich im Raum orientierten, insbesondere paarweise senkrecht zueinander verlaufenden, Bahnabschnitten kompatibel ist.

Zur Veranschaulichung dieses Konzepts kann man sich einen quaderförmigen Läufer vorstellen, dessen sechs Seitenflächen jeweils zumindest ein wie auch immer geartetes Führungsmittel aufweisen, beispielsweise einen Schlitz oder eine Nut, in die eine Führungsschiene des Bahnsystems eingreift. Dabei gehören jeweils zwei einander gegenüberliegende Seitenflächen insofern zusammen, als diese beiden Seitenflächen gemeinsam für eine Führung des Läufers an einem jeweiligen Bahntyp sorgen. Jedes der drei Paare jeweils einander gegenüberliegender Seitenflächen ist dann für einen Bahn-Typ bzw. für eine Bahn-Orientierung vorgesehen. So kommen beispielsweise die linke und die rechte Seitenfläche des Läufers zum Einsatz, wenn der Läufer entlang einer horizontalen Bahn vom U-Typ bewegt wird. Die obere und die untere Seitenfläche des Läufers können mit einem ebenfalls horizontal oder auch vertikal verlaufenden Bahnabschnitt vom C-Typ zusammenwirken. Die vordere und die hintere Seitenfläche des Läufers können z.B. dann zum Einsatz kommen, wenn der Läufer mit einem vertikal verlaufenden Bahnabschnitt zusammenwirken soll.

In einer Weiterbildung kann jede Seitenfläche des Läufers jeweils zwei senkrecht zueinander orientierte Führungsmittel aufweisen, beispielsweise jeweils einen horizontal orientierten Schlitz und einen vertikal orientierten Schlitz, so dass jede Seitenfläche sowohl mit einer horizontal verlaufenden Führungsschiene eines Bahnabschnitts als auch mit einer vertikal verlaufenden Führungsschiene eines Bahnabschnitts zusammenwirken kann. Ein derartiger Läufer und somit der betreffende Mover insgesamt kann auf einfache Weise zwischen Bahnabschnitten wechseln, die sich beliebig hinsichtlich ihres Typs als auch hinsichtlich ihrer Orientierung im Raum voneinander unterscheiden.

Ein Aspekt der Erfindung besteht folglich allgemein darin, dass zumindest ein Transportmover einen Hybridläufer aufweist, der wenigstens zwei Läuferabschnitte oder Läuferbereiche umfasst, von denen der eine mit einem Bahn-Typ und/oder mit einer Bahn-Orientierung kompatibel ist und der andere mit einem anderen Bahn-Typ und/oder mit einer anderen Bahn-Orientierung kompatibel ist.

Mit einem derartigen Hybridläufer ausgestattete Mover können zwischen unterschiedlich ausgebildeten Bahnabschnitten wechseln.

So ist gemäß einem Ausführungsbeispiel der Erfindung vorgesehen, dass zumindest ein Transportmover während des Betriebs zwischen aufeinanderfolgenden Bahnabschnitten unterschiedlichen Typs und/oder unterschiedlicher Orientierung im Raum wechseln kann.

Prinzipiell ist es möglich, dass ein solcher Wechsel unter Ausnutzung der Bewegungsenergie des Transportmovers erfolgen kann. So können beispielsweise aufeinanderfolgende Bahnabschnitte unterschiedlichen Typs und/oder unterschiedlicher Orientierung im Raum mit einem gewissen Abstand voneinander angeordnet sein, wobei diese Lücke von dem sich aufgrund seiner Trägheit weiterbewegenden Läufer problemlos überwunden werden kann. Auch externe Hilfsmittel, welche die Mover über eine bestimmte, insbesondere relativ kurze, Strecke weiterbewegen können, sind erfindungsgemäß möglich.

Alternativ ist gemäß einem Ausführungsbeispiel vorgesehen, dass das Bahnsystem wenigstens einen Übergangsbereich aufweist, an welchem aufeinanderfolgende Bahnabschnitte unterschiedlichen Typs und/oder unterschiedlicher Orientierung im Raum einander zumindest teilweise überlappen, parallel vorhanden sind, ineinander greifen oder ineinander übergehen, insbesondere mit ihren Führungen für die bevorzugt mit Hybridläufern versehenen Transportmover.

Die vorstehend erläuterten möglichen Ausgestaltungen der Erfindung gelten nicht nur für Transportmover, sondern können grundsätzlich für alle in einem jeweiligen System vorhandene Mover vorgesehen werden. So können beispielsweise auch Funktionsmover jeweils einen Hybridläufer aufweisen, der mit unterschiedlichen Bahnen kompatibel ist.

Gemäß einem weiteren Ausführungsbeispiel ist vorgesehen, dass zumindest ein Transportmover und ein in dem Bahnsystem bewegbarer Funktionsmover, insbesondere über ihre Läufer, miteinander lösbar koppelbar sind.

Dabei kann insbesondere vorgesehen sein, dass zumindest ein Funktionsmover in einem Bahntyp bewegbar ist, mit dem die Läufer der Transportmover nicht kompatibel sind.

Obwohl grundsätzlich vorgesehen sein kann, dass auch Funktionsmover zusätzlich zu einer von ihnen bereitgestellten Funktion dazu ausgebildet sind, einen oder mehrere Portionen zu transportieren, ist in einem Ausführungsbeispiel der Erfindung vorgesehen, dass die Funktionsmover keinen für Portionen geeigneten Träger aufweisen.

Ein Aspekt der Erfindung beruht auf der Erkenntnis, dass es auf dem hier in Rede stehenden technischen Gebiet, also für das Transportieren von Lebensmittelportionen, die eine oder mehrere unmittelbar zuvor durch Aufschneiden von Lebensmittelprodukten erzeugte Scheiben umfassen, von Vorteil ist, wenn bei dem Transportmover der Träger nicht zwingend in einer festen Orientierung relativ zum Läufer angeordnet sein muss und/oder wenn der Träger zumindest vorübergehend vom Läufer abgenommen werden kann. Hierdurch eröffnen sich vielfältige Handhabungsmöglichkeiten, wie sie beim Transportieren von Lebensmittelportionen vorteilhaft eingesetzt werden können.

So ist gemäß einem Ausführungsbeispiel der Erfindung vorgesehen, dass bei zumindest einem Transportmover die Orientierung des Trägers relativ zum Läufer veränderbar ist.

Es kann vorgesehen sein, dass bei zumindest einem Transportmover der Träger relativ zum Läufer verdrehbar ist. Die Drehachse kann insbesondere um eine senkrecht zu einer für die Portion vorgesehene Auflagefläche des Trägers verlaufen. Hierdurch ist es möglich, eine auf dem Träger befindliche Portion zu drehen. Portionen mehrerer Transportmover können beispielsweise untereinander ausgerichtet werden. Ferner ist es möglich, die Orientierung von Portionen auf eine nachgeordnete Verpackungsmaschine oder eine wie auch immer geartete andere Einrichtung abzustimmen, an welche die Portionen z.B. übergeben werden sollen. Beispielsweise können Verpackungen eine bestimmte Orientierung der Portionen erfordern, die bei Aufnahme der Portionen auf den Trägern der Transportmover noch nicht gegeben ist. So ist es beispielsweise möglich, die Portionen jeweils um 90° zu drehen, um eine Längsausrichtung in eine Querausrichtung der Portionen zu wechseln. Ferner ist es durch Drehen des Trägers möglich, eventuelle Fehlausrichtungen von Portionen zu korrigieren. Ein derartiges Drehen von Portionen ist mit herkömmlichen Förderbandsystemen allenfalls mit einem erheblichen Aufwand erzielbar.

Besonders vorteilhaft ist das Drehen des Trägers relativ zum Transportmover und somit die Möglichkeit, Portionen zu drehen, dann, wenn das Transportieren in einem Mehrspurbetrieb erfolgt, da beispielsweise für eine Formatsatzbildung eine untereinander ausgerichtete Orientierung von gemeinsam einen Formatsatz bildenden Portionen insbesondere im Hinblick auf eine Übergabe des Formatsatzes an nachgeordnete Einheiten wie beispielsweise eine Verpackungsmaschine von Vorteil ist.

Für bestimmte Anwendungen bzw. Funktionalitäten kann es wünschenswert sein, zumindest eine Bahn des Bahnsystems so zu führen, dass der in der Bahn bewegte Läufer seine Orientierung im Raum verändert, beispielsweise sich zur Seite, nach vorne oder nach hinten neigt. Damit derartige Bahnverläufe einen sicheren Transport der Portionen nicht beeinträchtigen, kann gemäß einem Ausführungsbeispiel vorgesehen sein, dass bei zumindest einem Transportmover der Träger eine Auflagefläche für die Portion aufweist und derart am Transportmover angebracht ist, dass die Auflagefläche unabhängig von der Orientierung des Läufers stets horizontal orientiert ist. Beispielsweise kann ein Pendelprinzip genutzt werden, indem z.B. der Träger und ein Gewicht auf unterschiedlichen Seiten einer Drehachse am Halter angebracht sind, wobei die Anordnung derart gewählt ist, dass unabhängig von der Orientierung des Läufers im Raum das Gewicht stets für eine vertikale Ausrichtung des Halters sorgt, so dass die Auflagefläche des am Halter angebrachten Trägers stets horizontal orientiert ist.

Ein weiterer Aspekt der Erfindung beruht auf der Erkenntnis, dass es vorteilhaft sein kann, wenn der Träger bzw. eine Auflagefläche des Trägers nicht permanent eine gleichbleibende zusammenhängende Fläche bildet. Beim Aufschneiden von Lebensmittelprodukten und beim anschließenden Abtransport der dabei erzeugten Portionen kommt es in der Praxis vor, dass bei einem Mehrspurbetrieb der Spurabstand während des Aufschneidens, also in der Aufschneidevorrichtung, kleiner ist als es von einer nachgeordneten Einrichtung, wie insbesondere einer Verpackungsmaschine, gefordert wird. Mit anderen Worten muss das Transportsystem dazu in der Lage sein, bei einem Mehrspurbetrieb einen kleineren Spurabstand in einen größeren Spurabstand zu übersetzen, oder umgekehrt, d.h. es ist wünschenswert, wenn das Transportsystem zumindest in einem Bereich zu einer Veränderung des Spurabstandes in der Lage ist.

Dies kann beispielsweise durch einen entsprechenden Verlauf von jeweils eine Spur bildenden, insbesondere parallel verlaufenden Bahnen erfolgen. Ein solches Konzept ist aber dann von Nachteil, wenn Flexibilität gefragt ist und das Transportsystem in der Lage sein soll, unterschiedliche Eingangs- und/oder Ausgangsspurabstände abbilden zu können.

Dementsprechend kann bei einem Ausführungsbeispiel der Erfindung vorgesehen sein, dass bei zumindest einem Transportmover der Träger eine Mehrzahl von Trägersegmenten umfasst, die relativ zueinander bewegbar sind. So kann beispielsweise jeweils ein Träger in einem Bereich mit einem vergleichsweise kleinen Spurabstand zwei Spuren bedienen und zwei nebeneinander liegende Portionen aufnehmen. Während der Bewegung des Transportmovers entlang dieser somit für zwei Spuren vorgesehenen Bahn können zwei den Träger bildende und jeweils eine Portion tragende Segmente des Trägers quer zur Transportrichtung auseinander bewegt werden, so dass sich der Abstand zwischen den beiden Portionen und somit der Spurabstand vergrößert.

Generell kann eine solche Funktionalität, also das Vorsehen einer Mehrzahl von relativ zueinander bewegbaren Trägersegmenten an einem Transportmover, nicht nur für eine Spurabstandsvergrößerung, sondern auch für andere Funktionalitäten genutzt werden.

Generell kann bei einer solchen Funktionalität vorgesehen sein, dass die Trägersegmente zwischen einer Grundstellung, in welcher die Trägersegmente gemeinsam eine, insbesondere zusammenhängende, Auflagefläche für wenigstens eine Portion bilden, und zumindest einer Funktionsstellung bewegbar sind, in welcher durch die Trägersegmente eine gegenüber der Grundstellung vergrößerte und/oder anders zum Läufer orientierte Auflagefläche oder mehrere voneinander getrennte Auflageflächen bereitgestellt sind.

Gemäß einem weiteren Ausführungsbeispiel der Erfindung ist bei zumindest einem Transportmover der Träger am Läufer oder am Halter lösbar angebracht.

Ein solches Konzept ermöglicht es, die Träger beispielsweise zu Reinigungszwecken abzunehmen. Ferner ist es möglich, einen Träger von einem Transportmover an einen anderen Transportmover zu übergeben. Portionen können so beispielsweise zwischen unterschiedlichen Bahntypen oder unterschiedlichen Teilsystemen des Bahnsystems wechseln.

Wenn die Träger beispielsweise zu Reinigungszwecken entfernt werden, können an einem anderen Bereich die Transportmover durch Wiederanbringen des Trägers am Läufer bzw. Halter wiederhergestellt werden. Abnahme und Anbringung können insbesondere automatisch an entsprechend ausgebildeten Stationen oder Funktionsbereichen des Bahnsystems erfolgen.

Gemäß einem Ausführungsbeispiel der Erfindung ist vorgesehen, dass zumindest ein Transportmover dazu ausgebildet ist, seinen Träger an einen in dem Bahnsystem bewegbaren Funktionsmover zu übergeben. Ein solcher Funktionsmover kann insofern identisch oder baugleich zu einem Transportmover ausgebildet sein, als er nach Übernahme eines Trägers zu einem Transportmover wird.

Dementsprechend ist in einem Ausführungsbeispiel vorgesehen, dass zumindest ein in dem Bahnsystem bewegbarer Funktionsmover dazu ausgebildet ist, einen Träger von einem Transportmover zu übernehmen.

Ferner kann vorgesehen sein, dass zumindest eine Transferstelle zur Übergabe und/oder Übernahme von Transportmovern oder deren Trägern an einem vertikal verlaufenden Bahnabschnitt vorgesehen ist. Vertikal verlaufende Bahnabschnitte können beispielsweise als Vertikalpuffer ausgebildet sein oder dazu dienen, Träger zwischen unterschiedlichen horizontalen Ebenen des Bahnsystems zu wechseln.

Ein Transfer von Trägern zwischen einzelnen Movern kann aber auch zu anderen Zwecken erfolgen. So ist es beispielsweise möglich, ein Wenden von Portionen dadurch vorzunehmen, dass ein Träger mit einer aufliegenden Portion von einem Dreh- oder Wendemover übernommen wird, die Portion beim Wenden an einen Träger übergeben und dieser nunmehr die Portion tragende Träger an einen ausgangsseitig wartenden Mover übergeben wird.

Dementsprechend kann erfindungsgemäß zumindest eine Transferstelle zur Übergabe und/oder Übernahme von Transportmovern oder deren Trägern an einem zum Wenden der Portionen ausgebildeten Funktionsbereich des Bahnsystems vorgesehen sein.

Generell kann erfindungsgemäß vorgesehen sein, dass zumindest ein Transportmover eine oder mehrere Zusatzfunktionen umfasst. Wenn diese Zusatzfunktion Energie benötigt, dann kann diese Energie beispielsweise vom Transportmover selbst oder über das Bahnsystem zur Verfügung gestellt werden.

Dementsprechend ist gemäß einem Ausführungsbeispiel der Erfindung vorgesehen, dass zumindest ein Transportmover eine Zusatzfunktion mit Energiebedarf besitzt, insbesondere zur Handhabung von Portionen und/oder zur Kommunikation mit dem Bahnsystem und/oder mit der Steuereinrichtung, wobei der Transportmover eine eigene Energieversorgung, insbesondere eine Batterie, einen wiederaufladbaren Akkumulator und/oder einen mechanischen Energiespeicher, umfasst und/oder über das Bahnsystem mit Energie versorgbar ist, insbesondere durch elektromagnetische Induktion.

Eine Energieversorgung eines Transportmovers von außen kann nicht nur über das Bahnsystem direkt erfolgen, sondern auch über einen oder mehrere zusätzliche Mover.

Allgemein sieht ein genereller Aspekt der Erfindung vor, dass in dem Bahnsystem wenigstens zwei grundsätzlich beliebig ausgestaltete und beliebige Funktionen erfüllende Mover zusammenwirken können. Das Zusammenwirken kann auf rein mechanischem Wege erfolgen. Es ist alternativ oder zusätzlich auch ein Zusammenwirken z.B. durch elektrische, magnetische oder elektromagnetische Wechselwirkung möglich. Dieser Aspekt der Erfindung zeichnet sich also dadurch aus, dass einerseits die Mover im Bahnsystem individuell bewegbar sind, andererseits aber die Möglichkeit besteht, dass wenigstens zwei Mover zumindest zeitweise kooperieren, um eine oder mehrere Zusatzfunktionen bereitzustellen, die jeweils über einen bloßen Transport von Portionen hinausgehen.

Lebensmittelportionen, die jeweils eine oder mehrere von einem Lebensmittelprodukt abgetrennte Scheiben umfassen, stellen ein in mancher Hinsicht äußerst anspruchsvolles Transportgut dar. Beispielsweise Wurst- oder Käsescheiben sind nicht starr wie mechanische Transportgüter, sondern flexibel. Ferner können Lebensmittelscheiben fettig, feucht und/oder klebrig sein. Portionen aus Lebensmittelscheiben liegen nicht nur in Stapel- oder Schindelanordnungen vor, sondern können auch komplexere dreidimensionale Gebilde darstellen. Dies gilt beispielsweise für sogenannte "shaved meat"-Anordnungen. Auch Portionen aus ein- oder mehrfach gefalteten Scheiben besitzen eine dreidimensionale Struktur. Je nach Größe der Portion, Anzahl der Scheiben und Konsistenz bzw. Beschaffenheit der Scheiben sind die entsprechenden Portionen mehr oder weniger empfindlich.

Generell ist also auf dem hier in Rede stehenden technischen Gebiet des Transports von Lebensmittelportionen ein möglichst schonender Transport der Portionen eine wesentliche Anforderung an ein Transportsystem. Zu berücksichtigen ist auch, dass Lebensmittelportionen nicht beliebige Orientierungen im Raum einnehmen können. Auch wenn manche Portionen gewendet werden können, ist es nicht möglich, Portionen beispielsweise einfach abzukippen. Aufgrund der Konsistenz der Lebensmittelscheiben können von diesen gebildete Portionen auch nicht einfach auf ihrer Auflagefläche verschoben werden.

Folglich kann einem Transfer von Portionen, insbesondere der Übergabe von Portionen auf den Träger eines Transportmovers bzw. der Abgabe von auf dem Träger befindlichen Portionen, eine besondere Bedeutung zukommen.

Herkömmliche Förderbandsysteme sind für den Transport von Lebensmittelportionen grundsätzlich gut geeignet. Die Übergänge zwischen aufeinanderfolgenden Förderbandabschnitten beispielsweise können so gestaltet werden, dass eine Portionsübergabe ausreichend schonend erfolgt. Förderbänder sind auch dann vorteilhaft einsetzbar, wenn Lebensmittelportionen zwischen unterschiedlichen Höhenniveaus übergeben werden müssen, beispielsweise um aus Teilportionen Gesamtportionen zu bilden oder um Portionen in Verpackungen einzulegen.

Ein Ausführungsbeispiel der Erfindung sieht vor, dass bei zumindest einem Transportmover der Träger eine Fördereinrichtung für eine Portion umfasst oder als Fördereinrichtung ausgebildet ist. Die Fördereinrichtung kann wenigstens ein Förderband umfassen. Das Förderband kann beispielsweise ein Endlosförderband oder ein Abrollband sein.

Eine Besonderheit dieses Aspekts besteht darin, dass mit in einem Bahnsystem individuell bewegbaren Transportmovern, von denen zumindest einer selbst eine Förderfunktion für Portionen beinhaltet, gleichzeitig eine Abkehr und eine Beibehaltung eines herkömmlichen, insbesondere Förderbänder einsetzenden Förderkonzepts realisiert werden kann.

Mit Fördereinrichtungen versehene Transportmover sind in besonders vorteilhafter Weise dazu in der Lage, Lebensmittelportionen aufzunehmen und abzugeben. Beispielsweise können mehrere Transportmover zusammenwirken, um aus Teilportionen Gesamtportionen zu bilden. Dies ist insbesondere für solche in der Praxis immer mehr an Bedeutung gewinnende Anwendungen von Vorteil, mit denen Mehrsortenpackungen erstellt werden sollen.

Bei einem Transfer von Lebensmittelportionen zwischen Förderbändern ist es vorteilhaft, wenn zwischen den Bändern und der Lebensmittelportion keine Relativbewegung erfolgt. Wenn das abgebende Förderband ein Endlosförderband ist, dann ist bevorzugt vorgesehen, dass das aufnehmende Band mit der entsprechenden Geschwindigkeit bewegt wird. Das aufnehmende Band kann während des Transfers aber auch ruhen. In einem solchen Fall kann das abgebende Band ein Abrollband sein, welches unter der abzugebenden Portion wegbewegt wird, d.h. bei einem solchen Abrollband erfolgt keine Bewegung der abzugebenden Portion in Förderrichtung. Vielmehr wird der Portion lediglich "der Boden unter den Füßen weggezogen".

Welchem Typ von Förderband der Vorzug zu geben ist, hängt von der jeweiligen Anwendung ab.

Für einen optimalen und insbesondere schonenden Transfer von Portionen ist es nicht zwingend erforderlich, dass der Träger selbst als aktive Fördereinrichtung, beispielsweise als Förderband, ausgebildet ist. Es ist auch möglich, den Träger so auszubilden, dass er mit wie auch immer konkret ausgestalteten Fördereinrichtungen zusammenwirken kann, die an den Träger Portionen übergeben bzw. vom Träger Portionen abnehmen.

Dementsprechend ist erfindungsgemäß vorgesehen, dass bei zumindest einem Transportmover der Träger eine Mehrzahl von mit Abstand zueinander angeordneten, parallelen Stäben umfasst und dazu ausgebildet ist, mit einer Handhabungseinrichtung für die Portionen zusammenzuwirken. Erfindungsgemäß ist eine Handhabungseinrichtung vorgesehen sein, die als Förderband mit einer Mehrzahl von antreibbaren Förderbändern ausgebildet ist. Wobei die antreibbaren Förderbänder mit Abstand voneinander parallel angeordnet sind, so dass ein kämmendes Hindurchbewegen der Förderbänder durch den Träger möglich ist.

In einem Ausführungsbeispiel der Erfindung kann der Träger dazu ausgebildet sein, mittels der Handhabungseinrichtung relativ zum Halter bewegt oder vom Halter, zumindest vorübergehend, entfernt zu werden, insbesondere als Ganzes oder in Teilen.

So kann beispielsweise ein Träger in Transportrichtung geteilt sein, d.h. ein linkes Trägersegment und ein rechtes Trägersegment umfassen, die jeweils so ausgebildet sind, dass sie beispielsweise von einem Roboter erfasst und vom Halter abgenommen werden können. Solange der Roboter die beiden Trägersegmente nicht voneinander wegbewegt, bleibt die Portion auf dem Träger liegen. So kann der Roboter eine auf den beiden Trägersegmenten liegende Portion zu einer Abgabestelle transferieren, wo die beiden Trägersegmente dann mittels des Roboters auseinanderbewegt werden, woraufhin die Portion beispielsweise in eine Verpackung fällt. Der Roboter kann anschließend die beiden Trägersegmente wieder an den Halter oder an einen anderen Mover übergeben, um auf diese Weise wieder einen vollständigen Transportmover zu bilden. Der auf diese Weise wiederhergestellte Transportmover kann dann eine neue Portion aufnehmen. Auf diese Weise kann ein Träger vorübergehend zu einem Teil eines Roboters oder einer anderen Handhabungseinrichtung werden.

Gemäß einem weiteren Ausführungsbeispiel ist vorgesehen, dass zumindest ein Transportmover mit einer, insbesondere optischen, Anzeigeeinrichtung versehen ist, mittels welcher eine grundsätzlich beliebige Information anzeigbar ist, die insbesondere die Portion oder den Mover betrifft, z.B. eine Information, die das - insbesondere mittels einer in den Transportmover integrierten Waage oder an einem Wiegebereich des Bahnsystems ermittelte - Gewicht einer Portion betrifft.

Dabei kann beispielweise vorgesehen sein, dass die Information die Anzahl von Scheiben darstellt, die der Portion hinzugefügt oder weggenommen werden müssen, damit die Portion ein vorgegebenes Sollgewicht zumindest innerhalb einer vorgegebenen oder vorgebbaren Toleranz aufweist.

Generell ist so erfindungsgemäß das Anzeigen verschiedener Produkt- und/oder Portionseigenschaften möglich.

Wie an anderer Stelle erläutert, kommt dem Bestimmen des Gewichts einer Portion sowie dem Bereitstellen von eine Portion oder einen Mover betreffenden Informationen, von denen das Gewicht nur ein Beispiel ist, insofern eine besondere Bedeutung zu, als dies mit dem erfindungsgemäßen individuellen Transportsystem besonders einfach zu bewerkstelligen ist. Wenn nicht sehr kurze Förderbänder eingesetzt werden, was in einem Förderbandsystem schon aus wirtschaftlichen Gründen nur ausnahmsweise und somit allenfalls an einigen wenigen Stellen möglich ist, dann zeichnen sich Förderbandsysteme dadurch aus, dass jedes Förderband des Bandsystems eine Mehrzahl von Portionen befördert. Eine wie auch immer geartete Individualisierung dieser Portionen ist somit naturgemäß ausgeschlossen. Deshalb wird in herkömmlichen Bandsystemen ein immenser Aufwand betrieben, um eine in der Praxis gewünschte Individualisierung zu erzielen. Beispielsweise existieren aufwendige Projektionssysteme, mit denen Gewichtsinformationen auf jede einzelne Portion projiziert werden, da ein viele Portionen beförderndes Förderband eine solche individuelle Behandlung der Portionen ersichtlich nicht leisten kann.

Dieses Beispiel aus dem Stand der Technik illustriert die Vorteile des erfindungsgemäßen Konzepts, das gerade für den Transport von Lebensmittelportionen aus einer oder mehreren unmittelbar zuvor abgetrennten Produktscheiben über einen bloßen Transport der Portionen hinaus eine Fülle von Zusatzfunktionalitäten bietet, die dem gewünschten Individualitätsprinzip auch und gerade deshalb gerecht werden können, da bereits der Transport der Portionen auf dem Individualisierungskonzept beruht.

Eine Besonderheit des erfindungsgemäßen Konzepts besteht darin, dass es über den bloßen Transport von Portionen hinaus vielfältige Möglichkeiten bietet, Zusatzfunktionen zu realisieren. Derartige Funktionen können in Eigenschaften bzw. Fähigkeiten der Transportmover oder anderer Mover begründet sein. Alternativ oder zusätzlich kann das Bahnsystem entsprechend ausgeführt sein, um eine zusätzliche Funktionalität bereitzustellen. Dies kann durch eine bestimmte Anordnung der einzelnen Bahnen bzw. Bahnabschnitte erfolgen. Alternativ oder zusätzlich ist es möglich, bestimmte Bahnabschnitte mit bestimmten Funktionen auszustatten, die von dem Verlauf des entsprechenden Bahnabschnitts im Bahnsystem unabhängig sind.

Als Beispiel für eine Funktion, die durch eine entsprechende Anordnung bzw. durch einen entsprechenden Verlauf des Bahnsystems realisierbar ist, kann eine Pufferfunktion genannt werden. Eine durch eine bestimmte Ausgestaltung eines Bahnabschnitts realisierte Funktionalität kann beispielsweise die Gewichtsbestimmung von Portionen sein, d.h. unabhängig vom Verlauf bzw. von der Anordnung des Bahnsystems kann ein Bahnabschnitt als Waage zum Bestimmen des Gewichts von Portionen ausgebildet sein.

Vor dem Hintergrund dieses grundsätzlichen Konzepts kann gemäß einem Ausführungsbeispiel der Erfindung vorgesehen sein, dass das Bahnsystem wenigstens einen zur Aufnahme einer Mehrzahl von Transportmovern und/oder Trägern ausgebildeten Puffer umfasst.

Der Puffer kann wenigstens einen Bahnabschnitt des Bahnsystems umfassen.

Alternativ oder zusätzlich kann der Puffer von einer Zusatzeinrichtung gebildet sein. Diese Zusatzeinrichtung braucht keinen Bahnabschnitt des Bahnsystems zu umfassen, sondern ist dazu ausgebildet, Portionen oder Portionen tragende Träger von den Transportmovern zu übernehmen und wieder an diese abzugeben.

In einem Ausführungsbeispiel umfasst der Puffer wenigstens eine von einer Normalstrecke abzweigende und wieder in die Normalstrecke mündende Pufferstrecke. Die Pufferstrecke und die Normalstrecke können in einer gemeinsamen, zumindest im Wesentlichen horizontal oder vertikal verlaufenden Ebene liegen. Je nach den Gegebenheiten kann das Bahnsystem eine zur Verfügung stehende Breite oder Tiefe ausnutzen. So kann beispielsweise das Bahnsystem eine Transportebene umfassen, in welcher im Wesentlichen Normalstrecken verlaufen, in denen die eigentliche Transportfunktion realisiert wird. Zusätzlich kann das Bahnsystem eine oder mehrere über der Transportebene und/oder unter der Transportebene liegende Pufferebenen umfassen, in denen eine oder mehrere Pufferstrecken verlaufen. Für einen Transfer zwischen den einzelnen Ebenen können spezielle Einrichtungen vorgesehen sein, z.B. vertikal bewegbare Bahnabschnitte, die an anderer Stelle erläutert werden.

Gemäß einem Ausführungsbeispiel kann der Puffer als Vertikalpuffer ausgebildet sein. Der Puffer kann wenigstens ein, insbesondere zumindest näherungsweise vertikal verlaufendes, Transportmittel umfassen, das dazu ausgebildet ist, einen einlaufenden Transportmover oder den Träger eines einlaufenden Transportmovers zu übernehmen. Der Puffer kann zwei parallel zueinander, insbesondere zumindest näherungsweise vertikal, verlaufende Transportmittel umfassen, die dazu ausgebildet sind, gemeinsam einen einlaufenden Transportmover oder den Träger eines einlaufenden Transportmovers zu übernehmen. Das oder jedes Transportmittel kann einen Bahnabschnitt umfassen, in welchem zumindest ein Funktionsmover bewegbar ist. Alternativ kann das oder jedes Transportmittel ein Förderband umfassen.

Ein solches Transportmittel kann nach Art eines Paternosters ausgebildet sein.

Ein weiterer Aspekt der Erfindung besteht darin, Informationen über die einzelnen Portionen und/oder über die einzelnen Mover zu beschaffen, zu verarbeiten und/oder für eine oder mehrere Anwendungen zu nutzen. Hierauf wird an anderer Stelle näher eingegangen.

Im Hinblick auf eine Pufferfunktion kann ein solches Konzept beinhalten, dass die Steuereinrichtung dazu ausgebildet ist, beim Betrieb des Puffers die Verweilzeiten von Portionen im Bahnsystem zu berücksichtigen. Hierdurch kann sichergestellt werden, dass die Verweilzeiten der Portionen im Puffer minimiert werden.

Diese Funktion stellt lediglich ein Beispiel für eine Informationsverarbeitung dar, die aufgrund des erfindungsgemäßen Individualisierungsprinzips auf besonders einfache und vorteilhafte Weise möglich ist.

Bei dem Transport von Lebensmittelportionen aus einer oder mehreren von einem Lebensmittelprodukt abgetrennten Scheiben ist es in vielen Anwendungen erforderlich, einen Spuranzahlwechsel durchzuführen. Dies kann erforderlich sein, um die Anzahl der Spuren, in denen z.B. in einem Hochgeschwindigkeitsslicer das Aufschneiden der Lebensmittelprodukte erfolgt, an die Formate anzupassen, die eine nachgeordnete Verpackungsmaschine verarbeiten kann.

Dementsprechend kann gemäß einem Ausführungsbeispiel der Erfindung vorgesehen sein, dass eine Verzweigung des Bahnsystems, an der über einen oder mehrere eingangsseitig ankommende Bahnabschnitte einlaufende Transportmover jeweils in einem oder mehreren ausgangsseitig abgehenden Bahnabschnitten weiterlaufen können, dazu ausgebildet ist, von einem n-Spurbetrieb auf einen m-Spurbetrieb zu wechseln, wobei n ankommende und m abgehende Bahnabschnitte vorhanden sind und n, m ≥ 1 und n ≠ m oder n = m gilt.

Des Weiteren kann erfindungsgemäß vorgesehen sein, dass das Bahnsystem wenigstens einen Funktionsbereich umfasst, in welchem zusätzlich zu wenigstens einer Normalstrecke zumindest eine Überhol-, Warte- oder Parkstrecke vorgesehen ist, die an einer Stelle von der Normalstrecke abzweigt und an einer anderen Stelle wieder in die Normalstrecke einmündet. Eine solche Strecke kann grundsätzlich als Pufferstrecke dienen. In vielen Fällen wird eine Pufferstrecke allerdings derart ausgebildet sein, dass dort vergleichsweise viele Transportmover aufgenommen werden können. Eine Überhol-, Warte- oder Parkstrecke kann sich hingegen dadurch auszeichnen, dass diese Strecke derart ausgebildet ist und/oder betrieben wird, dass darin nur vergleichsweise wenige Transportmover und/oder andere Mover gleichzeitig vorhanden sind.

Generell kann erfindungsgemäß vorgesehen sein, dass entlang wenigstens einer Bahn des Bahnsystems die Transportmover nicht nur in einer Transportrichtung bewegbar sind, sondern auch in die entgegengesetzte Richtung. Diese bei dem eingangs erwähnten LSM-Antriebsprinzip grundsätzlich gegebene Eigenschaft kann beispielsweise gezielt dazu eingesetzt werden, eine Sackgasse im Bahnsystem zu bilden. Auch beispielsweise für das Sortieren von Portionen und Zusammenstellen von Formatsätzen kann eine derartige Ausgestaltung hilfreich sein.

Dementsprechend kann erfindungsgemäß vorgesehen sein, dass das Bahnsystem wenigstens einen Funktionsbereich umfasst, in welchem von wenigstens einer Normalstrecke zumindest eine Sackgassenstrecke abzweigt. In der Sackgassenstrecke befindliche Mover können z.B. an derjenigen Stelle wieder aus der Sackgassenstrecke herausbewegt werden, an welcher sie in die Sackgassenstrecke eingelaufen sind.

Beispielsweise in Abhängigkeit von der Schneidgeschwindigkeit einer oder mehrerer Aufschneidevorrichtungen und/oder von der Menge an insgesamt oder pro Zeiteinheit gebildeten Portionen lässt sich auf diese Weise die Anzahl der tatsächlich im Bahnsystem bewegten Mover steuern bzw. korrigieren.

Wenn die zu transportierenden Portionen nicht nur eine einzige Lebensmittelscheibe umfassen, sondern aus mehreren Scheiben gebildet werden, was in der Praxis die häufigste Anwendung darstellt, dann kommt folglich dem Bilden der Portionen aus mehreren Lebensmittelscheiben eine besondere Bedeutung zu. Im Zusammenhang mit dem Aufschneiden von Lebensmittelprodukten spricht man hierbei allgemein von einem Portionieren und einem Komplettieren. Unter dem Portionieren ist einerseits das Bilden der Portionen aus den fallenden, unmittelbar von einer Aufschneidevorrichtung kommenden, sozusagen "frisch" von einem Produkt abgetrennten Scheiben zu verstehen. Andererseits umfasst der Begriff "Portionieren" auch das Bilden von Gesamtportionen aus zuvor jeweils aus einzelnen Scheiben gebildeten Teilportionen. Unter "Komplettieren" ist insbesondere ein Vorgang zu verstehen, bei dem eine noch nicht fertiggestellte Portion, die bereits eine oder mehrere Lebensmittelscheiben umfasst, die von einem Produkt abgetrennt wurden, mit Scheiben eines anderen, insbesondere in derselben Spur der jeweiligen Aufschneidevorrichtung nachfolgenden Produkts komplettiert wird. Das Komplettieren von Portionen findet insbesondere dann statt, wenn in einer Spur ein Produkt vollständig aufgeschnitten wurde und die zuletzt gebildete Portion mit Scheiben dieses Produkts nicht vollständig erstellt werden konnte, so dass für die Fertigstellung dieser Portion die Scheiben des in der Spur nachfolgenden Produkts benötigt werden. Mit anderen Worten besteht eine komplettierte Portion aus Lebensmittelscheiben unterschiedlicher, insbesondere in derselben Spur nacheinander aufgeschnittener Produkte.

Das Portionieren und Komplettieren erfolgt in der Praxis meist unmittelbar im Bereich des Schneidmessers. Dies ist dem Fachmann grundsätzlich bekannt. Derzeit werden für das Portionieren und Komplettieren sogenannte Portionierbänder eingesetzt, die insbesondere in vertikaler Richtung verfahrbar sind, um für jede abgetrennte Scheibe zumindest näherungsweise die gleiche Fallhöhe und den gleichen Fallweg zu realisieren. Ein Portionierband umfasst für jede Spur einer mehrspurigen Aufschneidevorrichtung ein Endlosband. Diese Bänder können langsam bewegt werden, um für jede Spur beispielsweise geschindelte Portionen oder Portionen mit gegeneinander versetzt angeordneten Scheiben zu bilden, was auch als "staggered stack" bezeichnet wird. Manche Portionierbänder können auch quer verfahren werden, um beispielsweise eine Querschindelung von Portionen zu ermöglichen. In Transportrichtung gesehen sind Portionierbänder häufig vergleichsweise kurz ausgebildet, um fertiggestellte Portionen möglichst schnell an nachfolgende Förderbandsysteme abgeben und zum Bilden der nächsten Position bereit sein zu können.

Portionierbänder können auch drehbar ausgeführt sein oder mit wie auch immer konkret ausgestalteten Dreheinheiten versehen sein, um Portionen zu bilden, bei denen die einzelnen Scheiben nacheinander längs einer insbesondere geschlossen und beispielsweise kreisförmigen Linie abzulegen. Derartige Portioniereinheiten werden auch als Rundleger bezeichnet.

Des Weiteren sind in der Praxis die Portioniereinheiten häufig dazu in der Lage, nicht nur in Transportrichtung, sondern auch entgegen der Transportrichtung bewegt zu werden. Ein solches "Rückwärtsbewegen" kann beispielsweise zum Abwerfen von beim Aufschneiden von Produktanfängen entstehendem Anschnitt, also zum Abführen von nicht verwertbaren Produktteilen, wie insbesondere zu kleinen Produktscheiben, vorgenommen werden.

Ein Aspekt der Erfindung sieht vor, mit den Transportmovern zumindest teilweise die Funktionalität derartiger Portionier- bzw. Komplettiereinheiten abzubilden.

Dementsprechend kann gemäß einem Ausführungsbeispiel vorgesehen sein, dass die Steuereinrichtung dazu ausgebildet ist, in zumindest einem einer Aufschneidevorrichtung zugeordneten Bereich des Bahnsystems mit zumindest einem Transportmover einen Portionier- und/oder Portionskomplettierungsbetrieb durchzuführen.

Insbesondere ist vorgesehen, dass bei dem Portionier- und/oder Portionskomplettierungsbetrieb jeweils der Transportmover oder der Träger des Transportmovers oder ein Ablagebereich des Trägers abgestimmt auf den Betrieb der Aufschneidevorrichtung in und/oder gegen die Transportrichtung bewegbar ist.

Wie bereits an anderer Stelle generell erwähnt, kann hierzu der Träger eine Fördereinrichtung umfassen oder als Fördereinrichtung ausgebildet sein. Insbesondere kann die Fördereinrichtung ein Förderband umfassen, insbesondere ein Endlosförderband oder ein Abrollband.

Es kann vorgesehen sein, dass bei dem Portionier- und/oder Portionskomplettierungsbetrieb jeweils der Träger des Transportmovers durch Verstellen des Bahnabschnitts und/oder durch Verstellen des Trägers relativ zu dem Läufer in einer eine vertikale Komponente aufweisenden Richtung und/oder in horizontaler Richtung verstellbar ist. In die Realisierung des Portionier- und/oder Portionskomplettierungsbetriebs kann folglich der betreffende Transportmover alleine involviert sein, wobei alternativ oder zusätzlich auch das Bahnsystem entsprechend ausgebildet sein kann. Beispielsweise können verstellbare Bahnabschnitte vorgesehen werden, um einen Portionier- und/oder Portionskomplettierungsbetrieb zu realisieren.

Die konkrete Anordnung und Ausgestaltung des Bahnsystems kann von den jeweiligen Gegebenheiten, insbesondere von dem zur Verfügung stehenden Bauraum, abhängig gemacht werden.

Wie an anderer Stelle erwähnt, sieht ein genereller Aspekt der Erfindung vor, zwei oder mehrere Mover zusammenwirken zu lassen. Eine hierdurch realisierte Zusatzfunktion kann grundsätzlich jedem beliebigen Zweck dienen.

Ein Zusammenwirken von Movern kann gemäß einem Ausführungsbeispiel darin bestehen, dass an zumindest einem Funktionsbereich des Bahnsystems aus wenigstens zwei jeweils eine Teilportion tragenden Transportmovern ein Transport-Zug zusammenstellbar ist. Eine wie auch immer gestaltete mechanische Kopplung der einen solchen Zug bildenden Transportmovern ist möglich, aber nicht zwingend. Je nach konkreter Ausgestaltung des Transportsystems kann die Steuereinrichtung dafür sorgen, dass die Transportmover auch ohne mechanische Kopplung untereinander gemeinsam entlang einer jeweiligen Bahn wie ein Zug bewegt werden.

Gemäß einem weiteren Ausführungsbeispiel der Erfindung kann eine Mehrzahl von nacheinander anlaufbaren Funktionsbereichen vorgesehen sein, an denen jeweils einem Transportmover oder einem von mehreren Transportmovern gebildeten Transport-Zug eine Teilportion oder ein eine Teilportion tragender Transportmover hinzufügbar ist.

Auf diese Weise kann jeweils aus mehreren Teilportionen eine Gesamtportion gebildet werden. Dies ist insbesondere zur Bildung von Mehrsortenpackungen von Vorteil.

Auch das Anfahren von Stationen zum Beigeben von Lebensmitteln, z.B. von Spendeeinrichtungen für Soßen, Remouladen o.Ä.) sowie von Stationen zum Beipacken von Gegenständen, wie beispielsweise Essbesteck, ist erfindungsgemäß möglich.

Wie an anderer Stelle erwähnt, kann es insbesondere beim Transportieren von mittels einer Verpackungsmaschine zu verpackenden Lebensmittelportionen von Bedeutung sein, dass die Portionen untereinander eine bestimmte vorgegebene Relativanordnung und/oder eine vorgegebene Orientierung besitzen. Dies kann mit herkömmlichen Förderbandsystemen erreicht werden. Allerdings ist hierfür ein beträchtlicher Aufwand erforderlich. Das erfindungsgemäße Individualtransportsystem ist hingegen hervorragend dafür geeignet, die von der Praxis geforderten Anforderungen an den Transport von zu verpackenden Lebensmittelportionen zu erfüllen.

So ist gemäß einem Aspekt der Erfindung vorgesehen, dass das Bahnsystem wenigstens einen Funktionsbereich umfasst, an welchem mehrere, insbesondere mehrspurig einlaufende, Transportmover gruppierbar sind.

Es kann vorgesehen sein, dass in dem Funktionsbereich die Transportmover in einem vorgegebenen Format relativ zueinander anordenbar sind, wobei das Format zumindest eine Reihe, wenigstens eine Spalte oder zumindest ein n x m-Array (mit n, m > 1) umfasst.

Des Weiteren kann vorgesehen sein, dass eine Gruppe von Transportmovern zumindest in einem Abschnitt des Bahnsystems in einem jeweiligen Format mit zumindest im Wesentlichen unveränderter Relativanordnung bewegbar ist.

Des Weiteren kann vorgesehen sein, dass in zumindest einem Funktionsbereich des Bahnsystems zumindest zwei Transportmover, die in einer Spur hintereinander oder in benachbarten Spuren nebeneinander laufen, mit ihren Portionen entsprechend einer vorgegebenen oder vorgebbaren Bedingung relativ zueinander ausrichtbar sind.

Wie an anderer Stelle erwähnt, kann es in der Praxis erforderlich sein, in einem Mehrspurbetrieb den Abstand zwischen benachbarten Spuren zu verändern.

Dementsprechend kann erfindungsgemäß vorgesehen sein, dass das Bahnsystem wenigstens einen Funktionsbereich mit Mehrspurbetrieb umfasst, in welchem der Spurabstand zwischen parallel zueinander verlaufenden Bahnabschnitten veränderbar ist.

Der Spurabstand kann durch Verstellen von Bahnabschnitten oder mittels einer Verzweigung veränderbar sein, an der über mehrere eingangsseitig ankommende Bahnabschnitte einlaufende Transportmover jeweils in mehreren ausgangsseitig abgehenden Bahnabschnitten weiterlaufen können.

Bei der Verarbeitung von Lebensmittelportionen ist es in der Praxis manchmal oder häufig erforderlich, eine Portion zu wenden, d.h. derart umzudrehen, dass Oberseite und Unterseite vertauscht werden. Ein derartiges, im Folgenden auch als Wenden von Portionen bezeichnetes Vorgehen kann erforderlich sein, wenn in der Verpackung eine weniger ansehnliche Seite der Portion nicht sichtbar sein soll. In Abhängigkeit von der Ausgestaltung einer nachfolgenden Verpackung kann es folglich erforderlich sein, eine Portion zu wenden, wenn es nicht möglich ist, bereits beim Aufschneiden des Produkts und der Bildung der Portion für die gewünschte Orientierung der Portion zu sorgen.

Dementsprechend kann gemäß einem Aspekt der Erfindung vorgesehen sein, dass das Bahnsystem wenigstens einen Funktionsbereich umfasst, der dazu ausgebildet ist, wenigstens einen ankommenden Transportmover oder den Träger eines ankommenden Transportmovers zu übernehmen und zusammen mit der Portion, insbesondere um 180°, um eine quer oder parallel zur Transportrichtung verlaufende Achse zu drehen oder zu wenden.

Der Funktionsbereich kann dazu ausgebildet sein, eine Mehrzahl übernommener Transportmover oder Träger gleichzeitig zu drehen oder zu wenden.

In einer möglichen Ausgestaltung kann der Funktionsbereich zumindest eine offene oder geschlossene gekrümmte, insbesondere kreisförmige, Bahn, sowie wenigstens einen, insbesondere zwei zusammenwirkende, Dreh- oder Wendemover umfassen, die in der gekrümmten Bahn bewegbar sind.

Beispielsweise kann eine kreisförmige oder elliptische Bahn in einer quer zur Transportrichtung verlaufenden Ebene liegen.

Der als Wendestation dienende Funktionsbereich kann ein erstes Mittel und ein zweites Mittel umfassen, zwischen denen die zu wendende Portion während des Wendevorgangs gehalten wird. Die beiden Mittel können aufeinander zu und voneinander weg bewegbar sein, um eine Portion aufnehmen, halten und abgeben zu können. Die Mittel können jeweils von wenigstens einem Mover gebildet sein. Die Mittel können alterativ jeweils von einem Träger gebildet sein. Einer der Träger kann derjenige Träger sein, der von einem ankommenden Transportmover stammt und somit die zu wendende Portion trägt. Der andere Träger kann an der Wendestation warten und nach dem Wendevorgang mit der dann von ihm getragenen Portion an einen ausgangsseitig wartenden Mover übergeben werden, um so mit diesem zusammen einen Transportmover zu bilden. Der ursprüngliche Träger kann an der Wendestation verbleiben und den wartenden Träger für die nächste zu wendende Portion bilden.

Gemäß einem weiteren Aspekt der Erfindung kann vorgesehen sein, dass zumindest ein Transportmover und/oder ein Bahnabschnitt dazu ausgebildet ist, das Gewicht einer Portion zu ermitteln, welche auf dem Transportmover bzw. auf einem in dem Bahnabschnitt befindlichen Transportmover liegt.

Dabei kann vorgesehen sein, dass zumindest ein Transportmover mit einer integrierten Waage versehen ist, mittels welcher das Gewicht der Portion bestimmbar ist.

Alternativ oder zusätzlich kann vorgesehen sein, dass in zumindest einen, insbesondere von unmittelbar benachbarten Bahnabschnitten entkoppelten, Bahnabschnitt des Bahnsystems eine Wiegeeinrichtung integriert ist.

Bei der Handhabung von Lebensmittelprodukten kommt der Hygiene und somit der Reinigung von Einrichtungen eine besondere Bedeutung zu.

Dementsprechend kann die Erfindung Maßnahmen vorsehen, die eine Vermeidung oder Reduzierung von Verschmutzungen und/oder eine Reinigung betreffen, und zwar im Hinblick auf die Transportmover, insbesondere deren Träger, und/oder im Hinblick auf das Bahnsystem. Ein besonders vorteilhafter Aspekt der Erfindung betrifft ein Konzept, bei welchem zur Verbesserung der Hygiene und/oder zur Reinigung die Transportmover selbst und/oder das Bahnsystem selbst eingesetzt werden.

Gemäß einem Ausführungsbeispiel der Erfindung kann vorgesehen sein, dass wenigstens einer Strecke des Bahnsystems, insbesondere einer zusätzlich zu einer Normalstrecke vorgesehenen Funktionsstrecke, bevorzugt einer Rückführstrecke, zumindest eine Reinigungseinrichtung für die Transportmover zugeordnet ist.

Die Reinigungseinrichtung kann für einen Durchlaufbetrieb mit während der Reinigung entlang einer Bahn bewegten Transportmovern und/oder für einen Stationärbetrieb mit während der Reinigung auf der Bahn stehenden Transportmovern ausgebildet sein.

Die Reinigungseinrichtung kann ein Reinigungsbad für die Transportmover oder deren Träger umfassen. Insbesondere kann vorgesehen sein, dass die Bahn relativ zu dem Reinigungsbad derart geführt ist, dass die entlang der Bahn bewegten Transportmover zumindest teilweise in das Reinigungsbad eintauchen, insbesondere jeweils mit ihrem Träger.

Generell kann die Reinigungseinrichtung dazu ausgebildet sein, die Transportmover zumindest bereichsweise mit einem Reinigungsmittel zu beaufschlagen, beispielsweise mit einem Fluid, mit elektromagnetischer Strahlung und/oder mit einem Plasma. Beispielsweise kann die Reinigungseinrichtung eine Kammer umfassen, in welcher die Transportmover bzw. deren Träger mit UV-Strahlung beaufschlagt werden.

Alternativ oder zusätzlich kann die Reinigungseinrichtung dazu ausgebildet sein, die Transportmover bzw. deren Träger einer Hygienebehandlung zu unterziehen. Die Hygienebehandlung kann eine Beaufschlagung mit einem Reinigungsmittel beinhalten. Es ist auch möglich, die Transportmover zumindest bereichsweise auf eine Temperatur aufzuheizen, die ausreicht, um Organismen unschädlich zu machen. Insbesondere erfolgt ein Aufheizen auf eine Temperatur von mehr als 60°C, insbesondere mehr als 70°C.

Des Weiteren kann erfindungsgemäß vorgesehen sein, dass wenigstens einer Strecke des Bahnsystems, insbesondere einer zusätzlich zu einer Normalstrecke vorgesehenen Funktionsstrecke, bevorzugt einer Rückführstrecke, zumindest eine Konditioniereinrichtung für die Transportmover zugeordnet ist, mittels welcher die Transportmover zumindest bereichsweise einer Konditionierbehandlung unterziehbar sind.

Bei der Konditionierbehandlung kann es sich um eine Hygienebehandlung handeln. Die Konditionierung der Transportmover kann aber auch anderen Zwecken dienen, beispielsweise einer Aufbereitung, Vervollständigung oder auch Orientierung von Trägern oder Trägersegmenten, beispielsweise zum Herstellen oder Wiederherstellen einer Ausgangslage oder Ausgangsorientierung.

Des Weiteren schlägt die Erfindung Maßnahmen vor, die zumindest weitgehend verhindern, dass das Bahnsystem von den transportierten Lebensmittelportionen verschmutzt wird.

So kann in einem Ausführungsbeispiel zumindest ein Bahnabschnitt des Bahnsystems eine Bahnabdeckung umfassen, die sich unterhalb der Träger der Transportmover entlang des Bahnabschnitts erstreckt. Insbesondere kann vorgesehen sein, dass die Bahnabdeckung den Bahnabschnitt im Wesentlichen vollständig abdeckt und mit einer Unterbrechung zum Entlangführen der Halter der Transportmover versehen ist.

Gemäß einem weiteren Ausführungsbeispiel der Erfindung kann zumindest ein Bahnabschnitt mit zumindest einer passiven Hygieneeinrichtung versehen sein.

Bei einer solchen passiven Hygieneeinrichtung kann es sich beispielsweise um eine oder mehrere Öffnungen oder Durchbrechungen im Bahnabschnitt handeln. Alternativ oder zusätzlich kann der Bahnabschnitt mit geneigten Flächen versehen sein. Ferner können Lücken zwischen aufeinanderfolgenden Bahnabschnitten vorgesehen sein. Eine passive Hygieneeinrichtung kann auch durch geneigte Bahnabschnitte realisiert werden.

Derartige Maßnahmen können dazu dienen, ein Abfließen von Flüssigkeit zu erleichtern, die beispielsweise in Reinigungsphasen mittels Hochdruckreiniger aufgebracht werden.

Gemäß einem weiteren Ausführungsbeispiel kann dem Bahnsystem wenigstens eine automatische Reinigungseinrichtung für von den Transportmovern vorübergehend getrennte Träger zugeordnet sein. Dabei können an einem Abgabebereich des Bahnsystems die Träger jeweils automatisch vom Transportmover trennbar und an die Reinigungseinrichtung abgebbar und nach Durchlaufen eines Reinigungsprozesses in der Reinigungseinrichtung an einem Übergabebereich des Bahnsystems wieder an einen Transportmover übergebbar sein.

Gemäß einem weiteren Aspekt der Erfindung ist vorgesehen, dass die Steuereinrichtung dazu ausgebildet ist, das Bahnsystem auf das Vorhandensein von Störungen zu überwachen. Störungen können beispielsweise durch Verschmutzung und/oder durch Verschleiß verursacht werden.

Die Überwachung kann mit Hilfe von Sensoren erfolgen. Die Sensoren können dem Bahnsystem und/oder den Transportmovern zugeordnet sein. Alternativ oder zusätzlich kann die Überwachung durch Auswerten von den Betrieb des Bahnsystems und/oder der Transportmover betreffenden Parametern erfolgen.

Gemäß einem weiteren Aspekt der Erfindung kann vorgesehen sein, dass zumindest einer Bahn wenigstens abschnittsweise mehrere Spuren zugeordnet sind. Wenn beispielsweise mittels eines Slicers n Produkte gleichzeitig aufgeschnitten werden und somit im Anschluss an den Slicer das Transportsystem zumindest im Bereich des Slicers für einen n-spurigen Betrieb auszulegen ist, dann kann gemäß diesem Ausführungsbeispiel zumindest eine Bahn zumindest vorübergehend zwei oder mehrere Spuren abdecken und insbesondere für einen Transport wenigstens zweier nebeneinander angeordneter Portionen sorgen.

Dies kann gemäß einem Ausführungsbeispiel dadurch erzielt werden, dass die in dieser Bahn bzw. diesem Bahnabschnitt bewegbaren Mover derart ausgelegt sind, dass sie zwei oder mehrere nebeneinander liegende Portionen tragen können. Ein solches Mehrspurprinzip für eine Bahn kann beispielsweise dazu genutzt werden, eine Spurabstandsvergrößerung vorzunehmen, die im Hinblick auf nachfolgende Bereiche des Bahnsystems oder im Hinblick auf nachgeordnete Einrichtungen wie beispielsweise eine Verpackungsmaschine erforderlich oder von Vorteil sind. In dem Mehrspurabschnitt der Bahn bewegbare Mover können beispielsweise mit quer zur Transportrichtung auseinanderbewegbaren Trägersegmenten versehen sein. Auf diese Weise kann der Abstand zweier nebeneinander auf dem Träger liegender Portionen verändert und so der Spurabstand eingestellt werden.

Ein weiterer Aspekt der Erfindung sieht vor, dass das Bahnsystem eine Mehrzahl von Teil-Bahnsystemen umfasst, wobei bevorzugt die Transportmover an einem Wechsel zwischen den Teil-Bahnsystemen gehindert sind. Insbesondere kann vorgesehen sein, dass die Teil-Bahnsysteme sich hinsichtlich zumindest einer baulichen, strukturellen Eigenschaft ihrer Transportmover und/oder hinsichtlich zumindest eines das Bewegen der Transportmover betreffenden Betriebsparameters voneinander unterscheiden.

So können die Teil-Bahnsysteme z.B. für unterschiedlich große Mover bzw. unterschiedlich große Läufer ausgeführt sein. Die Teil-Bahnsysteme können auch unterschiedliche Transportgeschwindigkeiten ermöglichen. So kann ein relativ langsameres Teil-Bahnsystem im Wesentlichen für Verteil-, Rangier-, Formatier- und/oder Aussortierfunktionen vorgesehen sein, während ein relativ schnelleres Teil-Bahnsystem im Wesentlichen dazu dient, in möglichst kurzer Zeit eine relativ große Transportstrecke zu überwinden.

Wenn es in konstruktiver bzw. baulicher Hinsicht oder auf steuerungstechnische Art und Weise nicht möglich ist, dass die Mover zwischen den beiden Teil-Bahnsystemen wechseln können, dann können an der Schnittstelle zwischen den beiden Teil-Bahnsystemen eine oder mehrere Übergabestellen vorgesehen sein, an denen jeweils Portionen von Movern des einen Teil-Bahnsystems an Mover des anderen Teil-Bahnsystems transferiert werden können.

Beispielsweise mit dem Ziel, die Gesamtbreite des Bahnsystems vergleichsweise gering zu halten, kann gemäß einem weiteren Aspekt vorgesehen sein, dass das Bahnsystem wenigstens zwei in unterschiedlichen, bevorzugt zumindest im Wesentlichen horizontal verlaufenden Ebenen liegende Bereiche umfasst, zwischen denen die Transportmover mittels eines vertikal bewegbaren Bahnabschnitts wechseln können.

Ein solcher Wechsel zwischen den einzelnen Ebenen kann auf relativ einfache Weise mittels hier auch als "Mini-Lift" bezeichneter Bahnabschnitte erfolgen, in welche jeweils ein oder mehrere Mover einfahren und nach Abwärts- oder Aufwärtsfahrt in eine andere Ebene wieder ausfahren können. Diejenige Bahn, in welcher sich ein solcher vertikal verfahrbarer Bahnabschnitt gerade nicht befindet, kann folglich an dieser Stelle unterbrochen sein. Es ist alternativ aber auch möglich, mehrere vertikal übereinander angeordnete Bahnabschnitte vorzusehen, die stets gemeinsam relativ zu den einlaufenden und auslaufenden Bahnabschnitten verfahrbar sind, und zwar derart, dass lediglich während der Vertikalbewegung die jeweiligen Bahnen unterbrochen sind. Wenn beispielsweise an einem Bereich des Bahnsystems zwei Ebenen nebeneinander angeordnet sind, dann kann mit einer Dreiergruppe übereinander angeordneter, vertikal verfahrbarer Bahnabschnitte unabhängig von der Verfahrrichtung sichergestellt werden, dass in jeder Stellung der Dreiergruppe die in den unterschiedlichen Ebenen verlaufenden Bahnen nicht unterbrochen sind.

Ein weiterer Aspekt der Erfindung beruht auf der Erkenntnis, dass es vorteilhaft sein kann, beispielsweise zum Durchführen von Funktionen, die an allen Transportmovern erforderlich sind, dies bei einem Mehrspurbetrieb nicht in jeder Bahn vorzunehmen, sondern zur Durchführung dieser Funktion oder Funktionen einen speziellen Bereich vorzusehen, an welchem die mehrspurig laufenden Bahnen vorübergehend zusammengeführt werden. Ein solcher Zusammenführungsbereich kann gleichzeitig als Einlaufbereich für von unterschiedlichen Ausgangsbereichen stammende Transportmover, beispielsweise von verschiedenen Slicern beladene Transportmover, und/oder als Auslaufbereich für besondere Strecken dienen, beispielsweise zum Aussortieren von bestimmte Kriterien nicht erfüllende Portionen.

Dementsprechend kann erfindungsgemäß vorgesehen sein, dass das Bahnsystem einen Funktionsbereich umfasst, an welchem mehrere Bahnen vorübergehend, insbesondere auf genau eine Bahn, zusammengeführt sind und welcher dazu ausgebildet ist, für die Transportmover und/oder die Portionen eine Zusatzfunktion auszuführen. Bei dieser Zusatzfunktion kann es sich beispielsweise um eine Klassifizierungs-, Kontroll-, Überwachungs-, Wiege-, Ausricht- und/oder Wartungsfunktion handeln.

Die zu diesem Funktionsbereich führenden Bahnen können von wenigstens zwei räumlich getrennten Beladebereichen kommen. Von diesem Funktionsbereich kann wenigstens eine als Aussortier- oder Ausschleusstrecke vorgesehene Bahn ausgehen.

Wie bereits erwähnt, kann das Bahnsystem wenigstens einen Übergangsbereich aufweisen, an welchem aufeinanderfolgende Bahnabschnitte unterschiedlichen Typs und/oder unterschiedlicher Orientierung im Raum einander zumindest teilweise überlappen oder ineinander übergehen.

Insbesondere, aber nicht ausschließlich, für einen derartigen Übergangsbereich kann gemäß einem weiteren Aspekt der Erfindung vorgesehen sein, dass das Bahnsystem wenigstens einen Übergangs- oder Hybridbahnabschnitt umfasst, der bereichsweise als Bahnabschnitt eines Typs und bereichsweise als Bahnabschnitt eines anderen Typs ausgebildet ist, wobei insbesondere der Übergangs- oder Hybridbahnabschnitt für mit Hybridläufern versehene Transportmover vorgesehen ist. Ein solcher Übergangs- oder Hybridbahnabschnitt kann beispielsweise auf der einen Seite eine Führungsschiene eines U-Bahntyps und auf der anderen Seite eine Führungsschiene eines C-Bahntyps aufweisen. Ein mit einem entsprechend ausgebildeten Hybridläufer versehener Mover kann beispielsweise von einer Bahn vom U-Typ kommend in einen solchen Übergangs- oder Hybridbahnabschnitt einlaufen und anschließend in einem Bahnabschnitt vom C-Typ weiterlaufen. Ein solcher Übergangs- oder Hybridbahnabschnitt kann folglich für einen sanften bzw. fließenden oder fliegenden Übergang zwischen unterschiedlichen Bahntypen sorgen.

Ein allgemeiner Aspekt der Erfindung, der insbesondere dazu dient, die Funktionalität des Gesamtsystems zu erhöhen, sieht vor, dass bei zumindest einem Transportmover der Träger mit Mitteln versehen ist, die dazu ausgebildet sind, mit einer zum Bewegen des Trägers ausgebildeten Handhabungseinrichtung, insbesondere zum Bilden einer Portion auf dem Träger und/oder zum Ausrichten einer Portion, zusammenzuwirken.

Ein weiterer genereller Aspekt der Erfindung beruht auf der Erkenntnis, dass insbesondere bei Auslegung des Antriebsprinzips nach Art eines Linearmotors - und zwar mit als Magnetfelder erzeugendem Stator als Bahn für Mover mit Permanentmagnet-Läufern - diese Magnetfelder zusätzlich dafür genutzt werden können, die Mover durch elektromagnetische Induktion mit Energie zu versehen.

Generell kann folglich gemäß einem Aspekt der Erfindung vorgesehen sein, dass zumindest ein Transportmover oder ein Funktionsmover zur Aufnahme von Energie aus dem Bahnsystem ausgebildet ist. Wie erwähnt, kann dies insbesondere durch elektromagnetische Induktion erfolgen. Es sind alternativ aber auch andere Möglichkeiten denkbar, die Bewegung der Mover in der Bahn auszunutzen, um für die Mover Energie zur Verfügung zu stellen und insbesondere diese Energie in den Movern zu speichern.

Hierzu kann beispielsweise ein Transportmover mit einer Art Anhänger versehen sein, der selbst keinen Mover im eigentlichen Sinne darstellt und lediglich einem sogenannten "Energie-Harvesting" dient, um z.B. durch elektromagnetische Induktion Energie zu sammeln und diese an den ihn ziehenden Transportmover zu übermitteln.

Alternativ oder zusätzlich ist es erfindungsgemäß auch möglich, eine solche Energieversorgung in die Mover selbst zu integrieren.

Wie an anderer Stelle erwähnt, kann das Bahnsystem wenigstens einen Funktionsbereich zum Drehen eines Transportmovers oder eines Transportmover-Trägers umfassen. Ein solcher Funktionsbereich kann insbesondere dazu dienen, Portionen zu wenden.

Ein solcher, insbesondere als Wendestation ausgebildeter Funktionsbereich kann einen oder mehrere Bahnabschnitte umfassen, die dazu dienen, zu drehende Transportmover vorübergehend aufzunehmen.

Wie an anderer Stelle erwähnt, kann das Bahnsystem mit einer Reinigungseinrichtung für die Transportmover versehen sein.

Hierbei kann erfindungsgemäß vorgesehen sein, dass die Reinigungseinrichtung dazu ausgebildet ist, die Transportmover zumindest bereichsweise mit einem Reinigungsmittel, insbesondere mit einem Fluid, mit elektromagnetischer Strahlung und/oder mit einem Plasma zu beaufschlagen. Alternativ oder zusätzlich kann die Reinigungseinrichtung dazu ausgebildet sein, die Transportmover einer Hygienebehandlung zu unterziehen. Eine solche Hygienebehandlung kann ein Aufheizen zumindest einzelner Bereiche des Transportmovers beinhalten. Hierdurch können die Hygiene beeinträchtigende Organismen abgetötet werden.

Ein weiterer genereller Aspekt der Erfindung beruht auf der Erkenntnis, dass das erfindungsgemäße Prinzip der Individualisierung des Transports der Portionen mittels individuell bewegbarer Transportmover für die Portionen in einem Bahnsystem gleichzeitig eine vorteilhafte Informationsbeschaffung und/oder Informationsverarbeitung für die einzelnen Portionen und/oder Transportmover ermöglicht.

Während bei herkömmlichen Förderbandsystemen naturgemäß jedem Förderband als kleinste steuerbare Einheit stets mehrere Portionen gleichzeitig zugeordnet sind und überdies das Förderband ständig Portionen aufnimmt und wieder abgibt, Förderbändern gewissermaßen also keine "eigenen" Portionen zugeordnet werden, verbleiben bei dem erfindungsgemäßen Individualtransportsystem dagegen die Portionen jeweils vergleichsweise lange auf ihrem "eigenen" Transportmover. Dieser Umstand kann dazu benutzt werden, dem erfindungsgemäßen Transportsystem eine die Beschaffung und/oder Verarbeitung von individuellen Informationen betreffende Funktionalität zu verleihen.

Dementsprechend ist gemäß einem Aspekt der Erfindung vorgesehen, dass zumindest für einen Transportmover wenigstens eine Information ermittelbar und insbesondere von der Steuereinrichtung berücksichtigbar ist, welche die Portion oder den Transportmover, insbesondere dessen Träger oder Läufer, betrifft.

Diese Information kann das Gewicht der Portion, die Lage der Portion auf dem Träger, ein Qualitätsmerkmal der Portion und/oder die Verweilzeit der Portion im Bahnsystem betreffen.

Generell kann diese Information jede beliebige Eigenschaft einer Portion betreffen. Auch ist es möglich, dass die Information z.B. eine Fehlerquote eines Movers betrifft, die Aufschluss über einen Verschleiß- oder Verschmutzungsgrad des Movers geben kann. Auf diese Weise kann ein Mover gezielt aussortiert werden, wenn diesbezüglich vorgegebene oder vorgebbare Bedingungen erfüllt sind.

Die Information kann den Verschleißzustand, den Reinigungszustand, den Typ und/oder die Einsatzdauer des Transportmovers, insbesondere dessen Trägers oder Läufers, betreffen.

Insbesondere kann für die Mover jeweils eine Reinigungshistorie angelegt werden.

Gemäß einem Ausführungsbeispiel der Erfindung kann vorgesehen sein, dass zumindest ein Transportmover mit wenigstens einem Datenspeicher versehen und dazu ausgebildet ist, Daten zumindest temporär zu speichern. Diese Daten betreffen insbesondere die zuvor erwähnten Informationen.

Des Weiteren kann vorgesehen sein, dass zumindest ein Transportmover, insbesondere für einen Datentransfer, zu einer, insbesondere von der Steuereinrichtung unabhängigen, Kommunikation mit dem Warnsystem ausgebildet ist. In diesem Zusammenhang bedeutet die Unabhängigkeit dieser Kommunikation von der Steuereinrichtung insbesondere eine mögliche Ausgestaltung, wonach die Informationen nicht z.B. unmittelbar von den Transportmovern an die Steuereinrichtung übertragen werden oder die Übertragung von Daten von der Steuereinrichtung initiiert wird. So kann beispielsweise zumindest an bestimmten Stellen in das Bahnsystem eine Sensorik integriert sein, die dazu in der Lage ist, in die Mover integrierte Datenspeicher auszulesen, während die Mover sich in der Bahn bewegen. Die Informationen bzw. Daten können dann über das Bahnsystem an die Steuereinrichtung übermittelt werden.

Die Größe und die Form bzw. das Format der Träger der Transportmover können grundsätzlich beliebig gewählt werden. Bevorzugt besitzt die von den Trägern jeweils bereitgestellte Auflagefläche für die Portionen eine Größe und ein Format, das etwa zwischen den Papierformaten DIN A5 und DIN A4 liegt. Die Träger können aber auch kleiner oder größer sein.

Die Träger können jeweils zur Aufnahme genau einer Portion oder einer Mehrzahl von Portionen gleichzeitig ausgebildet sein.

Die Träger können jeweils mehrteilig ausgeführt sein. Die einzelnen Teile können relativ zueinander bewegbar sein. An einem einzigen Transportmover kann der Abstand zwischen einzelnen Trägerteilen veränderbar sein. Hierdurch ist es grundsätzlich möglich, auf einem einzigen Transportmover Teilportionen zu einer Gesamtportion zusammenzuführen.

Die einzelnen Teile des Trägers können ineinander verschachtelt sein. Die Bewegbarkeit der Trägerteile kann durch eine reine Linearbewegung erzielt werden. Alternativ ist es möglich, die Teile des Trägers zu verdrehen bzw. zu verschwenken.

Der Träger kann flexibel oder biegbar ausgebildet sein.

Wie an anderer Stelle erwähnt, kann der Träger relativ zum Läufer bewegbar sein. Der Träger kann verschiebbar sein. Alternativ oder zusätzlich kann der Träger verdrehbar oder verschwenkbar sein. Zumindest ein Teil des Trägers kann verkippbar sein, um beispielsweise auf diese Weise nicht verwertbare Portionen oder einen Produktanschnitt abkippen zu können.

Der Träger kann in der Höhe verstellbar sein. Hierdurch kann ein Fallhöhenausgleich bei der Aufnahme von Scheiben erfolgen.

Die Bewegbarkeit des Trägers relativ zum Läufer kann dazu genutzt werden, eine Lage- und/oder Orientierungskorrektur der Portion zu bewerkstelligen.

Des Weiteren kann erfindungsgemäß eine Übergabe von Bahn zu Bahn bzw. von Spur zu Spur erfolgen, z.B. durch seitliches Auskragen eines Trägers, um in den Einflussbereich einer Nachbarbahn oder Nachbarspur zu gelangen.

Der Träger kann als Rechen ausgebildet sein. Hierdurch kann eine Aufnahme und/oder Abgabe von Portionen erzielt werden, indem in den Träger ein weiterer Rechen oder ein oder mehrere Förderbänder eingreifen.

Der Träger kann wellenförmig ausgebildet sein, so dass in die Wellentäler mit Hilfe eines Rechens oder mit Hilfe von Förderbändern eingegriffen werden kann, um Portionen aufzunehmen oder abzugeben.

Die Mover bzw. deren Träger können mit einem Design versehen werden. Hierdurch kann eine optische Kennzeichnung erreicht werden, um beispielsweise eine Wiedererkennung oder Zuordnung zu realisieren. Unterschiedliche Mover-Typen können unterschiedlich gestaltet werden.

Wie an anderer Stelle erwähnt, ist gemäß einem Aspekt der Erfindung vorgesehen, dass mehrere Mover zusammenwirken können. Alternativ oder zusätzlich kann vorgesehen sein, dass die Mover oder deren Träger mit dem Bahnsystem zusammenwirken. Dies kann dazu genutzt werden, einen Mover bzw. dessen Träger zu beeinflussen. Umgekehrt kann ein Mover bzw. dessen Träger dazu genutzt werden, das Bahnsystem zu beeinflussen bzw. über das Bahnsystem eine Funktion auszuführen.

Ein Mover oder Träger kann eine Halte- oder Klemmvorrichtung umfassen, die entweder mittels Eigenenergie oder von außen betätigbar ist, indem beispielsweise der Mover in einen Bahnabschnitt einläuft und beispielsweise mittels eines Hebels oder Stößels beaufschlagt wird. So kann beispielsweise der Mover oder Träger eine Ab- oder Auswerfvorrichtung für eine Portion oder für eine auf dem Träger aufliegende Portionsaufnahme z.B. in Form eines Trays oder eines Verpackungsteils umfassen. Diese Vorrichtung kann mittels Eigenenergie oder von außen über das Bahnsystem betätigt werden, um z.B. automatisch an einer vorgegebenen Stelle des Bahnsystems die entsprechende Funktion auszulösen.

Ein Mover oder Träger kann wenigstens ein mechanisches oder elektrisches Auslöseelement umfassen, das aktiviert wird, wenn ein mit einem entsprechenden Auslöseelement versehener Bahnabschnitt erreicht wird. Die Auslöseelemente, die beispielsweise in Form von Vorsprüngen, Laschen oder Nocken vorgesehen sind, können veränderbar sein, um beispielsweise an eine jeweils zu erstellende Portion angepasst zu werden.

Die Bewegungsenergie der sich im Bahnsystem bewegenden Mover kann dazu genutzt werden, Betätigungsvorgänge am Bahnsystem auszulösen. So kann beispielsweise eine Übergabeeinrichtung, ein Schieber oder eine Feder beaufschlagt werden, um einen Bewegungsvorgang oder einen Auslösevorgang zu bewerkstelligen.

Des Weiteren ist es erfindungsgemäß möglich, einem Mover ein vorgegebenes Bewegungsprofil durchlaufen zu lassen, um die Trägheit der Portion auszunutzen. Beispielsweise kann durch einen Bremsvorgang oder einen Beschleunigungsvorgang, beispielsweise eine Richtungsumkehr oder eine Kurvenfahrt, eine Portion von einem Träger abgegeben oder auf dem Träger verlagert werden.

Um mit dem erfindungsgemäßen Transportsystem eine Portionier- und/oder Komplettierfunktion abzubilden, können die Transportmover im Ablagebereich der von einer Aufschneidevorrichtung kommenden Scheiben eingesetzt werden. Hierzu ist es erforderlich, das Bahnsystem für die Transportmover im Ablagebereich vorzusehen.

Alternativ kann vorgesehen sein, lediglich die Träger der Transportmover im Ablagebereich zu handhaben und nach dem Bilden einer Portion auf einem Träger diesen mittels einer entsprechenden Handhabungseinrichtung an einen Transportmover zu übergeben. Die Handhabung kann beispielsweise mittels eines Roboters erfolgen.

Wie an anderer Stelle erwähnt, können einzelne Bahnabschnitte bewegbar sein, um verschiedene Funktionen zu realisieren. Derartige Funktionen können für einen Portionier-, Komplettier- und/oder Formatbildungsbetrieb erforderlich sein. Für die Realisierung einer Funktion kann vorgesehen sein, dass nicht nur ein Bahnabschnitt bewegbar ist, sondern dass zusätzlich der Mover im Bahnabschnitt bewegt und/oder der Träger relativ zum Läufer des Movers bewegt wird.

Ein Bahnabschnitt kann drehbar sein. Ein Bahnabschnitt kann in vertikaler Richtung bewegbar sein, beispielsweise zum Fallhöhenausgleich bei einer Stapel- oder Schindelbildung. Für eine Kreis- oder Oval-Ablage kann ein Bahnabschnitt gedreht und der Mover bzw. Träger längs des Bahnabschnitts bewegt werden.

Das Bahnsystem kann wenigstens zwei Teil-Bahnsysteme umfassen, wobei vorgesehen ist, dass während des Betriebs die Mover zwischen den Teil-Bahnsystemen nicht wechseln. Dies kann durch mechanische und/oder elektromagnetische Inkompatibilität zwischen den Teil-Bahnsystemen realisiert werden. Alternativ oder zusätzlich kann es die Steuereinrichtung sein, die dafür sorgt, dass die Mover jeweils in ihrem Teil-Bahnsystem verbleiben.

Die Teil-Bahnsysteme können mechanisch und/oder elektrotechnisch voneinander getrennt sein. Insbesondere können die Teil-Bahnsysteme voneinander unabhängig betrieben werden.

Zwischen den Teil-Bahnsystemen können ein oder mehrere Transferbereiche vorgesehen sein, die dazu ausgebildet sind, Träger von Movern des einen Teil-Bahnsystems an Mover des anderen Teil-Bahnsystems zu übergeben.

Ein Vorteil einer derartigen Aufteilung in mehrere Teil-Bahnsysteme kann darin bestehen, dass die Teil-Bahnsysteme mit unterschiedlichen Eigenschaften versehen werden können. So können beispielsweise die Teil-Bahnsysteme für Läufer unterschiedlicher Größe ausgelegt sein. Alternativ oder zusätzlich können sich die Läufer hinsichtlich ihrer elektrischen und/oder magnetischen Eigenschaften voneinander unterscheiden. Beispielsweise kann vorgesehen sein, dass ein Teil-Bahnsystem höhere Transportgeschwindigkeiten ermöglicht als ein anderes Teil-Bahnsystem.

Beispielsweise können die Mover eines ersten Teil-Bahnsystems vergleichsweise kleine Träger umfassen, wobei die Träger von Teil-Bahnsystem zu Teil-Bahnsystem immer größer werden. Dies kann beispielsweise dann nützlich sein, wenn im Bereich der einzelnen Teil-Bahnsysteme jeweils eine oder mehrere Teilportionen bereitgestellt werden und die Teilportionen schließlich gemeinsam eine dritte große Gesamtportion oder Zeilen mit mehreren Portionen bilden sollen. Es muss dann nicht jeder Mover mit einem für die Gesamtportion ausreichend großen Träger versehen werden und das gesamte Bahnsystem durchlaufen. Von Teil-Bahnsystem zu Teil-Bahnsystem kann gewissermaßen der Träger mit der Portion wachsen.

Des Weiteren ist es möglich, dass die Läufer von Teil-Bahnsystem zu Teil-Bahnsystem immer leistungsfähiger und insbesondere größer werden. Dies kann beispielsweise dann vorgesehen werden, wenn von Teil-Bahnsystem zu Teil-Bahnsystem die Anzahl von Portionen pro Mover zunehmen soll. Das in Transportrichtung gesehen letzte Teil-Bahnsystem kann beispielsweise eine vollständige Zeile oder Spalte oder einen vollständigen Formatsatz pro Mover transportieren, der nach und nach in den vorhergehenden Teil-Bahnsystemen gebildet wird.

Gemäß einem weiteren Aspekt der Erfindung können die Mover jeweils mit einer Einrichtung versehen sein, mittel welcher die Portionen auf dem Träger auch dann gehalten werden, wenn eine Auflagefläche der Träger nicht horizontal ausgerichtet ist. Insbesondere kann eine derartige Halteeinrichtung dazu ausgebildet sein, die Portionen auch dann am Mover zu halten, wenn die Mover über Kopf stehend bewegt werden. Es kann dann vorgesehen sein, dass die Halteeinrichtung mit einer Auslösefunktion versehen ist, die es ermöglicht, die Portion an einer jeweils gewünschten Stelle und/oder zu einem jeweils gewünschten Zeitpunkt freizugeben, insbesondere fallenzulassen.

Eine derartige Funktionalität kann dazu genutzt werden, Portionen direkt von einem Träger in eine Verpackung einzubringen.

Wenn hierbei die Transportmover zunächst in eine Überkopf-Lage gebracht und dann bei über Kopf orientierten Transportmovern die Portionen von der Halteeinrichtung freigegeben und somit fallengelassen werden, dann beinhaltet eine derartige Übergabe, z.B. an eine Verpackung, gleichzeitig ein Wenden der Portionen.

Bei dem nicht beanspruchten Verfahren zum Bewegen von Portionen kann insbesondere vorgesehen sein, dass die Portionen jeweils auf einem Träger eines Transportmovers gebildet werden, insbesondere durch Fallenlassen von Scheiben auf den Träger oder durch Aufnehmen von Teilportionen auf dem Träger.

Des Weiteren kann bei dem Verfahren vorgesehen sein, dass Portionen von einem Träger eines Transportmovers mittels einer am Träger vorgesehenen oder vom Träger gebildeten Fördereinrichtung aufgenommen werden.

Des Weiteren kann bei dem Verfahren vorgesehen sein, dass die Portionen jeweils unmittelbar von einem Träger eines Transportmovers in eine

Verpackung abgegeben werden, insbesondere mittels einer Fördereinrichtung des Transportmovers oder durch Fallenlassen vom Transportmover.

Ein genereller Aspekt des Verfahrens besteht in der Kooperation zwischen Movern, d.h. mehrere Mover im Bahnsystem können zusammenwirken. Dementsprechend kann bei dem Verfahren vorgesehen sein, dass zumindest zwei nicht permanent mechanisch miteinander verbundene Mover, insbesondere ein Transportmover und ein Funktionsmover oder zwei Transportmover, zusammenwirken, um eine Zusatzfunktion bereitzustellen. Hierbei kann folglich die individuelle Bewegbarkeit der Mover im Bahnsystem für ein vorteilhaftes Zusammenwirken genutzt werden. Eine an anderer Stelle erwähnte permanente mechanische Kopplung zweier Mover ist hierfür nicht erforderlich. Die Mover können mit geeigneten Mitteln versehen sein, die keine permanente mechanische Kopplung zwischen den Movern erfordern, gleichwohl aber durch eine geeignet aufeinander abgestimmte Relativbewegung der Mover im Bahnsystem zur Durchführung einer Zusatzfunktion genutzt werden können.

Hierbei kann vorgesehen sein, dass die Mover, insbesondere mittels ihrer Träger, zeitweise zusammenwirken und zeitweise unabhängig voneinander betrieben werden. Hierbei sind die Mover folglich sowohl als vollkommen voneinander unabhängige Mover, insbesondere Transportmover, einsetzbar, können vorübergehend aber auch kooperativ im Bahnsystem bewegt werden, um durch Zusammenwirken eine wie auch immer geartete Zusatzfunktion bereitzustellen.

Gemäß einem weiteren generellen Aspekt des Verfahrens ist vorgesehen, dass die Mover mit der Bahn zusammenwirken, um über die Transportmover hinaus eine oder mehrere Zusatzfunktionen bereitstellen zu können. Dementsprechend kann bei dem Verfahren vorgesehen sein, dass eine Relativbewegung zwischen wenigstens einem Bahnabschnitt und zumindest einem im Bahnabschnitt bewegten Mover insbesondere mechanisch, elektrisch und/oder magnetisch in eine Zusatzfunktion umgesetzt wird.

Bei dem erfindungsgemäßen System zum Verarbeiten von Lebensmittelprodukten kann vorgesehen sein, dass eine Aufnahme von Scheiben oder Portionen mittels der Transportmover mehrspurig durchführbar ist. Alternativ oder zusätzlich kann bei dem erfindungsgemäßen Verarbeitungssystem vorgesehen sein, dass eine Übergabe von Portionen an eine Verpackungsmaschine mehrspurig und insbesondere formatsatzweise durchführbar ist.

Des Weiteren kann bei dem erfindungsgemäßen System vorgesehen sein, dass für den Betrieb der Aufschneidevorrichtung Informationen, insbesondere betreffend die Portionen, berücksichtigbar sind, die beim Betrieb des Transportsystems, insbesondere an den Movern, beschaffbar sind, insbesondere zur Festlegung der Dicke der Scheiben und/oder der Anzahl von Scheiben in den Portionen. So können beispielsweise im Transportsystem die Portionen jeweils dahingehend überwacht werden, ob - gegebenenfalls innerhalb vorgegebener oder vorgebbarer Toleranzen - ein bestimmtes Portionsgewicht oder eine bestimmte Scheibenanzahl eingehalten ist. In Abhängigkeit von dem Überwachungsergebnis kann der Betrieb der Aufschneidevorrichtung erforderlichenfalls dahingehend geändert werden, dass die Scheibendicke oder die Scheibenanzahl pro Portion entsprechend verändert wird. Ein derartiges "Feedback" für die Aufschneidevorrichtung kann mit dem erfindungsgemäßen Individual-Transportsystem besonders vorteilhaft realisiert werden.

Weitere mögliche Ausführungsformen der erfindungsgemäßen Vorrichtung sind nachstehend angegeben:
Es kann vorgesehen sein, dass zumindest ein und insbesondere jeder Träger während des Betriebs zum Verbleib am Transportmover oder zur lediglich vorübergehenden Trennung vom Transportmover und anschließenden Weiterverwendung an dem oder einem anderen Transportmover ausgebildet ist.

Es kann vorgesehen sein, dass zumindest eine Funktionsstrecke als Aussortier- oder Ausschleusstrecke für Transportmover ausgebildet ist, die unabhängig von ihren Portionen eine vorgegebene oder vorgebbare, insbesondere Verschleiß und/oder Verschmutzung betreffende, Bedingung erfüllen oder nicht erfüllen, aus einer Normalstrecke herausführbar sind, insbesondere automatisch.

Es kann vorgesehen sein, dass das Bahnsystem wenigstens einen Bahnabschnitt umfasst, der eine eindimensionale Bahn mit einem ersten Punkt und einem zweiten Punkt umfasst, wobei die Bahn zwischen dem ersten Punkt und dem zweiten Punkt eine Trajektorie oder eine Linie im Raum beschreibt, die nicht ausschließlich geradlinig verläuft und die nicht in einer einzigen Ebene liegt.

Es kann vorgesehen sein, dass das Bahnsystem wenigstens eine Verzweigung aufweist, an der über einen oder mehrere eingangsseitig ankommende Bahnabschnitte einlaufende Transportmover jeweils in einem oder mehreren ausgangsseitig abgehenden Bahnabschnitten weiterlaufen können.

Es kann vorgesehen sein, dass an der Verzweigung jeder mögliche Weg für die Transportmover ausschließlich geradlinige Abschnitte umfasst.

Es kann vorgesehen sein, dass an der Verzweigung zur Auswahl eines jeweiligen Weges für die Transportmover zumindest ein Bahnabschnitt, insbesondere wenigstens ein intermediärer Bahnabschnitt, relativ zu den anderen Bahnabschnitten bewegbar, insbesondere um eine Achse verdrehbar, ist, die senkrecht zu einer Ebene verläuft, in welcher die Bahnabschnitte der Verzweigung liegen.

Es kann vorgesehen sein, dass das Bahnsystem wenigstens einen Bahnabschnitt umfasst, der als Ganzes verstellbar ist, insbesondere unter zumindest vorübergehender Unterbrechung der jeweiligen Bahn.

Es kann vorgesehen sein, dass mehrere, insbesondere parallel zueinander verlaufende, Bahnabschnitte unabhängig voneinander oder gemeinsam verstellbar sind.

Es kann vorgesehen sein, dass die Verstellbewegung des Bahnabschnitts eine lineare Translationsbewegung umfasst oder ausschließlich eine lineare Translationsbewegung ist

Es kann vorgesehen sein, dass der Bahnabschnitt unter Beibehaltung seiner Orientierung im Raum verstellbar ist.

Es kann vorgesehen sein, dass die Verstellbewegung des Bahnabschnitts eine Schwenkbewegung umfasst oder ausschließlich eine Schwenkbewegung ist, insbesondere um eine zumindest im Wesentlichen horizontale, quer zur Transportrichtung verlaufende Schwenkachse.

Es kann vorgesehen sein, dass zumindest ein beweglicher Bahnabschnitt mit einem verstellbaren Bahnabschnitt gekoppelt und von dem verstellbaren Bahnabschnitt mitnehmbar ist.

Es kann vorgesehen sein, dass in zumindest einem Streckenabschnitt des Bahnsystems eine Bahn für die Transportmover und wenigstens eine der Bahn zugeordnete, insbesondere parallel zu der Bahn verlaufende Hilfsbahn vorgesehen ist, in der zumindest ein Funktionsmover bewegbar ist.

Es kann vorgesehen sein, dass zumindest ein Funktionsmover als Liftmover ausgebildet ist, dem ein zumindest im Wesentlichen vertikal verlaufender Bahnabschnitt zugeordnet ist, in welchem der Liftmover bewegbar ist.

Es kann vorgesehen sein, dass zumindest ein Transportmover und ein in dem Bahnsystem bewegbarer Funktionsmover, insbesondere über ihre Läufer, miteinander lösbar koppelbar sind.

Es kann vorgesehen sein, dass das oder jedes Transportmittel einen Bahnabschnitt umfasst, in welchem zumindest ein Funktionsmover bewegbar ist.

Es kann vorgesehen sein, dass die Steuereinrichtung dazu ausgebildet ist, beim Betrieb des Puffers die Verweilzeiten von Portionen im Bahnsystem zu berücksichtigen.

Es kann vorgesehen sein, dass eine Verzweigung des Bahnsystems, an der über einen oder mehrere eingangsseitig ankommende Bahnabschnitte einlaufende Transportmover jeweils in einem oder mehreren ausgangsseitig abgehenden Bahnabschnitten weiterlaufen können, dazu ausgebildet ist, von einem n-Spurbetrieb auf einen m-Spurbetrieb zu wechseln, wobei n ankommende und m abgehende Bahnabschnitte vorhanden sind und n, m ≥ 1 und n ≠ m oder n = m gilt.

Es kann vorgesehen sein, dass das Bahnsystem wenigstens einen Funktionsbereich umfasst, an welchem mehrere, insbesondere mehrspurig einlaufende, Transportmover gruppierbar sind.

Es kann vorgesehen sein, dass in zumindest einem Funktionsbereich des Bahnsystems zumindest zwei Transportmover, die in einer Spur hintereinander oder in benachbarten Spuren nebeneinander laufen, mit ihren Portionen entsprechend einer vorgegebenen oder vorgebbaren Bedingung relativ zueinander ausrichtbar sind.

Es kann vorgesehen sein, dass das Bahnsystem wenigstens einen Funktionsbereich mit Mehrspurbetrieb umfasst, in welchem der Spurabstand zwischen parallel zueinander verlaufenden Bahnabschnitten veränderbar ist.

Es kann vorgesehen sein, dass der Spurabstand durch Verstellen von Bahnabschnitten oder mittels einer Verzweigung, an der über mehrere eingangsseitig ankommende Bahnabschnitte einlaufende Transportmover jeweils in mehreren ausgangsseitig abgehenden Bahnabschnitten weiterlaufen können, veränderbar ist.

Es kann vorgesehen sein, dass der Funktionsbereich wenigstens einen Bahnabschnitt zur vorübergehenden Aufnahme wenigstens eines zu drehenden oder zu wendenden Transportmovers umfasst.

Es kann vorgesehen sein, dass der Funktionsbereich zumindest eine offene oder geschlossene gekrümmte, insbesondere kreisförmige, Bahn sowie wenigstens einen, insbesondere zwei zusammenwirkende, Dreh- oder Wendemover umfasst, die in der gekrümmten Bahn bewegbar sind.

Es kann vorgesehen sein, dass die Reinigungseinrichtung ein Reinigungsbad umfasst, relativ zu welchem die Bahn derart geführt ist, dass die entlang der Bahn bewegten Transportmover zumindest teilweise in das Reinigungsbad eintauchen, insbesondere jeweils mit ihrem Träger.

Es kann vorgesehen sein, dass die Reinigungseinrichtung dazu ausgebildet ist, die Transportmover zumindest bereichsweise mit einem Reinigungsmittel, insbesondere mit einem Fluid, mit elektromagnetischer Strahlung und/oder mit einem Plasma zu beaufschlagen, und/oder einer Hygienebehandlung zu unterziehen, insbesondere auf eine zum Abtöten von Organismen ausreichende Temperatur aufzuheizen.

Es kann vorgesehen sein, dass wenigstens einer Strecke des Bahnsystems, insbesondere einer zusätzlich zu einer Normalstrecke vorgesehenen Funktionsstrecke, bevorzugt einer Rückführstrecke, zumindest eine Konditioniereinrichtung für die Transportmover zugeordnet ist, mittels welcher die Transportmover zumindest bereichsweise einer Konditionierbehandlung unterziehbar sind.

Es kann vorgesehen sein, dass zumindest für einen Transportmover wenigstens eine Information ermittelbar und insbesondere von der Steuereinrichtung berücksichtigbar ist, welche die Portion oder den Transportmover, insbesondere dessen Träger oder Läufer, betrifft.

Es kann vorgesehen sein, dass zumindest ein Transportmover mit wenigstens einem Datenspeicher versehen und dazu ausgebildet ist, Daten zumindest temporär zu speichern.

Es kann vorgesehen sein, dass zumindest ein Transportmover, insbesondere für einen Datentransfer, zu einer, insbesondere von der Steuereinrichtung unabhängigen, Kommunikation mit dem Bahnsystem ausgebildet ist.

Weitere mögliche Ausführungsformen des Verfahrens sind nachstehend angegeben:
Es kann vorgesehen sein, dass Portionen von einem Träger eines Transportmovers mittels einer am Träger vorgesehenen oder vom Träger gebildeten Fördereinrichtung aufgenommen werden.

Es kann vorgesehen sein, dass zumindest zwei nicht permanent mechanisch miteinander verbundene Mover, insbesondere ein Transportmover und ein Funktionsmover oder zwei Transportmover, zusammenwirken, um eine Zusatzfunktion bereitzustellen.

Weitere mögliche Ausführungsformen des erfindungsgemäßen Systems sind nachstehend angegeben:
Es kann vorgesehen sein, dass zumindest ein Bahnabschnitt des Transportsystems relativ zu der Aufschneidevorrichtung derart angeordnet ist, dass abgetrennte Scheiben jeweils auf den Träger eines in dem Bahnabschnitt befindlichen Transportmovers fallen können.

Es kann vorgesehen sein, dass dem Transportsystem eine Verpackungsmaschine nachgeordnet ist, an welche die Portionen direkt oder mittels einer Handhabungseinrichtung, insbesondere mittels eines Roboters, übergebbar sind.

Es kann vorgesehen sein, dass eine Aufnahme von Scheiben oder Portionen mittels der Transportmover mehrspurig durchführbar ist, und/oder dass eine Übergabe von Portionen an eine Verpackungsmaschine mehrspurig und insbesondere formatsatzweise durchführbar ist

Es kann vorgesehen sein, dass für den Betrieb der Aufschneidevorrichtung Informationen, insbesondere betreffend die Portionen, berücksichtigbar sind, die beim Betrieb des Transportsystems, insbesondere an den Transportmovern, beschaffbar sind, insbesondere zur Festlegung der Dicke der Scheiben und/oder der Anzahl von Scheiben in den Portionen.

Alle vorstehend und nachstehend erwähnten sowie in der Zeichnung dargestellten Aspekte und Einzelmerkmale der Erfindung können miteinander kombiniert werden, soweit dies nicht zu Widersprüchen führt. Aspekte und Einzelmerkmale, die in Bezug auf einen Mover erwähnt sind, können grundsätzlich für alle Mover oder für eine beliebige Anzahl von Movern vorgesehen sein. In Bezug auf einen bestimmten Mover-Typ erwähnte Aspekte oder Einzelmerkmale können grundsätzlich für alle Mover-Typen vorgesehen sein, soweit dies nicht zu Widersprüchen führt. Für alle Aspekte der vorliegenden Offenbarung wird auch jeweils unabhängig Schutz beansprucht.

Die Erfindung wird im Folgenden beispielhaft unter Bezugnahme auf die Zeichnung beschrieben. Es zeigen:
- Fig. 1: einen in einem Bahnabschnitt angeordneten Mover gemäß einer Ausführungsform der Erfindung,
- Fig. 2 bis 5: jeweils eine schematische Draufsicht auf eine mögliche Ausgestaltung einer erfindungsgemäßen Gesamtanlage,
- Fig. 6: eine Draufsicht auf einen als Verzweigung ausgebildeten Funktionsbereich eines erfindungsgemäßen Bahnsystems,
- Fig. 7: eine Draufsicht auf einen weiteren Funktionsbereich eines erfindungsgemäßen Bahnsystems mit quer verfahrbaren Movern,
- Fig. 8: eine Seitenansicht eines Teils des Funktionsbereiches von Fig. 7,
- Fig. 9: eine schematische Draufsicht auf einen Teil eines erfindungsgemäßen Bahnsystems mit einer vorübergehenden Zusammenführung mehrerer Bahnen,
- Fig. 10: eine schematische Seitenansicht eines Teils einer erfindungsgemäßen Rückführ- und/oder Reinigungsstrecke für über Kopf orientierte Mover,
- Fig. 11: eine schematische Seitenansicht eines erfindungsgemäßen Bahnabschnitts zur Veranschaulichung mehrerer Möglichkeiten zum Wiegen von Portionen,
- Fig. 12: eine schematische Draufsicht auf erfindungsgemäße Mover mit relativ zueinander bewegbaren Trägersegmenten,
- Fig. 13: eine schematische Seitenansicht eines Funktionsbereiches eines erfindungsgemäßen Bahnsystems mit verschwenkbaren Bahnabschnitten,
- Fig. 14: eine schematische Seitenansicht eines erfindungsgemäßen Funktionsbereiches zum vertikalen Bewegen von Movern,
- Fig. 15: eine schematische Ansicht in Transportrichtung einer erfindungsgemäßen Wendestation zum Wenden von Portionen,
- Fig. 16: eine schematische Seitenansicht eines erfindungsgemäßen Funktionsbereiches zum vertikalen Puffern von Portionen,
- Fig. 17: eine schematische Seitenansicht einer erfindungsgemäßen Verzweigung mit Bahnabschnitten vom C-Typ,
- Fig. 18: eine schematische Ansicht in Transportrichtung eines in einer Bahn vom C-Typ angeordneten Movers gemäß der Erfindung,
- Fig. 19: eine schematische Draufsicht auf einen erfindungsgemäßen Funktionsbereich des Bahnsystems für einen Übergang von Movern zwischen unterschiedlichen Bahn-Typen,
- Fig. 20 bis 22: jeweils einen Mover mit Hybridläufer in unterschiedlichen Abschnitten des Funktionsbereiches von Fig. 19,
- Fig. 23 und 24: jeweils in einer schematischen Draufsicht das erfindungsgemäße Zusammenwirken eines Hilfsmovers und eines Transportmovers während der Bewegung entlang einer Bahn,
- Fig. 25 bis 27: das Abnehmen einer Portion von einem Mover mittels eines Roboters gemäß der Erfindung,
- Fig. 28 bis 30: eine weitere erfindungsgemäße Variante eines Abnehmens einer Portion von einem Mover,
- Fig. 31: in einer schematischen Seitenansicht die Übergabe einer Portion zwischen zwei in einer Bahn angeordneten Movern gemäß der Erfindung,
- Fig. 32 und 33: ein erfindungsgemäßes Zusammenwirken eines Movers und einer nicht zum Bahnsystem gehörenden Einrichtung zur Übernahme von Portionen,
- Fig. 34: in einer schematischen Draufsicht alternative Möglichkeiten für die Übernahme von Portionen von einem Mover gemäß der Erfindung,
- Fig. 35: in einer schematischen Seitenansicht das erfindungsgemäße Bilden einer Portion aus abgetrennten Produktscheiben unmittelbar auf einem Mover,
- Fig. 36: eine schematische Draufsicht auf den Portionierbereich gemäß Fig. 35,
- Fig. 37: in einer schematischen Seitenansicht eine erfindungsgemäße Möglichkeit zur Übergabe von Portionen von einem Mover unmittelbar in eine Verpackung, und
- Fig. 38: in einer schematischen Seitenansicht eine weitere erfindungsgemäße Möglichkeit zur Übergabe von Portionen unmittelbar von einem Mover in eine Verpackung.

Die im Folgenden beschriebenen Ausführungsbeispiele der Erfindung basieren auf einem Antriebsprinzip für Mover in einem Bahnsystem durch lineare Synchronmotoren (LSM-Antrieb), wie es im Einleitungsteil unter Bezugnahme auf das Transportsystem der Firma MagneMotion Inc. beispielhaft erläutert ist. Beliebig viele Mover in einem beliebig komplexen Bahnsystem können mittels einer Steuereinrichtung individuell, d.h. unabhängig voneinander, im Bahnsystem bewegt und mittels der Steuereinrichtung lokalisiert und identifiziert werden. Ferner können die Mover im Bahnsystem mit extrem hoher Genauigkeit bewegt und positioniert werden. Die Bewegungsgeschwindigkeiten sowie Beschleunigungen und Verzögerungen für die Mover können ebenfalls beliebig und individuell gewählt und vorgenommen werden.

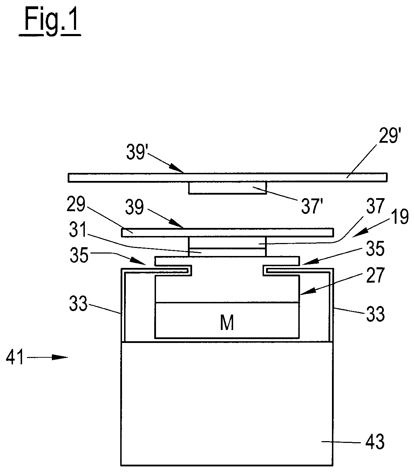

Einen Querschnitt, also einen Schnitt senkrecht zur Transportrichtung, durch eine Bahn mit darin angeordnetem Mover zeigt Fig. 1. Ein Bahnabschnitt 41 des Bahnsystems umfasst eine als Stator 43 des LSM-Antriebs dienende Basis, die auch als mechanische Basis zur Anbringung des Bahnabschnitts 41 beispielsweise an einem Unterbau bzw. an wie auch immer gearteten Gestellen oder Halterungen dient.

In Fig. 1 dargestellt ist ein Bahnabschnitt vom sogenannten U-Typ, d.h. der Bahnabschnitt ist nach oben offen und die Mover 19 befinden sich oberhalb des Stators 43.

Als Führung für den Mover 19 dienen hier als Winkelbleche ausgeführte Führungsschienen 33, die in Schlitzen 35 laufen, welche an den linken und rechten Seitenflächen eines Läufers 27 des Movers 19 ausgebildet sind. Die Führungen des Bahnsystems für die Mover 19 können aber auch anders ausgestaltet sein.

Die Führung des Bahnsystems sorgt für eine definierte Relativposition des Läufers 27 bezüglich des Stators 43. Insbesondere wird hierdurch erreicht, dass eine Permanentmagnetanordnung M des Läufers 27 einen exakt definierten Abstand zum Stator 43 einhält.

Gemäß dem LSM-Antrieb ist der mit der Permanentmagnetanordnung M versehene Läufer 27 durch entsprechende Ansteuerung des Stators 43 mittels einer hier nicht dargestellten Steuereinrichtung in Transportrichtung längs des Stators 43 und somit in der den Stator 43 umfassenden Bahn bewegbar. Während dieser Bewegung wird der Läufer 27 durch die Führungsschienen 33 geführt.

Auf dem Läufer 27 ist ein Träger 29 angeordnet, der eine beispielsweise ebene Auflagefläche 39 bereitstellt, um Lebensmittelportionen zu transportieren.

Der Träger 29 kann mit dem Läufer 27 fest verbunden sein. In einer alternativen Ausgestaltung ist der Träger 29 am Läufer 27 lösbar angebracht.

Zwischen Träger 29 und Läufer 27 ein grundsätzlich beliebig ausgestalteter Halter 31 vorgesehen. Bei lösbarer Anbringung des Trägers 29 am Läufer 27 kann der Halter 31 als Bestandteil einer Kupplung ausgebildet sein bzw. einen Kupplungsabschnitt bilden, der mit einem entsprechenden Kupplungsabschnitt 37 des Trägers 29 zusammenwirkt. Das Zusammenwirken zwischen Läufer 27 und Halter 31 bzw. zwischen Halter 31 und Träger 29 kann grundsätzlich auf beliebige Art und Weise erfolgen. Es kann eine rein mechanische Verbindung vorgesehen sein. Es ist auch möglich, dass der Träger 29 am Halter 31 bzw. der Halter 31 am Läufer 27 magnetisch gehalten wird. Der Halter 31 kann auch dazu ausgebildet sein, Relativbewegungen des Trägers 29 relativ zum Läufer 27 zuzulassen, beispielsweise ein Verdrehen um eine vertikale Achse, um auf diese Weise Portionen drehen bzw. ausrichten zu können.

Der Träger 29 kann auch unmittelbar mit dem Läufer 27 verbunden sein. Der Halter 31 zwischen Träger 29 und Läufer 27 wird dann durch die zusammenwirkenden Bereiche bzw. Kupplungsabschnitte von Träger 29 und Läufer 27 gebildet.

Wie in Fig. 1 angedeutet, ermöglicht eine lösbare Anbringung des Trägers 29 am Halter 31 eine Verwendung des Läufers 27 mit unterschiedlichen, beispielsweise unterschiedlich großen Trägern. So zeigt Fig. 1 rein beispielhaft einen mit einem Kupplungsabschnitt 37' versehenen Träger 29', dessen Auflagefläche 39' größer ist als jene des in Fig. 1 am Läufer 27 angebrachten Trägers 29.

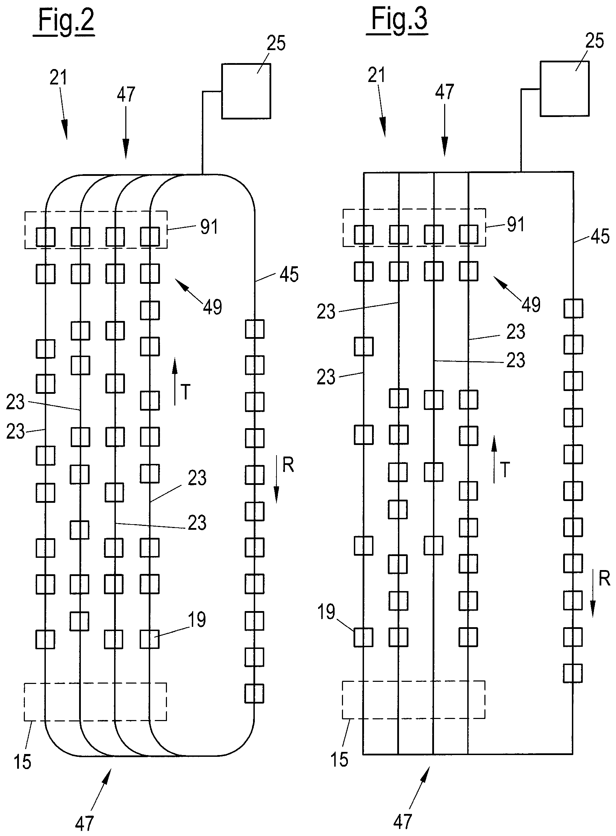

Eine erfindungsgemäße Gesamtanlage, d.h. ein erfindungsgemäßes System, in welchem die erfindungsgemäße Bewegungsvorrichtung bzw. das erfindungsgemäße Transportsystem einschließlich des Bahnsystems lediglich einen - wenn auch wesentlichen - Bestandteil darstellt, ist in den Fig. 2 bis 5 in unterschiedlichen möglichen Ausgestaltungen dargestellt, wobei die Darstellung jeweils zur Veranschaulichung der erfindungsgemäßen Möglichkeiten schematisiert und vereinfacht erfolgt.

Die Systeme umfassen jeweils einen zu einem Mehrspurbetrieb ausgebildeten Slicer 15, mit welchem mehrere Lebensmittelprodukte wie beispielsweise Wurst- oder Käselaibe gleichzeitig mittels eines planetarisch und/oder rotierend umlaufenden Kreis- oder Sichelmessers mit hoher Geschwindigkeit in Scheiben geschnitten werden können. Die Schnittgeschwindigkeit liegt je nach konkreter Ausgestaltung des Slicers 15 zwischen mehreren einhundert und einigen tausend Scheiben pro Minute.

Aus den abgetrennten Scheiben werden in der Regel Portionen gebildet, die mehrere abgetrennte Scheiben umfassen.

Die dargestellten Systeme umfassen jeweils eine hier nicht näher erläuterte Verpackungsmaschine 91, an der die aus den abgetrennten Scheiben gebildeten Portionen verpackt werden. Hierfür ist es häufig erforderlich, die gebildeten Portionen auf ihrem Weg vom Slicer 15 zur Verpackungsmaschine 91 in vorgegebenen Formaten 49 oder Formatsätzen zusammenzufassen, d.h. in matrixartigen Anordnungen, in denen jeweils in mehreren nebeneinanderliegenden Spuren eine oder mehrere Portionen hintereinander angeordnet sind. Innerhalb eines jeweiligen Formates 49 müssen die Portionen in der Regel eine bestimmte Relativausrichtung zueinander aufweisen sowie mit vorgegebenen Abständen untereinander sowohl in Querrichtung als auch in Transportrichtung T angeordnet sein, damit die Portionen formatsatzweise an die jeweils nachgeordnete Verpackungsmaschine 91 abgegeben werden können.

Ein solches formatsatzweises Verpacken ist aber nicht zwingend erforderlich. Es ist beispielsweise auch möglich, Portionen mit Hilfe von Robotern von dem Transportsystem abzunehmen und in Verpackungen einzulegen.

Gleichwohl besteht in der Praxis eine Aufgabe eines zwischen einem Slicer 15 und einer Verpackungsmaschine 91 angeordneten Transportsystems für Lebensmittelportionen darin, in vielfältiger Weise auf diese Portionen einzuwirken. Dabei geht es nicht nur um eine eventuell erforderliche Formatsatzbildung, sondern beispielsweise auch um das Wiegen von Portionen und um das Aussortieren von für das Verpacken ungeeigneten Portionen.

In den Bahnsystemen 21 bewegen sich jeweils viele hier jeweils nur schematisch als Quadrate angedeutete Mover 19, von denen zumindest einige und insbesondere die meisten als Transportmover zum Transportieren von Lebensmittelportionen ausgebildet sind, wie sie vorstehend in Verbindung mit Fig. 1 erläutert sind.

Der Betrieb des Gesamtsystems wird jeweils von einer Steuereinrichtung 25 überwacht und gesteuert, die insbesondere die individuellen Bewegungen der Mover 19 in den einzelnen Bahnen 23 des Bahnsystems 21 steuert.

Anstelle einer Verpackungsmaschine 91 können auch nur ein Teil einer solchen Maschine oder eine oder mehrere Verpackungen oder Teile davon vorgesehen sein, in welche die mittels der Mover 19 herantransportierten Portionen abgelegt werden.

In dem Ausführungsbeispiel der Fig. 2 und 3 ist das erfindungsgemäße Transportsystem zu einem Vierspurbetrieb ausgebildet. Zwischen dem Slicer 15 und der Verpackungsmaschine 91 erstrecken sich vier parallel verlaufende Bahnen 23, die jeweils eine Vielzahl von Bahnabschnitten 41 umfassen, wie sie in Verbindung mit Fig. 1 erläutert sind.

Unter anderem sorgt das erfindungsgemäße Transportsystem dafür, dass vor der Verpackungsmaschine 91 die die zu verpackenden Portionen tragenden Mover 19 in einem Format 49 vorliegen, das eine Zeile aus - entsprechend der Spuranzahl dieses Gesamtsystems - vier nebeneinander angeordneten Portionen umfasst.

Im Anschluss an die Verpackungsmaschine werden die vier Bahnen 23 zu einer einzigen Bahn zusammengeführt, die eine Rückführstrecke 45 bildet, in welcher die nunmehr leeren Transportmover 19 in einer der Transportrichtung T entgegengesetzt gerichteten Rückführrichtung R zum Slicer 15 zurückgeführt werden. Im Bereich des Slicers 15 verzweigt die Rückführstrecke 45 wieder in einen vierspurigen Bereich.

Diese Übergänge im Bahnsystem 21 werden von speziellen Funktionsbereichen übernommen, die hier auch als Verzweigungen 47 bezeichnet werden.

Im Ausführungsbeispiel der Fig. 2 umfassen die Verzweigungen 47 gekrümmte Bahnabschnitte, also Kurvenabschnitte, in welchen die Mover 19 jeweils entlang einer gekrümmten Bahn bewegt werden.

Aus Fig. 3 geht hervor, dass das erfindungsgemäße Bahnsystem auch ohne derartige Kurvenabschnitte realisiert werden kann. Richtungswechsel oder Verzweigungen 47 umfassen hier jeweils einen oder mehrere Bahnabschnitte, an denen die Mover 19 jeweils einen Richtungswechsel von 90° vollziehen, d.h. rechtwinklig bewegt werden.

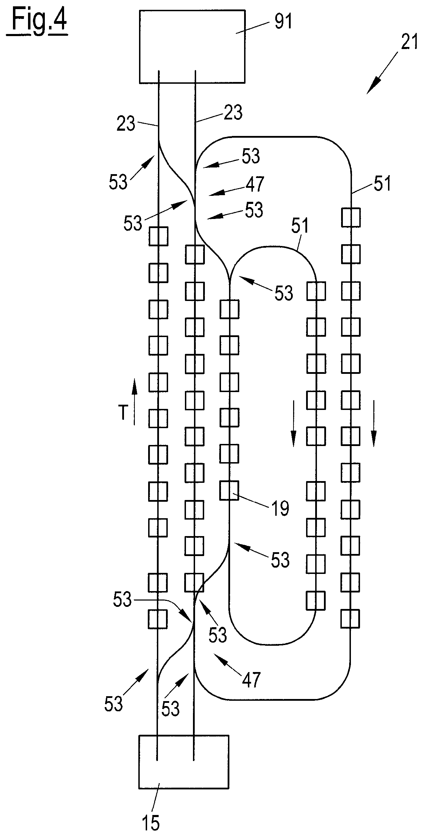

Während somit die Fig. 2 und 3 zusätzlich zu im Wesentlichen dem Transport der Portionen dienenden Normalstrecken zwischen Slicer 15 und Verpackungsmaschine 91 eine spezielle Funktionsstrecke bzw. einen speziellen Funktionsbereich im Bahnsystem 21 zeigen, der zum Rückführen der Mover 19 dient, zeigt Fig. 4 zusätzlich zu zwei normalen Transportstrecken zwei Pufferstrecken 51, die wie die Rückführstrecken gemäß Fig. 2 und 3 in einer gemeinsamen horizontalen Ebene mit den Transportstrecken liegen. Fig. 4 zeigt somit ein Anwendungsbeispiel der Erfindung mit einem sogenannten Horizontalpuffer. In diesen Puffer hinein und aus dem Puffer hinaus können die Mover über Verzweigungen 47 gelangen, die jeweils eine Mehrzahl von einzelnen Weichenabschnitten 53 umfassen können.

Wie es grundsätzlich von herkömmlichen Förderbandsystemen zwischen Slicern und Verpackungsmaschinen bekannt ist, können derartige Puffer dazu dienen, einen Ausgleich zwischen einer vergleichsweise hohen Arbeitsgeschwindigkeit eines Slicers 15 einerseits und einer relativ dazu langsamen Verarbeitungsgeschwindigkeit einer Verpackungsmaschine 91 zu schaffen.

Das erfindungsgemäße Transportprinzip mittels eines Bahnsystems ermöglicht es darüber hinaus, eine hohe Funktionalitätsdichte zu erzielen. Rein beispielhaft sei hierzu anhand von Fig. 4 erwähnt, dass zumindest eine der Pufferstrecken 51 auch als Rückführstrecke genutzt werden kann, wenn eine zusätzliche Strecke zwischen zumindest einer der Pufferstrecken 51 und dem Slicer 15 geschaffen wird.

Durch das erfindungsgemäße Individualbewegungsprinzip kommt es außerdem zumindest hinsichtlich mancher Funktionen nicht auf eine konkrete Ausgestaltung der Mover oder der Bahnen an, sondern auf die mittels der Steuereinrichtung realisierte Nutzung einer jeweiligen Bahn. So kann beispielsweise für einen Mover 19 in einer Bahn diese als Pufferstrecke dienen, während ein unmittelbar nachfolgender Mover mittels derselben Bahn zum Slicer zurückgeführt wird. Über die Funktion entscheidet somit nicht die konkrete Ausgestaltung der Bahn oder des Movers, sondern die Steuereinrichtung und somit der Anwender.

Da das erfindungsgemäße Bahnsystem auf einfache Weise nach Art eines Baukastens ausgeführt sein kann, können folglich vorhandene Strecken einfach umkonfiguriert bzw. neue Strecken einfach und schnell konzipiert werden. Das erfindungsgemäße Bahnsystem ist folglich wesentlich flexibler und vielseitiger als herkömmliche Förderbandsysteme.

In dem System gemäß Fig. 4 erfolgt der Transport von Portionen zwischen Slicer 15 und Verpackungsmaschine 91 zweispurig. Die Weichenabschnitte 53 der Verzweigungen 47 ermöglichen es, dass Mover 19 aus beiden Spuren in die Pufferstrecken 51 gelangen und von den Pufferstrecken 51 in beide Spuren gelangen können.

Die in Fig. 4 dritte Strecke von links kann beispielsweise auch zum Überholen von in den beiden linken Strecken befindlichen Movern 19 dienen.

Generell können erfindungsgemäß einzelne Strecken oder Streckenabschnitte individuell für die einzelnen Mover 19 unterschiedliche Funktionen besitzen, d.h. eine Strecke kann gleichzeitig Pufferstrecke für einen Mover sein, als Überholstrecke für einen anderen Mover dienen und von wieder einem anderen Mover als normale Transportstrecke genutzt werden.

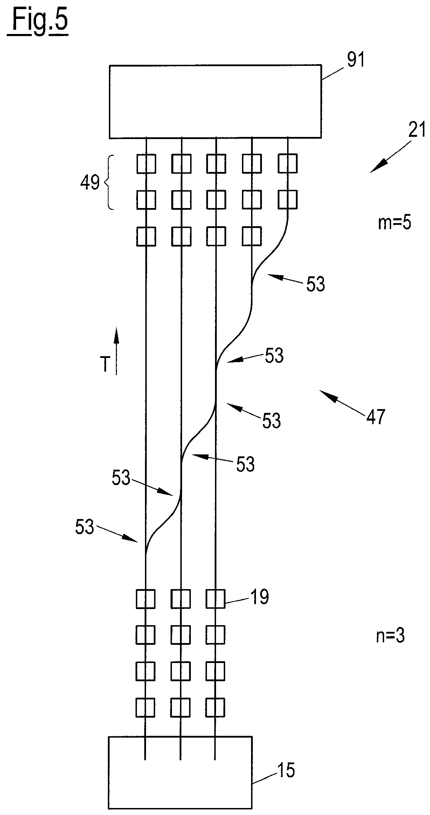

Fig. 5 zeigt, dass es mit dem erfindungsgemäßen Transportsystem auf einfache Weise möglich ist, die Anzahl der Spuren auf dem Weg zwischen Slicer 15 und Verpackungsmaschine 91 zu verändern. Bei dem hier dargestellten Beispiel wird ein Übergang von einem n-Spurbetrieb mit n = 3 auf einen m-Spurbetrieb mit m = 5 erzielt, und zwar mit Hilfe von hintereinander angeordneten Weichenabschnitten 53, die gemeinsam eine Verzweigung 47 bilden, welche eine gewisse Länge des Bahnsystems 21 in Transportrichtung T erfordert.

Des Weiteren veranschaulicht Fig. 5 die Bildung von Formaten 49, die jeweils zwei Zeilen und fünf Reihen umfassen, d.h. jedes Format 49 ist ein 2 x 5-Array aus insgesamt zehn Portionen, deren Relativanordnung durch die Anordnung der zehn Mover in den fünf Bahnen vor der Verpackungsmaschine 91 erzielt wird.

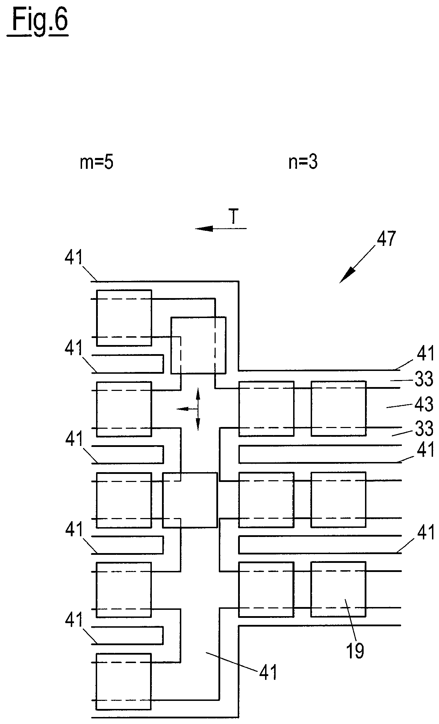

Eine andere Möglichkeit zur Veränderung der Spuranzahl zeigt das Ausführungsbeispiel der Fig. 6. In Fig. 6 ist eine Verzweigung 47 dargestellt, die im Vergleich zu der Ausgestaltung gemäß Fig. 5 eine geringere Länge des Bahnsystems in Transportrichtung T erfordert und bei der die Mover 19 entweder geradeaus fahren oder einen oder mehrere 90°-Richtungswechsel vornehmen, wie es an einem der Kreuzungspunkte in Fig. 6 durch die Pfeile angedeutet ist.

Bei dieser Verzweigung 47 gehen n = 3 einlaufende Bahnabschnitte 41 in m = 5 auslaufende Bahnabschnitte 41 über, die jeweils parallel zueinander und parallel zu den parallel einlaufenden Bahnabschnitten 41 verlaufen, wobei dieser Übergang über einen sich senkrecht zur Transportrichtung T erstreckenden Bahnabschnitt 41 erfolgt. Insbesondere das erwähnte LSM-Antriebsprinzip ist ohne weiteres dazu in der Lage, die Läufer der Mover 19 von einem Bahnabschnitt an einen zu diesem quer verlaufenden anschließenden Bahnabschnitt zu übergeben. Diese Verzweigung 47 benötigt keine beweglichen Teile.

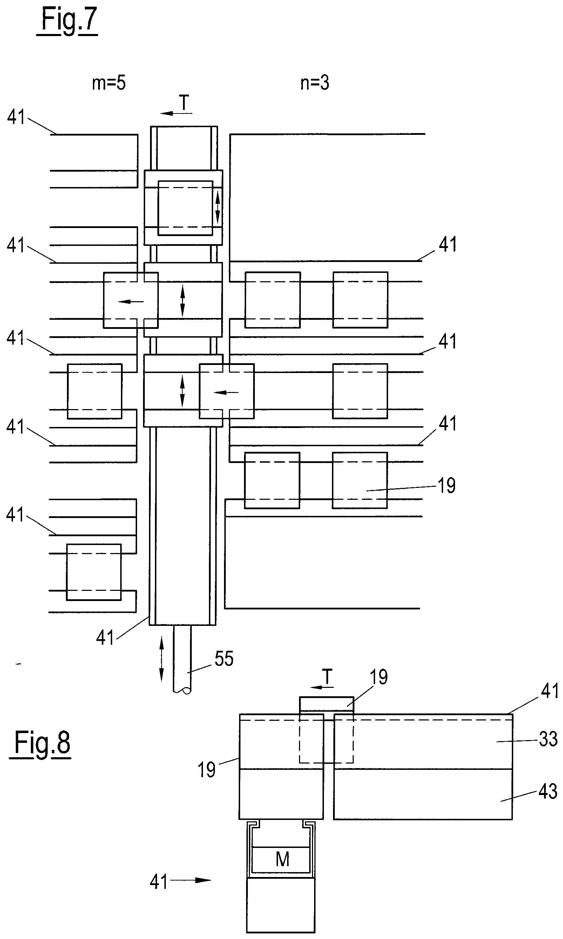

Fig. 7 zeigt gleichzeitig zwei alternative Möglichkeiten, um von einem Betrieb mit n = 3 Spuren auf einen Betrieb mit m = 5 Spuren zu wechseln. Bei beiden Varianten gehen folglich wiederum drei parallel einlaufende Bahnabschnitte 41 nicht unmittelbar in fünf parallel auslaufende Bahnabschnitte 41 über.

Im Übergangsbereich kann gemäß einer ersten Variante ein sich quer erstreckender Bahnabschnitt 41 angeordnet sein, in den - anders als im Ausführungsbeispiel der Fig. 6 - die einlaufenden Mover 19 nicht unmittelbar, sondern auf Funktionsmover 19 bewegt werden, die quer zur Transportrichtung T lediglich innerhalb des Quer-Bahnabschnitts 41 bewegt werden. Mit anderen Worten werden die Transportmover 19 gewissermaßen nach dem Huckepack-Prinzip quer zur Transportrichtung bewegt und der jeweils gewünschten auslaufenden Spur durch entsprechendes Querverfahren der "Carrier"- oder "Shuttle"-Mover 19 zugewiesen.

Diese Variante ist in der schematischen Schnittansicht der Fig. 8 dargestellt. Der zur Aufnahme von in Transportrichtung T einlaufenden Transportmovern 19 ausgebildete "Carrier"-Mover 19 ist in gleicher Weise wie die Transportmover 19, insbesondere also nach dem LSM-Antriebsprinzip, im quer zur Transportrichtung T verlaufenden Bahnabschnitt 41 mittels der Steuereinrichtung bewegbar.

Alternativ kann für das Querverfahren der einlaufenden Transportmover 19 auf bewegbare "Carrier" verzichtet werden. Anstelle des Bahnabschnitts 41 kann eine passive Aufnahmeeinrichtung vorgesehen sein, in welche die einlaufenden Transportmover 19 einfahren können und die an einer zentralen Halterung 55 angebracht und durch Verfahren dieser Halterung 55 quer zur Transportrichtung T bewegt werden kann, um auf diese Weise die aufgenommenen Transportmover 19 der jeweils gewünschten abgehenden Spur zuzuweisen.

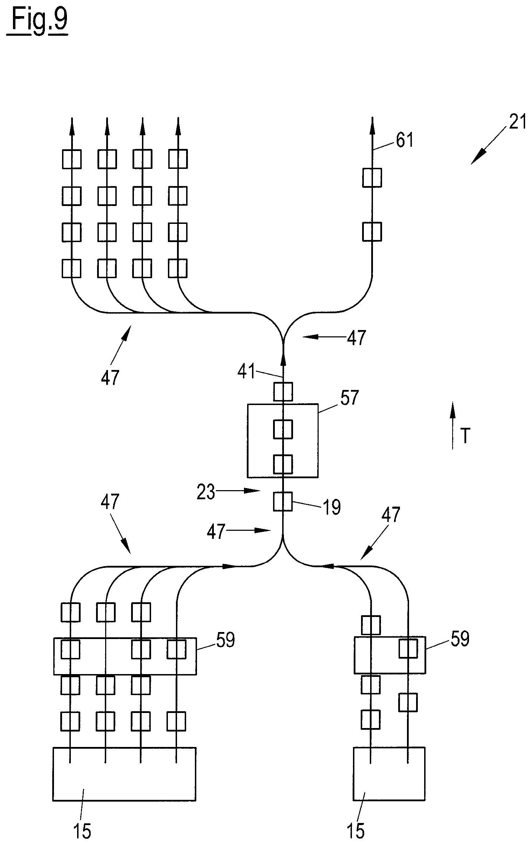

Fig. 9 zeigt einen weiteren speziellen Funktionsbereich eines erfindungsgemäßen Bahnsystems 21, durch den eine oder mehrere Funktionen bereitgestellt werden können, die bei der erfindungsgemäßen Verwendung des Individual-Transportsystems für das Transportieren und die Handhabung von Lebensmittelportionen besonders einfach und vorteilhaft realisiert werden können.

Bei diesem Funktionsbereich ist vorgesehen, dass mehrere Bahnen vorübergehend zusammengeführt werden, und zwar hier insbesondere auf genau eine einen Bahnabschnitt 41 umfassende Bahn 23, an der eine nachstehend näher erläuterte Zusatzfunktion ausgeführt werden kann. Durch dieses Zusammenführen braucht die Zusatzfunktion nicht an jeder der einzelnen Bahnen vorgenommen zu werden. Insbesondere reicht es aus, wenn eine hierzu speziell ausgebildete Funktionsstation 57 ausschließlich an dem durch diese Zusammenführung gewissermaßen gebildeten "Nadelöhr" vorgesehen wird.

Rein beispielhaft ist in Fig. 9 außerdem dargestellt, dass dieses Zusammenführen von Bahnen nicht nur mit von einem einzigen Ausgangsbereich kommenden Bahnen vorgenommen werden kann, sondern dass es auch möglich ist, Bahnen von unterschiedlichen und insbesondere räumlich getrennten Ausgangsbereichen für die Durchführung einer Zusatzfunktion zusammenzuführen. Im dargestellten Beispiel sind ein vierspurig arbeitender Slicer 15 und ein weiterer, zweispurig arbeitender Slicer 15 vorgesehen. Die insgesamt sechs Bahnen, die von diesen beiden Slicern 15 kommen, werden über Verzweigungen 47 zu der Bahn 23, in welcher die Funktionsstation 57 vorgesehen ist, zusammengeführt.

Ebenfalls rein beispielhaft ist in Fig. 9 dargestellt, dass im Anschluss an eine solche Bahnzusammenführung die abgehenden Bahnen nicht einem einzigen nachfolgenden Arbeitsbereich, beispielsweise einer Verpackungsmaschine, zugeführt werden müssen, sondern dass es möglich ist, im Anschluss an die Funktionsstation 57 einen differenzierten Weitertransport der Portionen vorzusehen. Diese Differenzierung ist insbesondere auf die an der Bahnzusammenführung durchgeführte Zusatzfunktion abgestimmt, d.h. für jede Portion kann sich an der Funktionsstation 57 bestimmen, zu welchem anschließenden Arbeitsbereich die Portion geführt wird.

Im Beispiel der Fig. 9 können die Portionen nach dem Durchlaufen der Funktionsstation 57 entweder in einen vierspurigen Transportbereich des Bahnsystems zum Weitertransport an eine hier nicht dargestellte Verpackungsmaschine weiterbewegt oder einer Aussortierstrecke 61 zugeführt werden. Vor diesem Hintergrund kann es sich bei der Funktionsstation 57 z.B. um eine Wiegestation handeln, an welcher jeweils das Gewicht der einlaufenden Portionen bestimmt wird. Portionen, deren Gewicht außerhalb vorgegebener Toleranzen von einem Sollgewicht abweicht, können mittels der hier nicht dargestellten Steuereinrichtung in die Aussortierstrecke 61 bewegt und in geeigneter Weise beispielsweise an einer Abladestelle vom Transportmover 19 abgeworfen oder auf andere Art und Weise entnommen werden.

In diesem Ausführungsbeispiel braucht folglich das Wiegen der Portionen nicht in jeder einzelnen der von den Slicern 15 abgehenden Bahnen zu erfolgen.

Wie Fig. 9 aber auch zeigt, ist es gleichwohl möglich, jedem einzelnen Slicer 15 bzw. jeder einzelnen von einem der Slicer 15 kommenden Bahn eine Waage 59 zuzuordnen und folglich das jeweilige Portionsgewicht relativ kurz hinter dem jeweiligen Slicer 15 zu bestimmen und gegebenenfalls an die Steuereinrichtung zu melden bzw. am Transportmover 19 selbst zu speichern. Die Funktionsstation 57 kann dann eine andere Aufgabe übernehmen. So kann die Funktionsstation 57 beispielsweise dazu ausgebildet sein, die Lage oder eine oder mehrere andere Eigenschaften einer Portion auf dem jeweiligen Träger des Transportmovers 19 zu bestimmen. Ein Transportmover 19 mit einer nicht korrekt ausgerichteten Portion kann dann von der Funktionsstation 57 bzw. der Steuereinrichtung in geeigneter Weise, insbesondere datenmäßig, markiert werden, so daß es möglich ist, einen derart markierten Transportmover 19 jederzeit wieder zu identifizieren, um an dem betreffenden Transportmover an einem hier in Fig. 9 nicht dargestellten Funktionsbereich die Lage der Portion auf dem Träger zu korrigieren.

Ein solches Konzept zur Beschaffung von individuellen Informationen hinsichtlich einer oder mehrerer Eigenschaften der Portion oder des Movers 19 an einer hierfür speziell ausgebildeten Stelle im Bahnsystem und die Nutzung der hierdurch gewonnenen Individualinformation an einer anderen Stelle im Bahnsystem kann allgemein und unabhängig von dem Vorsehen oder der konkreten Ausgestaltung einer Bahnzusammenführung auch anders als vorstehend rein beispielhaft erläutert vorgenommen werden.

Eine Bahnzusammenführung, wie sie in Fig. 9 beispielhaft dargestellt ist, braucht nicht lediglich genau eine Bahn zu umfassen, sondern eine Mehrzahl einlaufender Bahnen kann auch auf mehr als eine Bahn zusammengeführt werden. Die Funktionsstation 57 kann dann dazu ausgebildet sein, die ihr zugedachte spezielle Aufgabe gleichzeitig an einer Mehrzahl von Bahnen vorzunehmen.

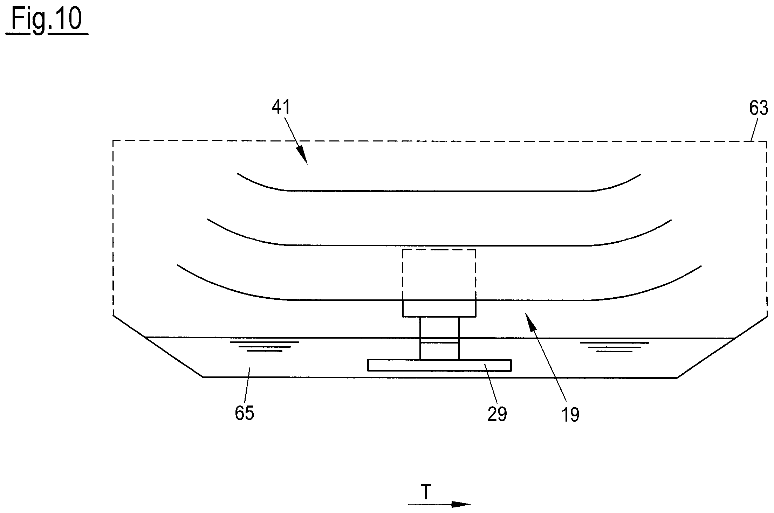

Fig. 10 veranschaulicht einen Aspekt der Erfindung, wonach eine Strecke des Bahnsystems, beispielsweise eine Rückführstrecke, zur Reinigung von Movern 19 bzw. deren Träger 29 genutzt werden kann, ohne hierzu die Mover 19 aus der jeweiligen Bahn herausnehmen bzw. ohne die Träger 29 von den Movern 19 abnehmen zu müssen.

Hierzu wird die betreffende Strecke so geführt, dass die Mover 19 eine Überkopf-Anordnung aufweisen bzw. der hier in diesem Beispiel zu reinigende Träger 29 den am tiefsten liegenden Abschnitt des Movers 19 darstellt. Hierzu kann beispielsweise eine Bahn vom U-Typ, wie sie z.B. in Verbindung mit Fig. 1 erläutert ist, in Überkopf-Anordnung geführt werden, insbesondere vertikal unter einer Transportstrecke mit nach oben offener U-Typ-Bahn, wobei in einem Reinigungsbereich diese Überkopf-Strecke vorübergehend in einem tiefer liegenden Bahnabschnitt 41 geführt ist, wie es Fig. 10 andeutet.

In diesem Reinigungsbereich kann unterhalb des Bahnabschnitts 41 ein in einer von den Movern 19 zu durchquerenden Kammer 63 befindliches Reinigungsbad 65 vorgesehen sein, in welches die entlang dieses Reinigungsstreckenabschnitts bewegten Mover 19 mit ihren Trägern 29 automatisch eintauchen und aus welchem sie nach erfolgter Reinigung automatisch wieder auftauchen.

Anstelle eines derartigen Reinigungsbades 65 kann eine Kammer 63 vorgesehen sein, in welcher die Mover 19 zumindest bereichsweise mit UV-Strahlung oder mit einem Plasma beaufschlagt werden. Ebenfalls ist es möglich, in einer solchen Kammer 63 die Mover 19 zumindest bereichsweise einer Wärmebehandlung beispielsweise durch Aufheizen zu unterziehen, um die Hygiene beeinträchtigende Organismen abzutöten.

Eine derartige Reinigungseinrichtung kann an einer grundsätzlich beliebig orientierten und ausgebildeten Bahn angeordnet werden, d.h. eine Überkopf-Anordnung ist für eine in eine Strecke integrierte und von den Movern 19 zu durchlaufende Reinigungseinrichtung nicht zwingend erforderlich.

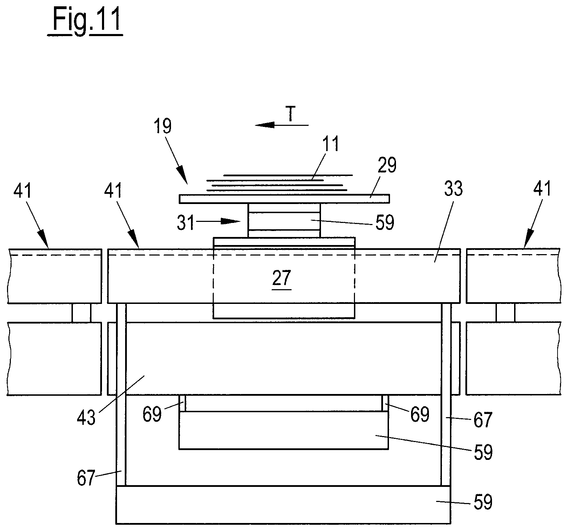

Fig. 11 veranschaulicht drei unterschiedliche Möglichkeiten, um das Gewicht einer auf dem Träger 29 eines Movers 19 liegenden Lebensmittelportion 11 zu bestimmen.

So kann beispielsweise eine Waage in den Halter 31 zwischen Träger 29 und Läufer 27 integriert sein. Diese Variante erfordert somit eine entsprechende Funktionalität der Mover 19 selbst.

Eine beispielsweise vorgesehene Übermittlung der Gewichtsinformation an die Steuereinrichtung kann unmittelbar durch eine Kommunikation direkt zwischen Mover 19 und Steuereinrichtung erfolgen. Alternativ oder zusätzlich kann eine Übertragung der Gewichtsinformation über einen der Bahnabschnitte 41 erfolgen. Es ist auch möglich, die Gewichtsinformation im Mover 19 zu speichern und an einer anderen Stelle zu verarbeiten bzw. an eine andere Instanz, insbesondere an die Steuereinrichtung, zu übertragen. Alternativ kann die Gewichtsinformation aus dem Mover 19 von einem hierzu speziell ausgebildeten Bahnabschnitt 41 ausgelesen und von diesem verarbeitet bzw. an die Steuereinrichtung übertragen werden. Dieses Informationshandling ist erfindungsgemäß nicht auf das Portionsgewicht beschränkt, sondern kann auch für beliebige andere eine Portion oder einen Mover 19 betreffende Informationen vorgenommen werden.

Eine andere Möglichkeit zur Bestimmung der Gewichtsinformation besteht darin, einen möglichen Umstand auszunutzen, wonach der Mover 19 mit seinem Läufer 27, wie anhand von Fig. 1 beispielhaft erläutert, von den Führungsschienen 33 nicht nur relativ zum Stator 43 des Bahnabschnitts 41 geführt, sondern auch getragen wird, d.h. das Gewicht des gesamten Movers 19 vollständig von den beiden Führungsschienen 33 aufgenommen wird.

Dieser Umstand kann bei einem hierzu speziell ausgebildeten Wiege-Bahnabschnitt 41 ausgenutzt werden, um das Gewicht eines Movers 19 und somit das Gewicht einer von diesem transportierten Portion 11 unabhängig von dem Stator 43 dieses Bahnabschnitts 41 zu bestimmen.

Insbesondere ist bei einem derartigen Wiege-Bahnabschnitt 41 beispielsweise vorgesehen, dass sich die Führungsschienen 33 nicht am Stator 43 abstützen, sondern gewissermaßen unter Umgehung des Stators 43 zu einer beispielsweise unterhalb des Stators 43 angeordneten Waage 59 geführt sind. Mit anderen Worten stützen sich die Führungsschienen 33 und somit der Mover 19 nicht am Stator 43, sondern mittels geeigneter Verbindungselemente 67 an der Waage 59 ab. Da das Gewicht aller hieran beteiligten Komponenten bekannt ist, kann auf diese Weise das gewünschte Portionsgewicht bestimmt werden.

Gemäß einer weiteren Alternative kann der gesamte Wiege-Bahnabschnitt 41 an einer Waage 59 abgestützt sein, d.h. beispielsweise über Verbindungselemente 69 ruht der Stator 43 samt Führungsschienen 33 und an diesen abgestütztem Mover 19 auf der Waage 59.

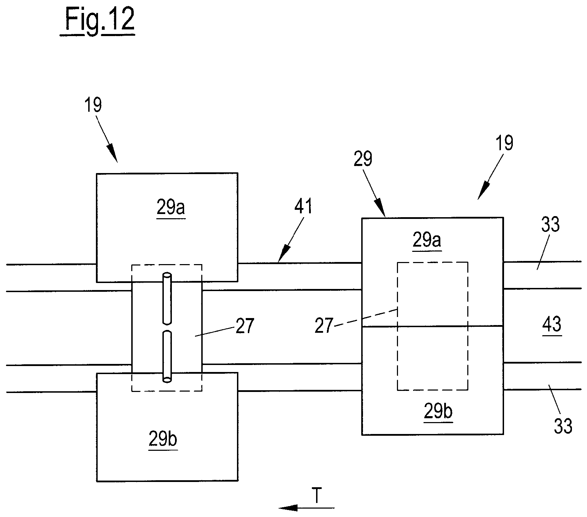

Fig. 12 zeigt ein Beispiel für einen Mover 19 mit einer speziellen Funktion, die auf einem hier in zwei Trägersegmente 29a, 29b unterteilten Träger 29 basiert.

Die beiden Segmente 29a, 29b können bei Bedarf quer zur Transportrichtung T relativ zum Läufer 27 des Movers 19 auseinanderbewegt und aufeinander zu bewegt werden, wobei der in Querrichtung gemessene Abstand zwischen den Segmenten 29a, 29b im links in Fig. 12 dargestellten auseinanderbewegten Zustand entweder nur einen möglichen Wert annehmen oder beliebig und insbesondere stufenlos gewählt werden kann.

Ein derartiger Mover 19 kann dazu eingesetzt werden, den Spurabstand zweier auf dem Träger 29 befindlicher Portionen zu verändern. Auf diese Weise kann mit einer einzigen Bahn zumindest vorübergehend ein Zweispurbetrieb mit veränderlichem Spurabstand realisiert werden. Ein solcher Bahnabschnitt 41 kann beispielsweise im Bereich eines Slicers zum Einsatz kommen, um aus zwei benachbarten Spuren eines Mehrspurslicers kommende und jeweils eine Portion bildende Scheiben als zwei auf dem Träger 29 nebeneinanderliegende Portionen aufzunehmen und vom Slicer abzutransportieren. Auf diesem Transportweg kann der Spurabstand durch Auseinanderfahren der beiden Trägersegmente 29a, 29b vergrößert werden, um auf diese Weise eine Anpassung des Spurabstands an eine wie auch immer geartete nachgeordnete Einrichtung zu erzielen. Bei dieser Einrichtung kann es sich um eine nicht zum Bahnsystem gehörende Einrichtung wie beispielsweise eine Verpackungsmaschine oder um eine Einrichtung des Bahnsystems handeln.

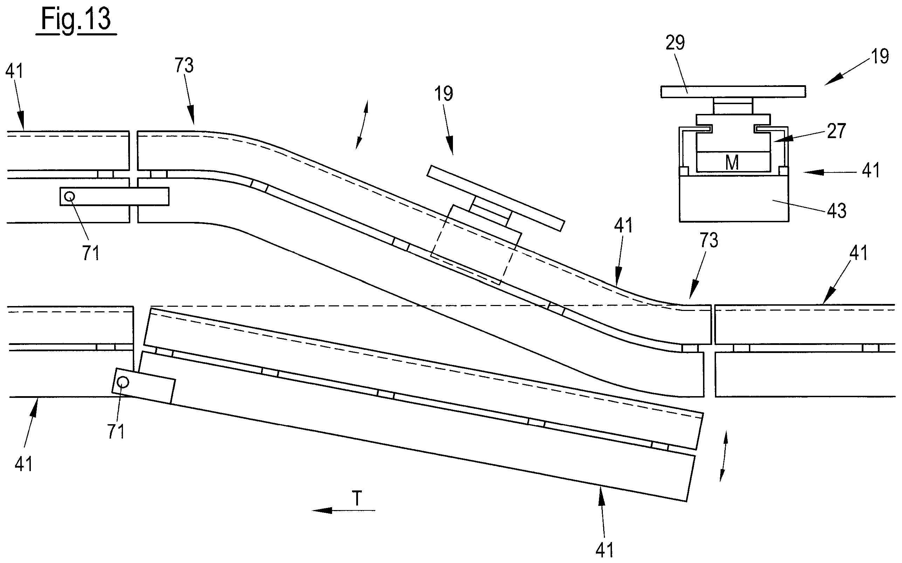

Wenn das jeweilige Transportsystem eine "Kletterfähigkeit" für die im Bahnsystem bewegten Mover 19 besitzt, d.h. wenn die Mover 19 ohne Beeinträchtigung ihrer mittels der Steuereinrichtung bewirkten, d.h. definierten und insbesondere positionsgenauen Bewegbarkeit Steigungen und Gefälle überwinden können, was bei dem eingangs erläuterten LSM-Antriebsprinzip grundsätzlich der Fall ist, dann können spezielle Bahnabschnitte 41 zum Einsatz kommen, wie sie in Fig. 13 veranschaulicht sind.

Die kleine Darstellung oben rechts in Fig. 13 zeigt, dass es sich bei den hier beschriebenen Bahnabschnitten um solche vom U-Typ handeln kann, die Läufer 27 der Mover 19 also oberhalb des jeweiligen Stators 43 gelegen sind.

Bei den speziellen Bahnabschnitten 41 handelt es sich um solche, die um eine senkrecht zur Transportrichtung T verlaufende Schwenkachse 71 verschwenkt werden können und hierzu im dargestellten Beispiel mit nachfolgenden stationären Bahnabschnitten 41 gelenkig verbunden sind.

In dem hier dargestellten Beispiel dient diese Verstellfunktion von Bahnabschnitten 41 des erfindungsgemäßen Bahnsystems dazu, in einer einzigen horizontalen Ebene über einen Bahnabschnitt 41 einlaufende Mover 19 wahlweise einer von zwei sich anschließenden, vertikal übereinander gelegenen Transportebenen zuzuweisen. In der in Fig. 13 dargestellten Situation sind der einlaufende Bahnabschnitt 41 und ein oberer auslaufender Bahnabschnitt 41 über einen verschwenkbaren Bahnabschnitt 41 miteinander verbunden, der eingangsseitig und ausgangsseitig jeweils einen gekrümmten Abschnitt 73 aufweist, um einen Übergang für die Mover 19 zu bilden.

Die untere ausgangsseitige Ebene ist in gleicher Höhe wie die Eingangsebene angeordnet, so dass zum Zuweisen von einlaufenden Movern 19 zur unteren Ausgangsebene eine Geradeausfahrt für die Mover 19 ohne Steigung bzw. Gefälle herzustellen ist, was über einen unteren, durchgehend gerade ausgeführten verschwenkbaren Bahnabschnitt 41 realisiert wird, der in der Situation gemäß Fig. 13 in eine untere Ausweichstellung verschwenkt ist, um dem oberen verstellbaren Bahnabschnitt 41 Platz zu machen.

Fig. 13 stellt nur ein Beispiel für eine Vielzahl denkbarer Konfigurationen dar, die mit einer grundsätzlich beliebigen Anzahl von verschwenkbaren Bahnabschnitten 41 realisierbar sind. Entsprechend können Bahnabschnitte 41 auch horizontal verschwenkt werden. In diesem Fall können die Bahnabschnitte 41 auch von einem seitlich offenen C-Typ sein, der an anderer Stelle näher erläutert ist.

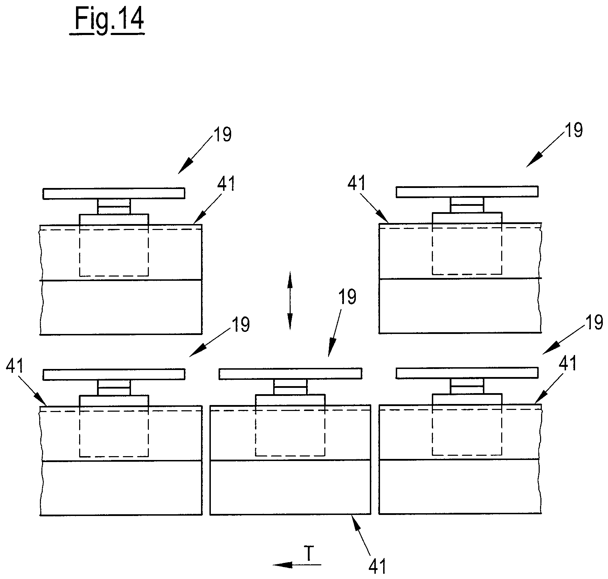

Eine andere Möglichkeit, Mover 19 unterschiedlichen Transportebenen zuzuweisen, zeigt Fig. 14. In diesem Ausführungsbeispiel ist ein vergleichsweise kurzer, in vertikaler Richtung (wie durch den Doppelpfeil angedeutet) senkrecht zur Transportrichtung T verfahrbarer Bahnabschnitt 41 vorgesehen, der auch als "Lift" oder - wegen seiner relativ geringen Länge - als "Minilift" bezeichnet wird.

Mit einem oder mehreren derartigen gemeinsam oder unabhängig voneinander vertikal verfahrbaren, übereinander angeordneten Bahnabschnitten 41 können grundsätzlich beliebig viele einlaufende Bahnen mit grundsätzlich beliebig vielen abgehenden Bahnen durch einen Transfer von Movern 19 miteinander "kommunizieren".

Auch dieser spezielle Funktionsbereich eines erfindungsgemäßen Bahnsystems nutzt den Umstand aus, dass das erfindungsgemäße Transportsystem generell derart ausgestaltet sein kann, dass zwischen aufeinanderfolgenden Bahnabschnitten 41 vorgesehene Lücken von den Movern 19 problemlos, d.h. ohne Schaffung undefinierter Zustände, überfahren werden können. Dies ist bei dem eingangs erläuterten LSM-Antriebsprinzip der Fall. Je nach konkreter Ausgestaltung des Bahnsystems können derartige problemlos überfahrbare Lücken beispielsweise mehrere Millimeter betragen oder in einer Größenordnung von etwa 1 bis 2 cm liegen.

Wie an anderer Stelle erwähnt, kann es für die Handhabung von Lebensmittelportionen auf deren Weg zwischen Slicer und Verpackungsmaschine oder auch in anderen Situationen wünschenswert sein, die Portionen zu wenden, d.h. auf den Kopf zu stellen, um so z.B. sicherzustellen, dass eine jeweils gewünschte Seite der Portion in einer Verpackung sichtbar ist.

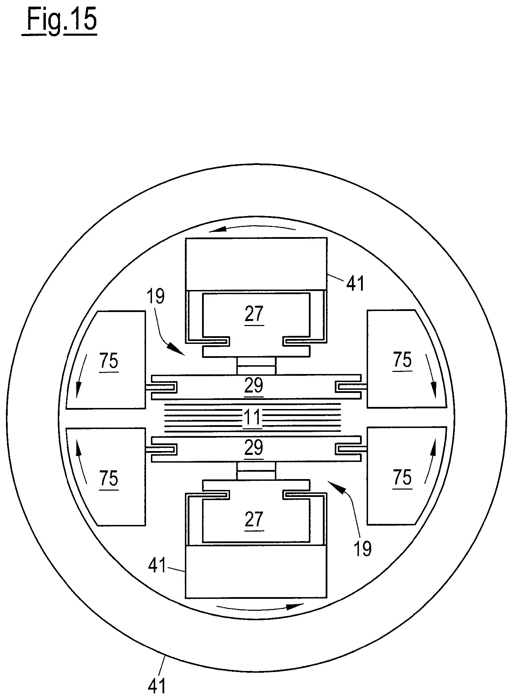

Das erfindungsgemäße Transportprinzip eröffnet eine vergleichsweise einfach und platzsparend realisierbare Möglichkeit, ein solches Wenden von Portionen durchzuführen. Fig. 15 zeigt eine Wendestation, die einen hier kreisförmig ausgeführten Bahnabschnitt 41 umfasst, der eine Ebene definiert, die senkrecht zu Transportrichtung verläuft. Die Anordnung der Wendestation ist derart gewählt, dass die Mittelachse oberhalb des Niveaus der Auflagefläche 39 des Trägers 29 eines einlaufenden Movers 19 und insbesondere etwa - in vertikaler Richtung gesehen - in der Mitte einer zu wendenden Portion 11 liegt.

Die Wendestation umfasst zwei Paare von einander etwa diametral einander gegenüberliegenden Dreh- bzw. Wendemovern 75, die in dem Bahnabschnitt 41 bewegbar sind, insbesondere jeweils pendelartig abwechselnd um jeweils 180° in die eine Richtung und in die andere Richtung, wobei die Wendemover 75 mittels der Steuereinrichtung zu einem aufeinander abgestimmten gemeinsamen Betrieb mit gleichem Umlaufsinn ansteuerbar sind. Jedem Paar von Wendemovern 75 ist ein zur Wendestation gehörender gerader Bahnabschnitt 41 zugeordnet.

In die Wendestation einlaufende Mover 19 gelangen in einen der beiden geraden Bahnabschnitte 41 der Wendestation und dabei mit ihren hierzu an den Außenseiten speziell ausgebildeten, jeweils mit einem Schlitz versehenen Trägern 29 in Eingriff mit nach innen vorstehenden Vorsprüngen der Wendemover 75. Eine zu wendende Portion 11 befindet sich dann jeweils zwischen dem Träger 29, von dem sie beim Einlaufen getragen ist, und dem Träger 29 eines wartenden, in analoger Weise von dem anderen Paar von Wendemovern 75 gehaltenen, mit seinem Läufer 27 im anderen geraden Bahnabschnitt 41 angeordneten Movers 19.

Die beiden Wendemover-Paare 75 werden anschließend im gleichen Drehsinn gemeinsam um die Mittelachse um 180° gedreht. Dadurch übernimmt nun der ursprünglich obere, auf dem Kopf stehende Mover 19 die Rolle des die Portion 11 tragenden Movers 19, so dass sich dieser nunmehr die Portion 11 tragende Mover 19 in einem sich ausgangsseitig anschließenden Bahnabschnitt mit der durch diesen Vorgang gewendeten Portion 11 weiterbewegen kann.

Der Abstand zwischen den beiden Auflageflächen der Träger 29 kann insbesondere zum Festhalten der Portion 11 während des Wendevorgangs verändert werden, indem die beiden Wendemover 75 des einen Paares gemeinsam mit dem von ihnen gehaltenen Träger 29 auf die beiden Wendemover 75 des anderen Paares zu bewegt werden.

Auch ein eventuell erforderlicher Höhenausgleich zur Anpassung des Niveaus für den in die Wendestation einlaufenden bzw. aus der Wendestation auslaufenden Mover 19 kann durch diese grundsätzlich gegebene Verfahrbarkeit der Wendemover 75 und somit Höheneinstellbarkeit der jeweils von einem Wendemover-Paar gehaltenen Träger 29 vorgenommen werden.

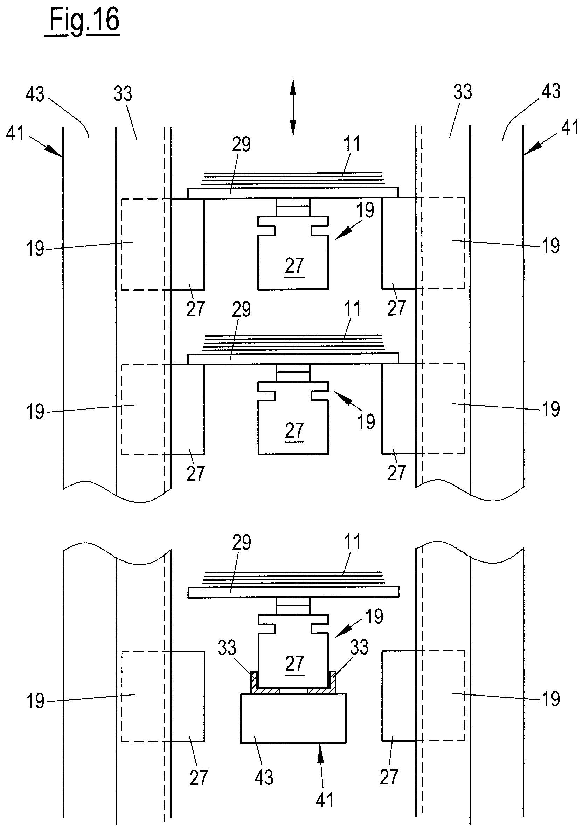

Fig. 16 zeigt einen weiteren speziellen Funktionsbereich eines erfindungsgemäßen Bahnsystems, bei dem das erfindungsgemäße Transportprinzip für eine vertikale Bewegbarkeit von Movern 19 eingesetzt werden kann, um beispielsweise einen sogenannten Vertikalpuffer zu realisieren.

In diesem Ausführungsbeispiel dient der Vertikalpuffer dazu, komplette Mover 19 zu übernehmen und in vertikaler Richtung zu bewegen. Die Mover 19 und folglich die auf deren Trägern 29 liegenden Portionen 11 können so vorübergehend in vergleichsweise wenig Bauraum benötigenden Puffertürmen gespeichert werden. Der Steuereinrichtung kann aufgrund der individuellen Identifizierbarkeit und Lokalisierbarkeit der Mover 19 die Verweilzeit jeder einzelnen Portion 11 im Puffer bekannt sein, so dass sichergestellt ist, dass eine jeweils vorgeschriebene Verweilzeit für die Portionen 11 nicht überschritten wird.

Im unteren Bereich der Fig. 16 ist eine Transferstelle dargestellt, an welcher über einen speziell ausgebildeten Bahnabschnitt 41 Transportmover 19 mit zu puffernden Portionen 11 in den Vertikalpuffer einlaufen. Die Transportrichtung dieses einlaufenden Bahnabschnitts 41 verläuft somit senkrecht zur Zeichenebene der Fig. 16.

Eine Besonderheit dieses einlaufenden Bahnabschnitts 41 beispielsweise im Vergleich zu dem in Fig. 1 dargestellten Bahnabschnitt 41 besteht darin, dass die Führungsschienen 33 anders als Fig. 1 und so ausgebildet und angeordnet sind, dass ein Herausnehmen des Läufers 27 nach oben ermöglicht wird.

Der Vertikalpuffer umfasst zwei in vertikaler Richtung parallel verlaufende Bahnabschnitte 41 vom U-Typ, die mit ihren offenen Seiten einander zugewandt sind. In diesen vertikalen Bahnabschnitten 41 können mittels der Steuereinrichtung jeweils paarweise zusammenwirkende, einander auf gleichem Niveau gegenüberliegende, hier auch als Liftmover bezeichnete Funktionsmover 19 in vertikaler Richtung bewegt werden.

Durch Bewegen der Liftmover 19 nach oben gelangen über die Führungsschienen 33 der vertikalen Bahnabschnitte 41 nach innen vorstehende Abschnitte der Läufer 27 jeweils in Anlage mit der Unterseite eines Trägers 29. Die beiden zusammenwirkenden Liftmover 19 können somit über einen Träger 29 den gesamten betreffenden Mover 19 anheben und längs des Vertikalpuffers verfahren.

Nicht dargestellt ist die erfindungsgemäße Möglichkeit, dass der Vertikalpuffer in eine Horizontalstrecke übergeht, in welche die Liftmover jeweils zusammen mit einem von ihnen gehaltenen Transportmover 19 übergehen können, um eine Pufferung oder einen vorübergehenden Transport in einer horizontal verlaufenden Strecke vorzunehmen. Auch ist es möglich, ausgehend von einer solchen Horizontalstrecke die Transportmover 19 an einer anderen Vertikalverstrecke wieder auf das ursprüngliche Transportniveau oder eine andere Transportebene zu bringen und dort in entsprechende Bahnabschnitte einzusetzen.

In einer alternativen Ausgestaltung können die Träger 29 der Transportmover 19 vom jeweiligen Läufer 27 abnehmbar ausgeführt sein, so dass mittels der Liftmover 19 ausschließlich die Träger 29 jeweils samt aufliegender Portion 11 in den Vertikalpuffer verbracht werden. Die hierdurch jeweils von ihrem Träger 29 befreiten Läufer 27 werden dann in geeigneter Weise weiterbewegt, um beispielsweise an anderer Stelle wieder Träger 29 entgegenzunehmen.

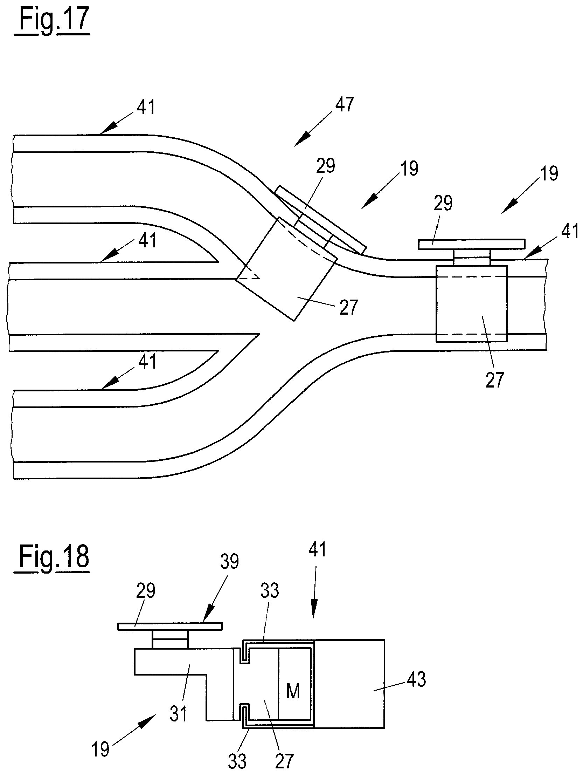

Ein weiterer spezieller Funktionsbereich eines erfindungsgemäßen Bahnsystems ist in Fig. 17 veranschaulicht. Bei diesem Funktionsbereich handelt es sich um eine Verzweigung 47, die in einer vertikalen Ebene liegt.

Diese Verzweigung 47 umfasst Bahnabschnitte 41 vom sogenannten C-Typ, die somit seitlich offen sind, so dass (vgl. Fig. 18) die Läufer 27 von in derartigen C-Bahnen bewegten Movern 19 nicht oberhalb oder unterhalb des Stators 43 liegen, sondern längs der linken und rechten Seite des Stators 43 laufen.

Wie Fig. 18 zeigt, kann beispielsweise ein entsprechend winkliger Halter 31 zwischen Läufer 27 und Träger 29 dafür sorgen, dass auch bei einer derartigen seitlichen Führung der Mover 19 an den Bahnabschnitten 41 die Auflagefläche 39 des Trägers 29 in einer horizontalen Ebene verläuft.

Wie an anderer Stelle erwähnt, ist das erfindungsgemäße Transportsystem grundsätzlich dazu in der Lage, die Mover 19 Steigungen bzw. Gefälle überwinden zu lassen. Eine dabei sich einstellende Schräglage der Auflagefläche 39 des Trägers 29, wie in Fig. 17 am dort linken Mover 19 veranschaulicht, kann in einer möglichen Ausgestaltung der Läufer 19 vermieden werden, wenn beispielsweise ein Pendelmechanismus vorgesehen wird, der dafür sorgt, dass unabhängig von der Orientierung des Läufers 27 der Träger 29 stets mit seiner Auflagefläche 39 horizontal ausgerichtet bleibt. Eine derartige Maßnahme ist aber nicht zwingend. In der Praxis können die von den Movern 19 zu überwindenden Steigungen, z.B. an Vertikalverzweigungen, deutlich geringer ausgeführt werden, als es in Fig. 7 lediglich zu Illustrationszwecken veranschaulicht ist.

Eine Vertikalverzweigung mit Bahnabschnitten vom U-Typ kann grundsätzlich auch nach dem in Fig. 6 veranschaulichten Prinzip erfolgen. Hierzu muss man sich die Horizontalverzweigung der Fig. 6 lediglich um 90° in die Vertikale gekippt und mit Movern 19 gemäß Fig. 18 versehen vorstellen, so dass die Auflageflächen 39 der Träger 29 horizontal orientiert sind.

Mit Vertikalverzweigungen, die folglich keine gekrümmten Bahnabschnitte wie in Fig. 17 aufweisen müssen, sondern analog zu der Verzweigung in Fig. 6 ausschließlich rechtwinklige Richtungswechsel beinhalten, kann in vorteilhafter Weise in vertikaler Richtung zur Verfügung stehender Raum genutzt werden, so dass mit dem Transportsystem nicht in die Breite gegangen zu werden braucht.

Wie an anderer Stelle erwähnt, kann das erfindungsgemäße Bahnsystem unterschiedliche Bahn-Typen umfassen, die sich insbesondere dadurch unterscheiden, wie der Läufer eines jeden Movers bezüglich des Stators der Bahn angeordnet ist. Bei einer Bahn vom U-Typ befindet sich der Läufer oberhalb oder unterhalb des Stators. Bei einer Bahn vom C-Typ bewegt sich der Läufer seitlich neben dem Stator.

In einem jeweiligen Gesamtsystem kann das erfindungsgemäße Bahnsystem ausschließlich Bahnen eines einzigen Typs umfassen. Alternativ ist es möglich, innerhalb des Bahnsystems unterschiedliche Bahntypen einzusetzen, um beispielsweise jeweils gezielt die Vorteile des jeweiligen Bahn-Typs für den oder die betreffenden Anwendungen bzw. speziellen Funktionsbereiche zu nutzen. In einem derartigen Hybrid-Bahnsystem kann vorgesehen sein, dass die Mover nicht zwischen den Teil-Systemen wechseln können. Es sind dann Möglichkeiten vorgesehen, Portionen bzw. Portionen tragende Träger zwischen Movern des einen Systems und Movern des anderen Systems zu transferieren.

Alternativ kann es wünschenswert sein, gewissermaßen die Grenze zwischen den Teil-Systemen insofern "durchlässig" zu gestalten, als Mover ohne Beschränkungen und insbesondere ohne Beeinträchtigung eines schonenden Transports der Portionen und insbesondere ohne Anhalten der Mover zwischen Bahnen unterschiedlichen Typs wechseln können.

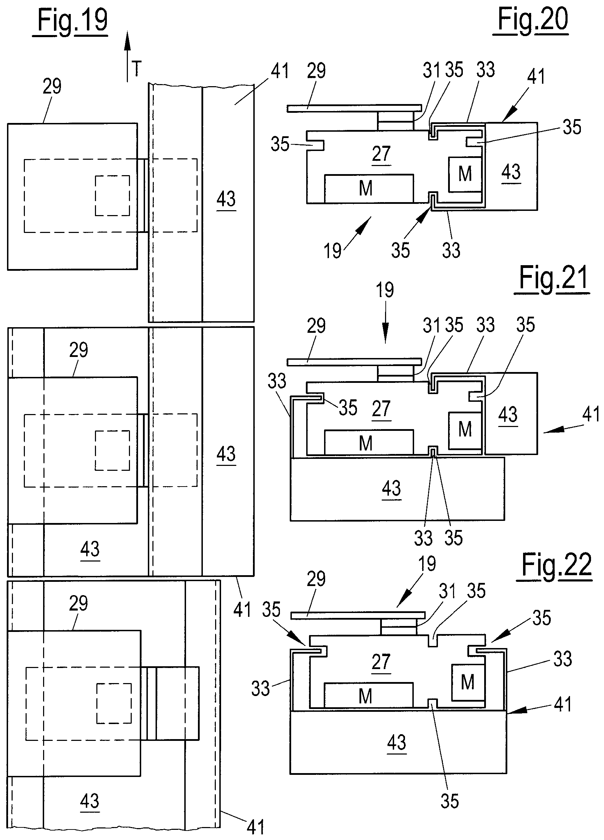

Eine Möglichkeit, wie dies auf vergleichsweise einfache Art und Weise realisiert werden kann, ist in den Fig. 19 bis 22 schematisch veranschaulicht.

In Fig. 19 sind in Transportrichtung T unmittelbar aufeinanderfolgend drei Bahnabschnitte 41 dargestellt, die von speziellen Movern 19, die in den Fig. 20 bis 22 näher dargestellt sind, unterbrechungsfrei und bei schonendem Portionstransport durchlaufen werden können.

Zwischen einem unten in Fig. 19 dargestellten Bahnabschnitt 41 vom U-Typ und einem oben in Fig. 19 dargestellten Bahnabschnitt 41 vom C-Typ befindet sich ein Übergangs- oder Hybridbahnabschnitt 41, der nachstehend näher beschrieben wird.

Die Fig. 20 bis 22 zeigen jeweils in einem Schnitt senkrecht zur Transportrichtung T den betreffenden, jeweils links davon in Fig. 19 in Draufsicht dargestellten Bahnabschnitt 41. So zeigt Fig. 20 den Bahnabschnitt 41 vom C-Typ, während in Fig. 22 der Bahnabschnitt 41 vom U-Typ dargestellt ist und Fig. 21 den Übergangs- oder Hybridbahnabschnitt 41 zeigt.

Bei den für derartige Übergänge ausgebildeten Movern 19 handelt es sich um sogenannte Hybrid-Transportmover 19, die mit speziellen Hybrid-Läufern 27 versehen sind. Wie in den Fig. 20 bis 22 angedeutet, können sich derartige Hybrid-Läufer 27 dadurch auszeichnen, dass sie mit zwei räumlich getrennten Permanentmagnetanordnungen M versehen sind, von denen jeweils eine mit einem Stator 43 einer Bahn vom U-Typ (vgl. Fig. 22) und die andere mit einem Stator 43 einer Bahn vom C-Typ (vgl. Fig. 20) zusammenwirken kann.

Des Weiteren ist der Hybrid-Läufer 27 mit paarweise einander gegenüberliegenden, d.h. in einander gegenüberliegenden Seitenflächen ausgebildeten Schlitzen 35 für Führungsschienen 33 der betreffenden Bahnabschnitte 41 versehen.

Für die Führung an Bahnabschnitten vom U-Typ (vgl. Fig. 22) sind die Schlitze 35 entsprechend der vorstehend anhand von Fig. 1 beschriebenen Ausgestaltung in den linken und rechten Seitenflächen des Hybrid-Läufers 27 ausgebildet. Entsprechend dem Ausführungsbeispiel gemäß Fig. 18 ist der Hybrid-Läufer 27 zusätzlich mit einem Paar von Führungsschlitzen 35 versehen, die an den unteren und oberen Seitenflächen ausgebildet sind und (vgl. Fig. 20) mit Führungsschienen 33 von Bahnabschnitten vom C-Typ zusammenwirken.

Der Hybrid-Bahnabschnitt gemäß Fig. 21 zeichnet sich unter anderem dadurch aus, dass zwei Statoren 43 vorgesehen sind, die mittels der Steuereinrichtung unabhängig voneinander ansteuerbar sind. Ferner ist dieser Hybrid-Bahnabschnitt 41 mit nur einer einzigen Führungsschiene 33 vom U-Typ (vgl. links in Fig. 21) und mit nur einer einzigen Führungsschiene 33 vom C-Typ (vgl. oben in Fig. 21) versehen.

Ein solcher Hybrid-Bahnabschnitt 41 kann von entsprechend ausgebildeten Hybrid-Movern 19 problemlos sowohl in mechanischer Hinsicht als auch antriebssteuerungsmäßig durchlaufen werden, wenn die beiden Statoren 43 entsprechend angesteuert werden. Der Hybrid-Bahnabschnitt 41 kann mit dem eigenen U-Stator (vgl. unten in Fig. 21) einen von dem "reinen" U-Typ-Bahnabschnitt 41 (vgl. Fig. 22) einlaufenden Mover 19 übernehmen und diesen zunächst an den eigenen C-Stator (vgl. rechts in Fig. 21) und dann an den anschließenden "reinen" C-Typ-Bahnabschnitt 41 (vgl. Fig. 20) übergeben.

Das Vorsehen derartiger Hybrid-Bahnabschnitte, die in gewisser Weise Eigenschaften unterschiedlicher Bahn-Typen in sich vereinigen, ist allerdings nicht zwingend, um Übergänge zwischen Bahnabschnitten unterschiedlichen Typs in einem Bahnsystem zu bewerkstelligen. So ist es grundsätzlich möglich, Bahnabschnitte unterschiedlichen Typs unmittelbar aufeinanderfolgend anzuordnen. An den Übergangsstellen können die jeweiligen Führungsschienen 33 in Richtung des jeweiligen anderen Bahnabschnitts verlängert sein und insbesondere einander überlappen, um in mechanischer Hinsicht eine störungsfreie Führung der Mover bzw. deren Läufer über die Übergangsstellen hinweg und somit einen gleichbleibend schonenden Transport der Portionen sicherzustellen.

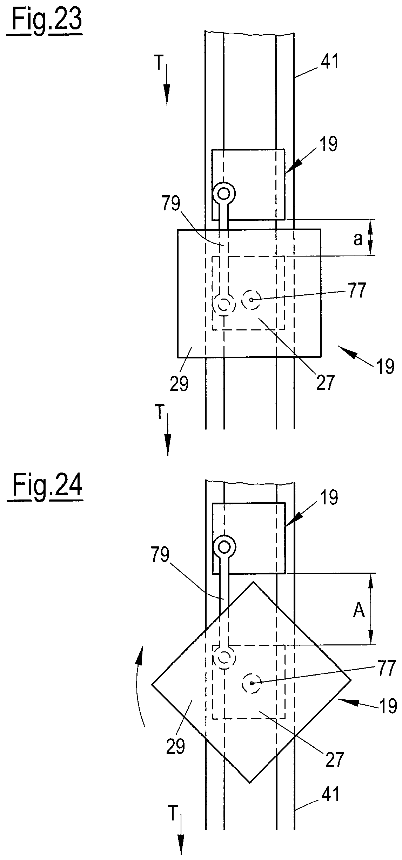

Im Einleitungsteil ist erläutert, dass ein genereller Aspekt der Erfindung darin besteht, zwei oder mehrere Mover zusammenwirken zu lassen. Die zusammenwirkenden Mover können in derselben Bahn und insbesondere unmittelbar aufeinanderfolgend bewegt werden. Dabei können die Mover permanent einander zugeordnet und insbesondere mechanisch miteinander gekoppelt sein. So kann beispielsweise jedem Transportmover 19 ein Hilfsmover zugeordnet sein, der permanent zugegen ist. Ein derartiges Ausführungsbeispiel wird nachstehend in Verbindung mit den Fig. 23 und 24 näher erläutert.

Alternativ ist es möglich, keine permanente Zuordnung von Movern vorzusehen, sondern eine solche lediglich temporär und nur bei Bedarf herbeizuführen, um eine wie auch immer geartete Zusatzfunktion zu realisieren.

In beiden Varianten wird aber die grundsätzlich unabhängige Bewegbarkeit der Mover im Bahnsystem und somit der Umstand genutzt, dass während des Betriebs, d.h. während sich die Mover entlang einer Bahn bewegen, der Abstand zwischen zwei aufeinanderfolgenden Movern mittels der Steuereinrichtung beliebig und mit sehr hoher Genauigkeit eingestellt und insbesondere verändert werden kann. Eine solche Abstandsänderung kann durch geeignete Mittel, die mechanischer Art sein können, wobei dies aber nicht zwingend ist, in eine Beeinflussung zumindest eines der Mover umgesetzt werden.

Im Ausführungsbeispiel der Fig. 23 und 24 ist einem Transportmover 19, der mit einem Träger 29 für eine nicht dargestellte Portion versehen ist, ein sogenannter Hilfsmover 19 zugeordnet, der in Transportrichtung T hinter dem Transportmover 19 im jeweiligen Bahnabschnitt 41 bewegt wird. In dem hier dargestellten Ausführungsbeispiel sind die beiden Mover 19 durch eine Koppelstange 79 miteinander verbunden, die am Träger 29 des Transportmovers 19 mit Abstand von einer Drehachse 77 angelenkt ist, um welche der Träger 29 relativ zum Läufer 27 verdrehbar ist, wobei die Drehachse 77 und die Achse der gelenkigen Verbindung zwischen Koppelstange 79 und Träger 29 parallel zueinander und senkrecht zur Transportrichtung T und senkrecht zur Auflagefläche des Trägers 29 verlaufen.

Wie der Vergleich von Fig. 23 mit Fig. 24 zeigt, kann durch Verändern des Abstands zwischen den beiden Movern 19 mittels der Koppelstange eine Verdrehung des Trägers 29 relativ zum Läufer 27 herbeigeführt werden. Ist der Abstand zwischen den beiden Movern 19 vergleichsweise klein (vgl. Abstand a in Fig. 23), so stellt dies eine Ausgangssituation mit unverdrehtem Träger 29 dar. Wird z.B. bei sich im Bahnabschnitt 41 bewegenden Movern 19 die Geschwindigkeit des hinter dem Transportmover 19 laufenden Hilfsmovers 19 verringert, so vergrößert sich der Abstand zwischen den beiden Movern (vgl. Abstand A in Fig. 24), wodurch der Träger 29 in der durch den Pfeil in Fig. 24 angedeuteten Richtung verdreht wird.

Der Verdrehwinkel kann mittels der Steuereinrichtung durch entsprechendes Relativpositionieren der beiden Mover 19 während der Fahrt beliebig eingestellt und insbesondere mit hoher Genauigkeit konstant gehalten werden. Hierdurch können beispielsweise Lagekorrekturen von Portionen auf dem Träger 29 vorgenommen werden. Ebenso ist es möglich, die Ausrichtung von Portionen zwischen einer Längsausrichtung und einer Querausrichtung zu wechseln, d.h. Portionen um 90° zu drehen, wie es beispielsweise für die Übergabe oder Übernahme von Portionen zur Anpassung an hierfür vorgesehene Einrichtungen erforderlich sein kann.

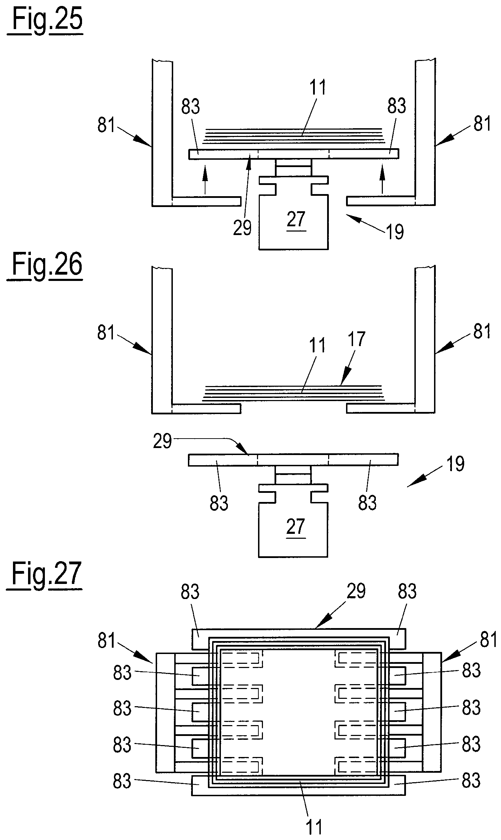

Die Fig. 25 bis 27 veranschaulichen eine erfindungsgemäße Möglichkeit, durch eine spezielle Ausgestaltung der Träger 29 der Transportmover 19 ein einfaches Abnehmen von Portionen 11 durch externe, d.h. nicht zum Bahnsystem gehörenden Einrichtungen - hier durch einen Roboter - zu ermöglichen.

Im hier dargestellten Ausführungsbeispiel ist der Träger 29 an gegenüberliegenden Seitenbereichen gabel- oder rechenartig ausgebildet und mit beabstandeten Zinken 83 versehen, zwischen denen entsprechend gabel- oder rechenartig ausgebildete Greifer 81 eines hier nicht näher dargestellten Roboters von unten kämmend hindurchgreifen können, um auf diese Weise eine auf dem Träger 29 liegende Portion 11 aufnehmen zu können.

Ein derart ausgestalteter Träger 29 kann folglich bei einem Portionstransfer am Mover 19 verbleiben.

Fig. 25 zeigt die Situation vor dem Abnehmen der Portion 11. In der Situation gemäß Fig. 26 haben sich die Greifer 81 von unten durch den Träger 29 hindurchbewegt und dabei die Portion 11 aufgenommen, die daraufhin mittels des Roboters an einen jeweils gewünschten Ort verbracht werden kann.

Das Ablegen von Portionen 11 auf einem derartigen Träger 29 mittels eines derartige Greifer 81 umfassenden Roboters ist in umgekehrter Reihenfolge möglich.

Fig. 27 zeigt eine Draufsicht auf die Situation beispielsweise in Fig. 25, in der insbesondere zu erkennen ist, dass die gabelförmigen Greifer 81 des Roboters mit ihren Zinken in den Zwischenräumen zwischen den Zinken 83 des Trägers 29 liegen, um auf diese Weise unter die Portion 11 greifen zu können, die (vgl. Fig. 26) aus einer Mehrzahl von übereinanderliegenden Produktscheiben 17 besteht.

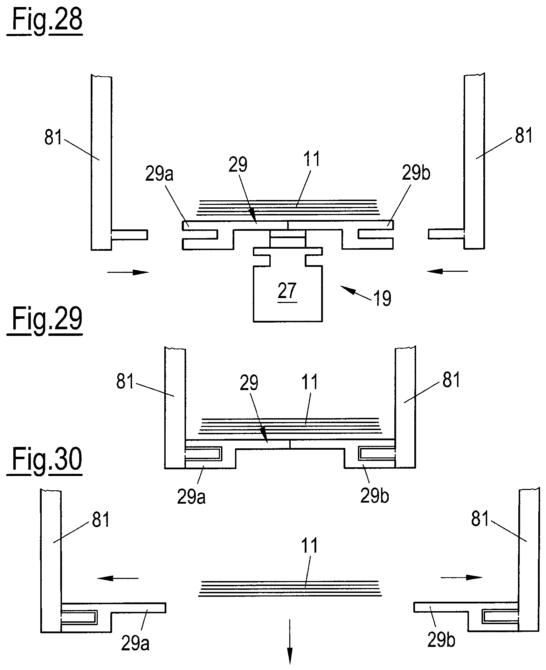

Die Fig. 28 bis 30 veranschaulichen eine andere Möglichkeit zum Abnehmen von Portionen 11 von Movern 19. In diese Ausführungsform verbleibt der Träger 29 nicht am Mover 19. Vielmehr sind in diesem Ausführungsbeispiel die Greifer 81 des Roboters einerseits und separierbare Segmente 29a, 29b des Trägers 29 andererseits derart aufeinander abgestimmt ausgebildet, dass die Greifer 81 jeweils mit einem der Trägersegmente 29a, 29b gekoppelt werden können, wodurch gewissermaßen die Trägersegmente 29a, 29b zu einem Bestandteil der Robotergreifer 81 werden.

So kann mittels des Roboters die Portion 11 gemeinsam mit dem von den beiden Segmenten 29a, 29b gebildeten Träger 29 vom Mover 19 abgenommen werden.

Diese Situation ist in Fig. 29 ohne den im Wesentlichen vom Läufer 27 gebildeten Rest-Mover dargestellt.

Anschließend können gemäß Fig. 30 die beiden Greifer 81 jeweils samt angekoppeltem Trägersegment 29a bzw. 29b auseinanderbewegt werden, um die Portion 11 beispielsweise in eine nicht dargestellte Verpackung fallenzulassen.

Durch geeignete Mittel beispielsweise in Form einer Verrastung kann sichergestellt werden, dass beim Auseinanderbewegen der Greifer 81 gemäß Fig. 30 die Trägersegmente 29a, 29b am jeweiligen Greifer 81 verbleiben und somit zuverlässig insbesondere ruckartig unter der Portion 11 seitlich wegbewegt werden können.

Alternativ zu der im Wesentlichen horizontalen Auseinanderbewegung gemäß Fig. 30 kann beispielsweise auch eine insbesondere schlagartig erfolgende Schwenkbewegung nach unten für die Trägersegmente 29a, 29b relativ zu den Greifern 81 bewirkt werden. Es ist auch möglich, die Greifer 81 jeweils samt angekoppeltem Trägersegment 29a bzw. 29b nach außen und unten zu verschwenken, um die Portion 11 freizugeben und fallenzulassen.

Die Art und Weise der Kopplung zwischen den Greifern 81 und den Trägersegmenten 29a, 29b ist grundsätzlich beliebig und hier in den Fig. 28 bis 30 lediglich schematisch angedeutet.

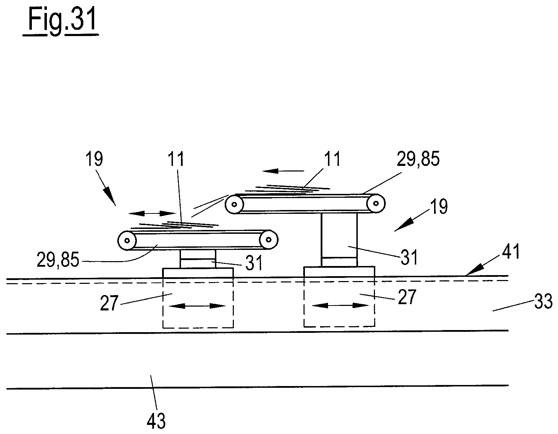

Fig. 31 veranschaulicht ein Zusammenwirken zweier Mover 19, das beispielsweise, aber nicht ausschließlich, für die Bildung von in der Praxis zunehmend wichtiger werdenden Mehrsortenpackungen eingesetzt werden kann. Die nachstehend näher erläuterte Ausgestaltung der in Fig. 31 dargestellten Mover 19 ermöglicht es, Portionen 11 schonend von einem Mover 19 an einen anderen Mover 19 zu übergeben. Wenn es sich bei den zu übergebenden Portionen 11 um Teilportionen handelt, dann ist es hierdurch insbesondere möglich, eine Teilportion einer ersten Sorte an einen Mover zu übergeben, auf dem bereits eine Teilportion einer oder mehrerer anderer Sorten liegt, so dass hierdurch ein Portionstransfer von Mover zu Mover und somit die Bildung einer Gesamtportion aus mehreren Sorten unmittelbar auf einem Mover 19 möglich ist, und zwar grundsätzlich an einer beliebigen Stelle innerhalb des Bahnsystems und somit unabhängig von dem Aufstellort der Slicer, an denen die unterschiedlichen Produktsorten aufgeschnitten werden.

Es ist somit beispielsweise nicht erforderlich, mittels eines Portionsträgers nacheinander verschiedene Stationen in Form von Slicern oder von Slicern kommenden Förderbändern anzufahren, um nacheinander Teilportionen unterschiedlicher Sorte aufzunehmen.

Die Bildung von Mehrsortenportionen kann auf diese Weise äußerst variabel und flexibel realisiert werden.

Hierzu ist gemäß dem Ausführungsbeispiel der Fig. 31 vorgesehen, dass die Träger 29 der Mover 19 jeweils von einem Endlosförderband 85 gebildet sind.

Für den Antrieb der Förderbänder 85 können die Mover 19 jeweils mit einer eigenen Energieversorgung versehen sein. Hierauf wird an dieser Stelle nicht näher eingegangen, da die Möglichkeiten zur Energieversorgung von Movern 19 an anderer Stelle erläutert sind.

Grundsätzlich ist es aber auch möglich, einen Förderbandbetrieb zum Transferieren von Portionen 11 zwischen Movern 19 jeweils ohne eigene Energiequelle der Mover 19 zu bewerkstelligen. Ein Antrieb der Förderbänder 85 kann beispielsweise mittels entsprechend bewegter Hilfsmover auf der Basis des anhand des Ausführungsbeispiels der Fig. 23 und 24 erläuterten Grundprinzips erfolgen. Alternativ oder zusätzlich ist es möglich, zum Antreiben der Förderbänder 85 die Mover 19 mit dem Bahnsystem zusammenwirken zu lassen, d.h. jeweils die Relativbewegung zwischen dem betreffenden Mover 19 und einem Bahnabschnitt 41 zu nutzen. Die Mover 19 können auch relativ zu einer externen, nicht unmittelbar zum Bahnsystem gehörenden Einrichtung bewegt werden, die beispielsweise bei einer Vorbeifahrt in geeigneter Weise mit dem jeweiligen Förderband 85 zusammenwirkt, beispielsweise ein frei um Umlenkrollen umlaufendes Endlosband festhält, um durch entsprechende Bewegung des Läufers 27 im Bahnabschnitt 41 die gewünschte Bewegung des Endlosbandes und somit einer zu übergebenden oder zu übernehmenden Portion 11 relativ zum Läufer 27 zu bewirken.

Das Zusammenwirken von Förderbändern zum Transferieren von Lebensmittelportionen ist grundsätzlich bekannt, weshalb hierauf nicht näher eingegangen wird. Eine Besonderheit des Ausführungsbeispiels der Fig. 31 besteht gleichwohl darin, dass einerseits mit den individuell im Bahnabschnitt 41 bewegbaren Movern 19 eine Abkehr vom Förderbandprinzip erfolgt, gleichzeitig aber die hier in Rede stehenden Mover 19 wieder mit einer Förderbandfunktion versehen werden.

Um die in Fig. 31 veranschaulichten unterschiedlichen Höhenniveaus zwischen den zusammenwirkenden Förderband-Movern 19 zu realisieren, ist es möglich, aber nicht zwingend, eine Vertikalverfahrbarkeit der Förderbänder 85 bzw. der Halter 31 zu implementieren. Es ist alternativ möglich, für unterschiedliche Produktsorten Mover 19 mit unterschiedlichen, insbesondere unveränderbarten Höhenniveaus für die Förderbänder 85 zu verwenden. Während des Betriebs des Gesamtsystems kann die Steuereinrichtung dafür sorgen, dass unterschiedliche Teilportionen, die zwischen Förderband-Mover 19 transferiert werden müssen, jeweils auf einem Förderband-Mover 19 gebildet bzw. zum Zwecke des Transfers herantransportiert werden, der ein für einen solchen Transfer geeignetes Förderbandniveau besitzt.

Ein Zusammenwirken von Förderband-Movern 19, wie in Fig. 31 dargestellt, muss nicht zwischen in derselben Bahn befindlichen Movern 19 stattfinden, sondern erfindungsgemäß ist auch eine Übergabe von Portionen oder Teilportionen von einer Bahn auf eine benachbarte Bahn, also zwischen in unterschiedlichen und insbesondere unmittelbar benachbarten Bahnen befindlichen Movern 19 möglich. Zumindest einer der an einer solchen bahnübergreifenden Portions- oder Teilportionsübergabe beteiligten Mover 19 kann mit einem Förderband versehen sein, dessen Förderrichtung sich quer zur Transportrichtung erstreckt. Das Förderband kann permanent eine derartige Querausrichtung besitzen. Alternativ kann das Förderband zumindest um 90° relativ zum Läufer des Movers verdrehbar sein, um wahlweise eine in Transportrichtung oder senkrecht dazu weisende Förderrichtung bereitstellen zu können. Eine bahnübergreifende Übergabe kann auch mehr als zwei benachbarte Bahnen bzw. Bahnabschnitte involvieren. So kann z.B. ein in einer mittleren Bahn befindlicher Mover Teilportionen aus zu beiden Seiten benachbarten Bahnen empfangen.

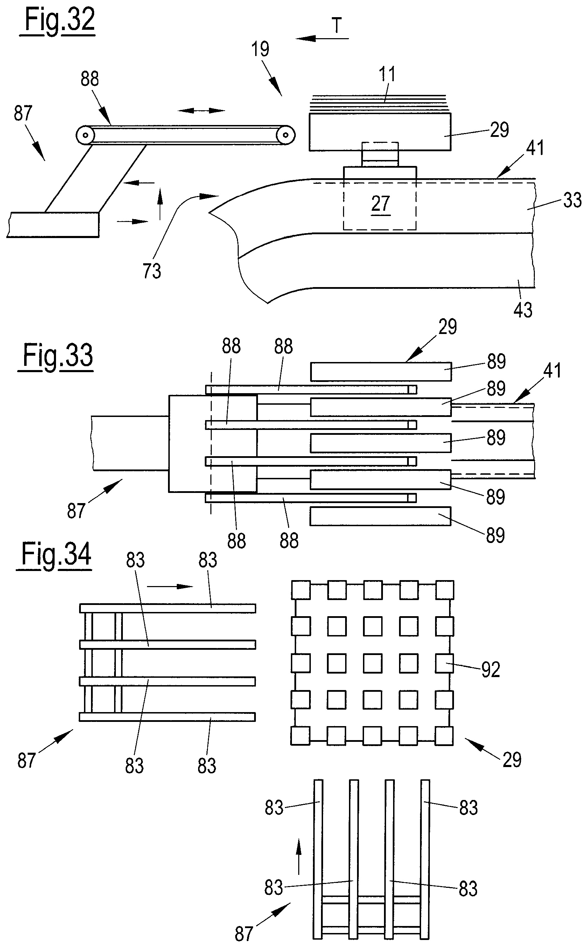

Die Fig. 32 und 33 zeigen eine erfindungsgemäße Möglichkeit, Portionen 11 von dem Träger 29 eines Transportmovers 19 abzunehmen bzw. Portionen 11 an einen Träger 29 zu übergeben.

Hierzu ist eine externe, nicht unmittelbar zum Bahnsystem gehörende Transfereinrichtung 87 vorgesehen, die eine Mehrzahl von antreibbaren schmalen Förderbändern 88 umfasst, die wie die Zinken einer Gabel mit Abstand voneinander parallel angeordnet sind und auch als "Fingerband" oder "Fingerbänder" bezeichnet werden.

Ein mit einer solchen "Förderbandgabel" zusammenwirkender Träger 29 ist gitter- oder rechenförmig ausgebildet und umfasst eine Mehrzahl von mit Abstand zueinander angeordneten, parallelen Stäben 89, wobei die Zwischenräume zwischen den Stäben 89 ausreichend groß sind, um ein kämmendes Hindurchbewegen der Förderbänder 88 der Transfereinrichtung 87 zu ermöglichen.

Wie durch die Pfeile in Fig. 32 angedeutet, kann die Transfereinrichtung 87 einerseits in Transportrichtung T und in die entgegengesetzte Richtung und somit parallel zum Bahnabschnitt 41 verfahren werden, in welchem sich ein Mover 19 bewegt, um eine Portion 11 zu transferieren. Zum anderen kann die Transfereinrichtung 87 die Höhe der von den schmalen Förderbändern 88 gebildeten Transfergabel verändern.

Ein Portionstransfer kann beispielsweise derart erfolgen, dass ein einlaufender Mover 19 in der in Fig. 32 dargestellten Position stoppt, woraufhin die Transfereinrichtung 87 mit ausreichend weit abgesenkten Förderbändern 88 zwischen den Stäben 89 des Trägers 29 hindurch unter die Portion 11 fährt. Anschließend werden die Förderbänder 88 ausreichend weit vertikal nach oben gefahren, um die Portion 11 von der von den Stäben 89 gebildeten Auflagefläche des Trägers 29 abzuheben. Anschließend können die Förderbänder 88 in Bewegung gesetzt werden, um die Portion 11 weiter in Richtung der Transfereinrichtung 87, also in Fig. 32 nach links, zu fördern. Die Transfereinrichtung 87 kann dann als Ganzes vom Bahnabschnitt 41 zurückgezogen werden, woraufhin der nunmehr leere Mover 19 in der Bahn 41 weiterbewegt werden kann.

Wie in Fig. 32 durch den gekrümmten Bahnabschnitt 73 angedeutet, kann hierbei der Mover 19 gewissermaßen "abtauchen" und beispielsweise unterhalb des dargestellten Bahnabschnitts 41 entgegen der Transportrichtung T in Überkopf-Anordnung zurückgeführt und während dieser Rückführung z.B. gereinigt werden.

In der Draufsicht der Fig. 33 ist insbesondere zu erkennen, wie die schmalen Förderbänder 88 der Transfereinrichtung 87 wie die Zinken einer Gabel zwischen den Stäben 89 des Trägers 29 des Movers 19 liegen. Die Portion 11 ist in Fig. 33 nicht dargestellt.

Die Verwendung von Förderbändern ist für einen Transfer von Portionen 11 gleichwohl nicht zwingend erforderlich. Eine passive Einrichtung beispielsweise in Form einer Gabel, wie es z.B. in Verbindung mit den Fig. 25 bis 27 erläutert ist, kann ebenfalls verwendet werden. Ein Vorteil der Verwendung von Förderbändern 88 besteht darin, dass diese eine Portion 11 beispielsweise an ein anderes Förderband übergeben oder direkt in eine Verpackung einlegen können, was mit einer starren, passiven Transfergabel nicht ohne weiteres bzw. nicht in einer für die Portion schonenden Weise möglich ist.

Fig. 34 zeigt in einer schematischen Draufsicht eine weitere Ausführungsform eines für ein Zusammenwirken mit Gabel-Transfereinrichtungen 87 geeigneten Trägers 29 eines Movers 19.

In diesem Ausführungsbeispiel ist die Auflagefläche des Trägers 29 für eine hier nicht dargestellte Portion von einer Vielzahl beispielsweise noppenartiger Vorsprünge 91 mit hier quadratischer Grundfläche gebildet, die sowohl in Querrichtung als auch in Längsrichtung kanalartige, parallel und senkrecht zueinander verlaufende Zwischenräume definieren. Eine derartige Trägerstruktur ermöglicht es, dass Transfereinrichtungen 87 aus um 90° gegeneinander versetzten Richtungen zwischen die Vorsprünge 91 greifen können, um für einen Transfer von Portionen mit dem Träger 29 zusammenzuwirken.

Mit einem derartigen Träger 29 ausgestattete Mover 19 können somit flexibler und vielseitiger eingesetzt werden als andere Mover. Insbesondere sind bei einem derartigen Träger 29 die Transfermöglichkeiten gewissermaßen invariant gegenüber 90°-Drehungen des Trägers 29 relativ zum Läufer 27, d.h. derartige Träger 29 können insbesondere dann vorteilhaft eingesetzt werden, wenn nicht vorhergesagt werden kann, in welcher Drehstellung der Träger 29 in eine Transferstation einläuft, in welcher Transfereinrichtungen 87 zur Aufnahme oder Abgabe von Portionen vorgesehen sind.

Anstelle der in Fig. 34 dargestellten passiven Transfereinrichtungen 87, die jeweils mit ihren Zinken 83 zwischen die Vorsprünge 91 des Trägers 29 greifen können, kann auch bei diesem Ausführungsbeispiel des Trägers 29 mit Transfereinrichtungen 87 gearbeitet werden, die entsprechend dem Ausführungsbeispiel der Fig. 32 und 33 mit schmalen Förderbändern 88 versehen sind.

Wie an anderer Stelle erwähnt, kann das erfindungsgemäße Individual-Transportsystem herkömmliche Förderbandsysteme vollständig ersetzen. Dies gilt auch für einen Ersatz der sogenannten Portionierbänder oder Portioniereinheiten, die unmittelbar im Bereich eines Slicers angeordnet sind und mit denen aus den fallenden, gewissermaßen "frisch" von einem Produkt abgetrennten Scheiben Portionen gebildet und gebildete Portionen an nachfolgende Fördereinheiten übergeben werden.

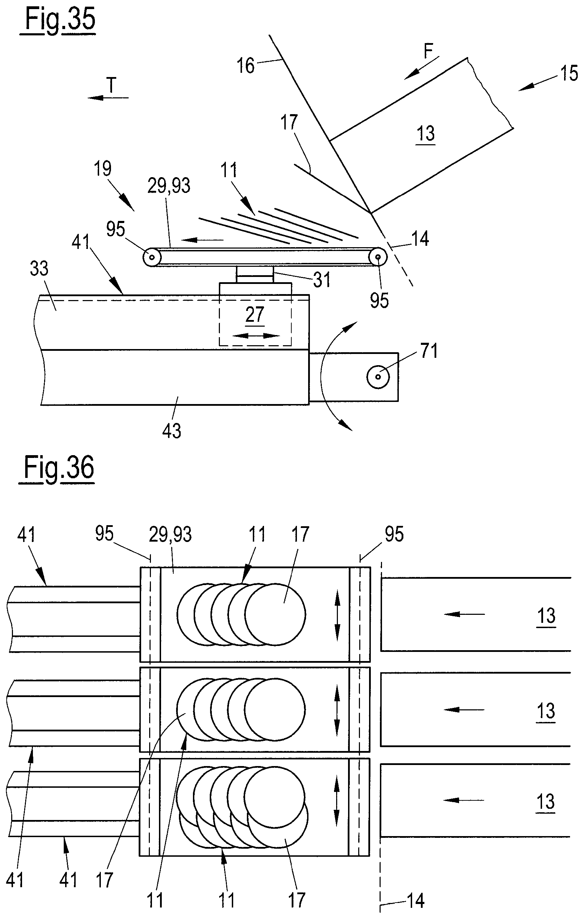

Eine Möglichkeit, wie eine solche Portionierung mittels des erfindungsgemäßen Transportsystems erfolgen kann, ist in den Fig. 35 und 36 schematisch veranschaulicht.

Fig. 35 zeigt eine Seitenansicht eines im Portionierbereich unmittelbar an einem Slicer 15 angeordneten Transportmovers 19, wohingegen der Draufsicht der Fig. 36 unter anderem zu entnehmen ist, dass in diesem Ausführungsbeispiel der Slicer 15 dreispurig ausgebildet ist, d.h. gleichzeitig drei parallel nebeneinander liegende Produkte 13 aufschneiden kann, wobei das erfindungsgemäße Transportsystem in diesem Portionierbereich entsprechend dreispurig ausgebildet ist und drei nebeneinander angeordnete Transportmover 19 umfasst.

Gemäß Fig. 35 werden die aufzuschneidenden Produkte 13 auf einer nicht dargestellten, zur Horizontalen geneigt verlaufenden Produktauflage liegend mittels einer nicht dargestellten Produktzuführung in einer Förderrichtung F einer Schneidebene 14 zugeführt, die von einem umlaufenden Schneidmesser 16 definiert ist, beispielsweise einem Sichelmesser, das um eine parallel zur Förderrichtung F verlaufende Drehachse mit hoher Geschwindigkeit rotiert.

Vom vorderen Produktende abgetrennte Scheiben 17 fallen auf einen wartenden Transportmover 19, dessen Träger 29 von einem Endlosförderband 93 gebildet ist. Das Band 93 läuft über Umlenkrollen, die um Drehachsen 95 drehbar gelagert sind. Was die Möglichkeiten für einen Antrieb des Förderbandes 93 anbetrifft, so wird zur Vermeidung von Wiederholungen auf die entsprechenden Ausführungen beispielsweise zu Fig. 31 verwiesen.

Für die Portionsbildung ist es allerdings nicht zwingend erforderlich, dass das Förderband 93 angetrieben wird. Beispielsweise die Bildung von geschindelten Portionen 11 (vgl. insbesondere Fig. 36), in denen die die Portion 11 bildenden Scheiben 17 einander nur teilweise überlappen, kann auch durch Bewegen des Movers 19 im Bahnabschnitt 41 erfolgen.

Das erfindungsgemäße Transportsystem ist dazu in der Lage, mittels der Steuereinrichtung die Läufer 27 der Mover 19 mit sehr hoher Positioniergenauigkeit auch bei kleinen Geschwindigkeiten zu bewegen, d.h. vorgegebene Portionsbilder können durch entsprechendes Bewegen der Mover 19 exakt hergestellt werden. Mit anderen Worten kann mittels des Läufers 27 der vom Förderband 93 gebildete Träger 29 derart im Fallbereich der abgetrennten Scheiben 17 bewegt werden, dass aus den fallenden Scheiben 17 grundsätzlich jedes beliebige Portionsbild erzeugt werden kann, gegebenenfalls durch mehrfaches Hin- und Herbewegen des Läufers 27 in Transportrichtung T und entgegen der Transportrichtung T.

Wie in Fig. 36 durch die Doppelpfeile angedeutet, kann eine für die Portionsbildung gegebenenfalls erforderliche Bewegung des Trägers 29 quer zur Transportrichtung T (vgl. die untere, zusätzlich quergeschindelte Portion 11 in Fig. 36) beispielsweise dadurch erreicht werden, dass die Bahnabschnitte 41 in Querrichtung bewegbar sind. Alternativ oder zusätzlich kann eine derartige Querverfahrbarkeit in die Mover 19 selbst integriert sein, indem diese dazu in der Lage sind, jeweils das den Träger 29 bildende Förderband 93 in Querrichtung relativ zum jeweiligen Läufer 27 zu verfahren.

Es ist auch möglich, die Mover 19 in einem senkrecht zur Transportrichtung T verlaufenden Bahnabschnitt zu bewegen, um eine für die Portionierung gegebenenfalls erforderliche Querbewegung der Träger 29 zu erzielen.

Anders als in Fig. 35 und 36 dargestellt, ist es auch möglich, die Mover 19 mit solchen antreibbaren Förderbändern zu versehen, die eine Förderbewegung quer zur Transportrichtung T ermöglichen, bei denen also die Drehachsen der Umlenkrollen für die Bänder jeweils in Transportrichtung T verlaufen. Eine Querbewegung kann folglich auch durch Antreiben derartiger Quer-Förderbänder erzielt werden, während eine Bewegung in Transportrichtung T und entgegen der Transportrichtung T - wie oben erläutert - durch Hin- und Herbewegen der Läufer 27 im jeweiligen Bahnabschnitt 41 erzielt werden kann.

Auf diese Weise kann mit jedem Mover 19 eine auch als x-y-Tisch bezeichnete, in zwei aufeinander senkrecht stehenden Richtungen bewegliche Produktablage realisiert werden.

Zusätzliche Ablagemöglichkeiten können darüber hinaus oder alternativ dazu erzielt werden, wenn die Träger 29 der Mover 19 entweder durch Eigenantrieb der Mover 19 oder mittels externer Einrichtungen z.B. in Form von Hilfsmovern in den jeweiligen Bahnabschnitten 41 verdreht werden. So können beispielsweise sogenannte Rundleger mit Hilfe der erfindungsgemäßen Transportmover 19 dargestellt werden.

In Fig. 35 ist der Bahnabschnitt 41 in einer horizontalen Ausrichtung dargestellt, in welcher die Portionen 11 auf den Förderbändern 93 gebildet und jeweils nach Fertigstellung einer Portion 11 der betreffende Mover 19 in Transportrichtung T vom Slicer 15 wegbewegt wird. Dabei genügt es, wenn die hier dargestellten, unmittelbar am Slicer 15 angeordneten Portionier-Bahnabschnitte 41 vergleichsweise kurz sind und die auslaufenden Mover 19 an nicht dargestellte nachfolgende Bahnabschnitte übergeben werden. Wie in Fig. 35 angedeutet, können die Portionier-Bahnabschnitte 41 jeweils um eine horizontal quer zur Transportrichtung T verlaufende Achse 71 verschwenkbar sein. Das in Fig. 35 nicht dargestellte linke Ende jedes Portionier-Bahnabschnitts 41 kann durch ein derartiges Verschwenken mit einem Bahnabschnitt (nicht dargestellt) in Ausrichtung gebracht werden, der in einer Ebene verläuft, die unterhalb derjenigen Ebene liegt, in der die Mover 19 in der in Fig. 35 dargestellten Horizontalstellung der Portionier-Bahnabschnitte 41 abtransportiert werden.

In der nach unten geschwenkten Stellung können die Portionier-Bahnabschnitte 41 jeweils in Fig. 35 von links kommende, unbeladene Transportmover 19 entgegennehmen, die dann nach Zurückschwenken der Portionier-Abschnitte 41 in die horizontale Stellung gemäß Fig. 35 dazu bereit sind, zur Bildung einer neuen Portion 11 fallende Scheiben 17 aufzunehmen.

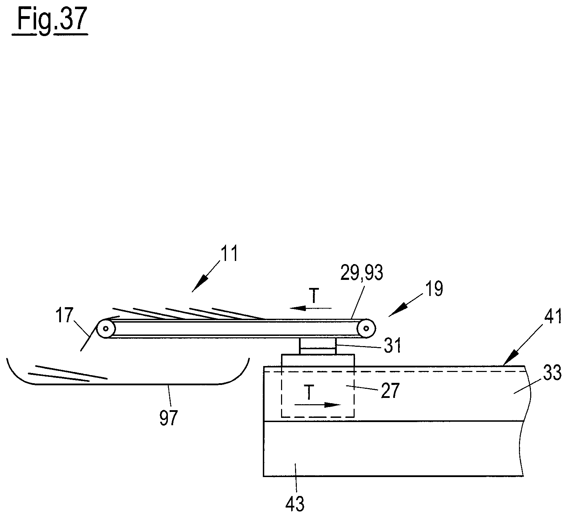

Während die Fig. 35 und 36 denjenigen Bereich eines erfindungsgemäßen Gesamtsystems betreffen, an welchem das erfindungsgemäße Transportsystem mit einem Slicer 15 zum Bilden von Portionen 11 auf den Transportmovern 19 zusammenwirkt, ist in Fig. 37 gewissermaßen das andere Ende eines erfindungsgemäßen Transportsystems dargestellt, an welchem die Portionen 11 das erfindungsgemäße Transportsystem verlassen und in eine Verpackung 97 abgelegt werden.

Wenn gemäß dem Ausführungsbeispiel der Fig. 37 die Mover 19 mit als Förderband 93 ausgebildeten Trägern 29 versehen sind, die angetrieben werden können, dann kann durch Zusammenwirken der Förderbewegung des Förderbandes 93 und der Bewegung des Movers 19 im Bahnabschnitt 41 insgesamt eine schonende Ablage von Portionen 11 in eine Verpackung 97 erfolgen.

Die Überlagerung der durch Antreiben des Förderbandes 93 erzeugten Bewegung in einer Förderrichtung F einerseits mit der durch Bewegung des Läufers 27 im Bahnabschnitt 41 erzeugten, entgegengesetzten Bewegung in Transportrichtung T andererseits hat für die auf dem Förderband 93 aufliegende Portion 11 zur Folge, dass die Portion 11 relativ zur stationären Verpackung 97 ruht, wenn die beiden entgegengesetzten Bewegungen in Förderrichtung F einerseits und in Transportrichtung T andererseits mit derselben Geschwindigkeit erfolgen. Der abzulegenden Portion 11 wird dann gewissermaßen der "Boden unter den Füßen weggezogen". Hierdurch wird die Portion 11 schonend abgelegt.

Auf diese Weise wird das erfindungsgemäße Transportsystem dazu benutzt, ein sogenanntes "Abrollen" zu realisieren, wie es in Verbindung mit herkömmlichen Förderbandsystemen für die Ablage von Lebensmittelportionen grundsätzlich bekannt ist. Auch diese Ausführungsform ist folglich ein Beispiel dafür, wie mit dem erfindungsgemäßen Individual-Transportsystem Funktionalitäten herkömmlicher Förderbandsysteme dargestellt werden können.

Für die Darstellung eines Abrollbandes ist es nicht zwingend erforderlich, die Mover 19 derart auszubilden, dass das Förderband 93 mittels eines movereigenen Bandantriebs angetrieben werden kann. Alternativ ist es möglich, dass im Bereich der hier in Fig. 37 dargestellten Ablagestelle eine nicht dargestellte Zusatzeinrichtung vorgesehen ist, die ein Teil des Bahnsystems oder extern vorgesehen sein kann und die dazu in der Lage ist, ein nicht angetriebene, frei bewegliches Förderband 93 festzuhalten. Durch Bewegen des Läufers 27 im Bahnabschnitt 41 in Transportrichtung T kann auf diese Weise die erforderliche Abrollbewegung des Förderbandes 93 und somit eine schonende Ablage der Portion 11 realisiert werden.

Das Festhalten und Freigeben des Förderbandes 93 mittels der erwähnten Zusatzeinrichtung kann jeweils mit Hilfe der dem Transportsystem zugeordneten Steuereinrichtung bewirkt werden.

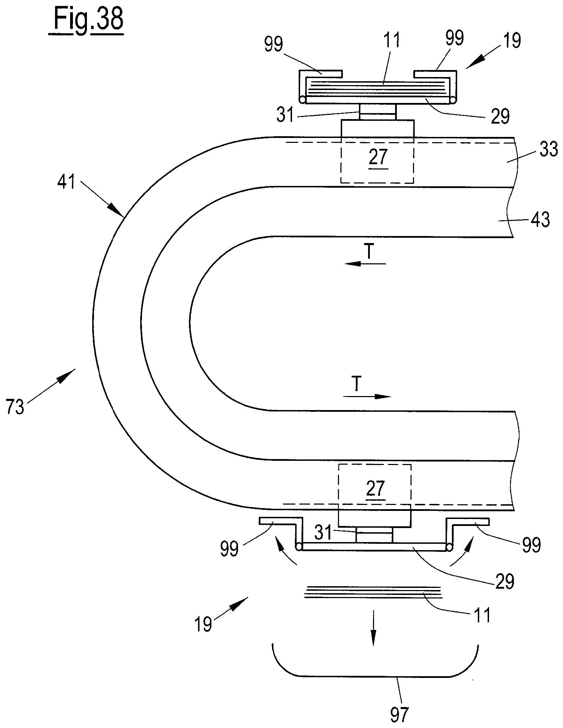

Fig. 38 zeigt eine andere erfindungsgemäße Möglichkeit, um Portionen 11 direkt von einem in einem Bahnabschnitt 41 bewegten Mover 19 in eine Verpackung 97 abzugeben.

Dieses Ausführungsbeispiel macht sich die Schwerkraft zunutze und umfasst einen in einer vertikalen Ebene verlaufenden Bahnabschnitte 41 vom U-Typ, mittels welchem die Mover 19 zunächst in einer oberen horizontalen Ebene in Transportrichtung T heranbewegt und nach Durchlaufen eines gekrümmten 180°-Abschnitts 73 in Überkopf-Anordnung in einer unteren Horizontalebene in entgegengesetzter Transportrichtung T weiterbewegt werden.

Unterhalb des in der unteren Horizontalebene verlaufenden Teils des Bahnabschnitts 41 befindet sich eine Verpackungsstation mit wartenden Verpackungen 97.

Sobald sich ein Mover 19 in Überkopf-Anordnung oberhalb einer Verpackung 97 befindet, werden Haltearme 99 aktiviert und in eine Freigabestellung geschwenkt, um eine abzugebende Portion 11 freizugeben, die somit in die Verpackung 97 fallen kann. Bei diesem Transfer werden die Portionen 11 gleichzeitig insofern gewendet, als sie in der Verpackung 97 anders herum liegen als ursprünglich auf dem Träger 29 des Movers 19.

Wie im oberen Teil der Fig. 38 dargestellt, sorgen die vor der Freigabe der Portion 11 in einer Haltestellung befindlichen Haltearme 99 dafür, dass die Portion 11 sicher auf dem Träger 29 verbleibt, während der Mover 19 in die Überkopf-Stellung gemäß der Darstellung im unteren Teil der Fig. 38 bewegt wird.

Das Verschwenken der Haltearme 99 kann mittels eines in den Mover 19 integrierten Antriebs erfolgen. Alternativ kann eine externe Auslöseeinrichtung vorgesehen sein, die beispielsweise mechanisch, elektrisch oder magnetisch auf die Haltearme 99 einwirkt, wenn der Mover 19 die Freigabestelle oberhalb der Verpackung 97 erreicht.

Anstelle der in Fig. 38 dargestellten verschwenkbaren Haltearme 99 können in alternativen Ausgestaltungen der Erfindung andere Mittel zum Festhalten und Freigeben der Portionen 11 am Träger 29 vorgesehen sein. So ist es beispielsweise möglich, eine Portion 11 mittels Unterdruck am Träger 29 zu halten, beispielsweise durch Ansaugen über im Träger 29 ausgebildete Ansaugöffnungen. Durch Abschalten der Unterdruckquelle kann eine zuvor sicher festgehaltene Portion 11 zur Abgabe an eine Verpackung 97 freigegeben und somit fallengelassen werden.

In einer weiteren alternativen Ausgestaltung ist es möglich, die Verpackungen 97 jeweils über eine auf dem Träger 29 liegende Portion 11 zu stülpen, d.h. bei normal orientiertem, nicht in Überkopfstellung befindlichem Mover 19 die Verpackung 97 mit ihrer offenen Seite nach unten auf die Portion 11 zu legen. Das Ablegen der so bereits in der Verpackung 97 befindlichen Portion 11 samt Verpackung 97 kann dann beispielsweise wieder durch Überführen des Movers 19 in eine Überkopf-Stellung erfolgen. Um dabei die Portion 11 in der Verpackung 97 bis zur Freigabe sicher am Mover 19 zu halten, können wie auch immer geartete, in den Mover 19 integrierte oder externe Haltemittel vorgesehen sein.

Als integrierte Haltemittel für die Verpackung 97 samt Portion 11 können beispielsweise verstellbare Haltearme dienen, wie sie in Fig. 38 mit den Haltearmen 99 nur für eine Portion 11 dargestellt sind.

Als externes Haltemittel kann beispielsweise eine oberhalb des Bahnabschnitts 41 verlaufende Halteschiene vorgesehen sein, die zusammen mit dem Bahnabschnitt 41 einen Zwischenraum bzw. eine Art Tunnel definiert, in welchen der Mover 19 nach dem Auflegen der Verpackung 97 einfährt, der während der "Tunnelfahrt" die Verpackung 97 samt Portion 11 auf dem Träger 29 hält und der nach Ausfahren des dann in die Überkopf-Anordnung überführten Movers 19 die Verpackung 97 samt darin befindlicher Portion 11 freigibt, so dass die Verpackung 97 und die Portion 11 herabfallen und sich so vom Träger 29 lösen können.

### Bezugszeichenliste

- 11: Portion
- 13: Produkt
- 14: Schneidebene
- 15: Aufschneidevorrichtung, Slicer
- 16: Schneidmesser
- 17: Scheibe
- 19: Transportmover
- 21: Bahnsystem
- 23: Bahn
- 25: Steuereinrichtung
- 27: Läufer
- 29, 29': Träger
- 29a: Trägersegment
- 29b: Trägersegment
- 31: Halter
- 33: Führungsschiene
- 35: Schlitz
- 37, 37': Kupplungsabschnitt
- 39, 39': Auflagefläche
- 41: Bahnabschnitt
- 43: Stator
- 45: Rückführstrecke
- 47: Verzweigung
- 49: Format
- 51: Pufferstrecke
- 53: Weichenabschnitt
- 55: Halterung
- 57: Funktionsstation
- 59: Waage
- 61: Aussortierstrecke
- 63: Kammer
- 65: Reinigungsband
- 67: Verbindungselement
- 69: Verbindungselement
- 71: Schwenkachse
- 73: gekrümmter Abschnitt
- 75: Wendemover
- 77: Drehachse
- 79: Koppelstange
- 81: Greifer
- 83: Zinken
- 87: Transfereinrichtung
- 88: Förderband
- 89: Stab
- 91: Verpackungsmaschine
- 92: Vorsprung
- 93: Förderband
- 95: Drehachse
- 97: Verpackung
- 99: Haltearm

- T: Transportrichtung
- R: Rückführrichtung
- M: Permanentmagnetanordnung
- F: Förderrichtung

## Patentansprüche

1. Vorrichtung zum Bewegen von Portionen (11), die jeweils wenigstens eine von einem Lebensmittelprodukt (13), insbesondere mittels einer Aufschneidevorrichtung, insbesondere eines Hochgeschwindigkeitsslicers, abgetrennte Scheibe (17) umfassen,
mit einer Mehrzahl individuell bewegbarer Transportmover (19) für jeweils wenigstens eine Portion (11),
mit einem Bahnsystem (21) für die Transportmover (19), in welchem die Transportmover (19) entlang wenigstens einer vorgegebenen Bahn (23) in einer Transportrichtung (T) bewegbar sind, und
mit einer Steuereinrichtung (25) zum Steuern der Bewegungen der Transportmover (19) in dem Bahnsystem (21),
wobei die Transportmover (19) jeweils zumindest einen mit dem Bahnsystem (21) zusammenwirkenden Läufer (27) und wenigstens einen am Läufer (27) mittels eines Halters (31) angebrachten Träger (29, 29') für zumindest eine Portion (11) umfassen,
wobei der Antrieb für die Transportmover (19) jeweils von dem Läufer (27) und dem Bahnsystem (21) gebildet ist, die gemeinsam einen elektromagnetischen Antrieb für den Transportmover (19) bilden,
**dadurch gekennzeichnet, dass**
bei zumindest einem Transportmover der Träger eine Mehrzahl von mit Abstand zueinander angeordneten, parallelen Stäben (89) umfasst und dazu ausgebildet ist, mit einer Handhabungseinrichtung für die Portionen zusammenzuwirken, nämlich mit einem Förderband mit einer Mehrzahl von antreibbaren schmalen Förderbändern (88), die mit Abstand voneinander parallel angeordnet sind, so dass ein kämmendes Hindurchbewegen der Förderbänder (88) durch den Träger möglich ist.

2. Vorrichtung nach Anspruch 1,
**dadurch gekennzeichnet,**
**dass** der Läufer ein Bestandteil eines linearen Synchronmotors ist, wobei insbesondere der Läufer zumindest einen Permanentmagneten umfasst und das Bahnsystem als Motorstator ausgebildet ist.

3. Vorrichtung nach Anspruch 1 oder 2,
**dadurch gekennzeichnet,**
**dass** das Bahnsystem zu einem Mehrspurbetrieb ausgebildet ist und insbesondere mehrere Bahnen umfasst, die zumindest abschnittsweise parallel zueinander verlaufen, und/oder
**dass** der Bahnabschnitt in einer zumindest näherungsweise horizontal verlaufenden Ebene quer zur Transportrichtung verstellbar ist, und/oder dass der Bahnabschnitt in zumindest näherungsweise vertikaler Richtung verstellbar ist.

4. Vorrichtung nach einem der vorhergehenden Ansprüche,
**dadurch gekennzeichnet,**
**dass** ein Beladebereich des Bahnsystems dazu ausgebildet ist, unter Schwerkrafteinfluss fallende Scheiben und/oder unmittelbar von einer Vorrichtung zum Aufschneiden von Lebensmittelprodukten, insbesondere Hochgeschwindigkeitsslicer, kommende Scheiben mittels der Transportmover aufzunehmen, und/oder
**dass** ein Beladebereich des Bahnsystems dazu ausgebildet ist, von einem, insbesondere zumindest ein Förderband umfassenden, Fördersystem kommende Portionen mittels der Transportmover aufzunehmen.

5. Vorrichtung nach einem der vorhergehenden Ansprüche,
**dadurch gekennzeichnet,**
**dass** das Bahnsystem zusätzlich zu wenigstens einer, insbesondere von einem Beladebereich zu einem Entladebereich führenden, Normalstrecke zumindest eine Funktionsstrecke für die Transportmover umfasst, und/oder dass zumindest eine Funktionsstrecke als Aussortier- oder Ausschleusstrecke ausgebildet ist, über die Transportmover, deren Portionen zumindest ein vorgegebenes oder vorgebbares Kriterium erfüllen oder nicht erfüllen, aus einer Normalstrecke herausführbar sind, insbesondere automatisch.

6. Vorrichtung nach einem der vorhergehenden Ansprüche, **dadurch gekennzeichnet,**
**dass** das Bahnsystem einen Funktionsbereich umfasst, an welchem mehrere Bahnen vorübergehend, insbesondere auf genau eine Bahn, zusammengeführt sind und welcher dazu ausgebildet ist, für die Transportmover und/oder die Portionen eine Zusatzfunktion auszuführen, insbesondere eine Klassifizierungs-, Kontroll-, Überwachungs-, Wiege-, Ausricht- und/oder Wartungsfunktion, und/oder
**dass** das Bahnsystem wenigstens einen Funktionsbereich umfasst, in welchem zusätzlich zu wenigstens einer Normalstrecke zumindest eine Überhol-, Warte- oder Parkstrecke umfasst, die an einer Stelle von der Normalstrecke abzweigt und an einer anderen Stelle wieder in die Normalstrecke einmündet, und/oder
**dass** wenigstens ein in dem Bahnsystem bewegbarer Funktionsmover vorgesehen ist, der einen mit dem Bahnsystem zusammenwirkenden Läufer und zumindest ein Funktionsmittel umfasst, das eine von der Transportfunktion der Transportmover verschiedene Funktion bereitstellt.

7. Vorrichtung nach einem der vorhergehenden Ansprüche,
**dadurch gekennzeichnet,**
**dass** bei zumindest einem Transportmover der Träger relativ zum Läufer verdrehbar ist, insbesondere um eine senkrecht zu einer für die Portion vorgesehenen Auflagefläche des Trägers verlaufende Achse, und/oder dass bei zumindest einem Transportmover der Träger eine Mehrzahl von Trägersegmenten umfasst, die relativ zueinander bewegbar sind, und/oder dass bei zumindest einem Transportmover der Träger am Läufer oder am Halter lösbar angebracht ist, und/oder
**dass** bei zumindest einem Transportmover der Träger mit Mitteln versehen ist, die dazu ausgebildet sind, mit einer zum Bewegen des Trägers ausgebildeten Handhabungseinrichtung, insbesondere zum Bilden einer Portion auf dem Träger und/oder zum Ausrichten einer Portion, zusammenzuwirken.

8. Vorrichtung nach einem der vorhergehenden Ansprüche,
**dadurch gekennzeichnet,**
**dass** zumindest eine Transferstelle zur Übergabe und/oder Übernahme von Transportmovern oder deren Trägern an einem vertikal verlaufenden Bahnabschnitt vorgesehen ist, und/oder
**dass** zumindest eine Transferstelle zur Übergabe und/oder Übernahme von Transportmovern oder deren Trägern an einem zum Wenden der Portionen ausgebildeten Funktionsbereich des Bahnsystems vorgesehen ist.

9. Vorrichtung nach einem der vorhergehenden Ansprüche,
**dadurch gekennzeichnet,**
**dass** zumindest ein Transportmover oder ein Funktionsmover zur Aufnahme von Energie aus dem Bahnsystem ausgebildet ist, insbesondere durch elektromagnetische Induktion, und/oder
**dass** zumindest ein Transportmover mit einer, insbesondere optischen, Anzeigeeinrichtung für wenigstens eine zumindest eine Eigenschaft des Transportmovers oder einer Portion betreffende Information versehen ist, wobei bevorzugt mittels der Anzeigeeinrichtung eine das, insbesondere mittels einer in den Transportmover integrierten Waage oder an einem Wiegebereich des Bahnsystems ermittelte, Gewicht einer Portion betreffende Information anzeigbar ist.

10. Vorrichtung nach einem der vorhergehenden Ansprüche,
**dadurch gekennzeichnet,**
**dass** bei zumindest einem Transportmover der Träger eine Fördereinrichtung für eine Portion umfasst oder als Fördereinrichtung ausgebildet ist, wobei insbesondere die Fördereinrichtung wenigstens ein Förderband, bevorzugt ein Endlosförderband und/oder ein Abrollband, umfasst, und/oder dass der Träger dazu ausgebildet ist, mittels der Handhabungseinrichtung relativ zum Halter bewegt oder vom Halter, zumindest vorübergehend, entfernt zu werden, insbesondere als Ganzes oder in Teilen.

11. Vorrichtung nach einem der vorhergehenden Ansprüche,
**dadurch gekennzeichnet,**
**dass** die Steuereinrichtung dazu ausgebildet ist, in zumindest einem einer Aufschneidevorrichtung zugeordneten Bereich des Bahnsystems mit zumindest einem Transportmover einen Portionier- und/oder Portionskomplettierungsbetrieb durchzuführen,
wobei insbesondere bei dem Portionier- und/oder Portionskomplettierungsbetrieb jeweils der Transportmover oder der Träger des Transportmovers oder ein Ablagebereich des Trägers abgestimmt auf den Betrieb der Aufschneidevorrichtung in und/oder gegen die Transportrichtung bewegbar ist.

12. Vorrichtung nach einem der vorhergehenden Ansprüche,
**dadurch gekennzeichnet, dass** das Bahnsystem wenigstens einen Funktionsbereich umfasst, an welchem mehrere, insbesondere mehrspurig einlaufende, Transportmover gruppierbar sind, wobei in dem Funktionsbereich die Transportmover in einem vorgegebenen Format relativ zueinander anordenbar sind, wobei das Format zumindest eine Reihe, wenigstens eine Spalte oder zumindest ein n x m-Array (mit n, m > 1) umfasst.

13. Vorrichtung nach einem der vorhergehenden Ansprüche,
**dadurch gekennzeichnet,**
**dass** zumindest ein Transportmover und/oder ein Bahnabschnitt dazu ausgebildet ist, das Gewicht einer Portion zu ermitteln, welche sich auf dem Transportmover bzw. auf einem sich in dem Bahnabschnitt befindlichen Transportmover befindet, wobei zumindest ein Transportmover mit einer integrierten Waage versehen ist, mittels welcher das Gewicht der Portion bestimmbar ist, und/oder
**dass** in zumindest einen, insbesondere von unmittelbar benachbarten Bahnabschnitten entkoppelten, Bahnabschnitt des Bahnsystems eine Wiegeeinrichtung integriert ist.

14. Vorrichtung nach einem der vorhergehenden Ansprüche,
**dadurch gekennzeichnet,**
**dass** die Steuereinrichtung dazu ausgebildet ist, das Bahnsystem auf das Vorhandensein von, insbesondere durch Verschmutzung und/oder Verschleiß verursachten, Störungen zu überwachen, insbesondere mittels dem Bahnsystem und/oder den Transportmovern zugeordneten Sensoren und/oder durch Auswerten von den Betrieb des Bahnsystems und/oder der Transportmover betreffenden Parametern.

## Claims

1. An apparatus for moving portions (11) which each comprise at least one slice (17) cut off from a food product (13), in particular by means of a slicing apparatus, in particular a high-speed slicer,
having a plurality of individually movable transport movers (19) each for at least one portion (11);
having a track system (21) for the transport movers (19) in which the transport movers (19) are movable in a direction of transport (T) along at least one predefined track (23); and
having a control device (25) for controlling the movements of the transport movers (19) in the track system (21),
wherein the transport movers (19) each comprise at least one rotor (27) cooperating with the track system (21) and at least one carrier (29, 29') for at least one portion (11) attached to the rotor (27) by means of a holder (31);
wherein the drive for each transport mover (19) is formed by the rotor (27) and by the track system (21) which together form an electromagnetic drive for the transport mover (19),
**characterized in that**,
in at least one transport mover, the carrier comprises a plurality of parallel rods (89) arranged spaced apart from one another and is configured to cooperate with a handling device for the portions, namely with a conveyor belt comprising a plurality of drivable narrow conveyor belts (88) which are spaced apart from one another in parallel so that a meshing moving through of the conveyor belts (88) through the carrier is possible.

2. An apparatus in accordance with claim 1,
**characterized in that**
the rotor is a component of a linear synchronous motor, with the rotor in particular comprising at least one permanent magnet and the track system being configured as a motor stator.

3. An apparatus in accordance with claim 1 or 2,
**characterized in that**
the track system is configured for a multi-lane operation and in particular comprises a plurality of tracks which extend in parallel with one another at least section-wise, and/or
**in that** the track section is adjustable transversely to the direction of transport in a plane extending at least approximately horizontally; and/or in that the track section is at least approximately adjustable in the vertical direction.

4. An apparatus in accordance with any one of the preceding claims,
**characterized in that**
a loading region of the track system is configured to receive slices falling under the effect of gravity and/or slices coming directly from an apparatus for slicing food products, in particular a high-speed slicer, by means of the transport movers, and/or
a loading region of the track system is configured to receive portions coming from a conveyor system, in particular a conveyor system comprising at least one conveyor belt, by means of the transport movers.

5. An apparatus in accordance with any one of the preceding claims,
**characterized in that**
the track system comprises at least one functional line for the transport movers in addition to at least one normal line, in particular a normal line leading from a loading region to an unloading region, and/or
**in that** at least one functional line is configured as a rejection line or expulsion line via which transport movers whose portions satisfy or do not satisfy at least one predefined or predefinable criterion can be led out of a normal line, in particular automatically.

6. An apparatus in accordance with any one of the preceding claims,
**characterized in that**
the track system comprises a functional region at which a plurality of tracks are led together temporarily, in particular to exactly one track, and which is configured to carry out an additional function for the transport movers and/or the portions, in particular a classification/control/monitoring/weighing/alignment and/or maintenance function, and/or
**in that** the track system comprises at least one functional region in which, in addition to at least one normal line, at least one overtaking line, waiting line or parking line is provided which branches off from the normal line at one point and opens into the normal line again at another point, and/or in that at least one functional mover movable in the track system is provided that comprises a rotor cooperating with the track system and at least one functional means which provides a function different from the transport function of the transport movers.

7. An apparatus in accordance with any one of the preceding claims,
**characterized in that**,
in at least one transport mover, the carrier is rotatable relative to the rotor, in particular about an axis extending perpendicular to a support surface of the carrier provided for the portion, and/or
**in that**, in at least one transport mover, the carrier comprises a plurality of carrier segments which are movable relative to one another, and/or in that, in at least one transport mover, the carrier is releasably attached to the rotor or to the holder, and/or
**in that**, in at least one transport mover, the carrier is provided with means which are configured to cooperate with a handling device configured for moving the carrier, in particular for forming a portion on the carrier and/or for aligning a portion.

8. An apparatus in accordance with any one of the preceding claims, **characterized in that**
at least one transfer point is provided for handing over and/or taking over transport movers or their carriers at a vertically extending track section, and/or
**in that** at least one transfer point is provided for handing over and/or taking over transport movers or their carriers at a functional region of the track system configured for flipping over the portions.

9. An apparatus in accordance with any one of the preceding claims,
**characterized in that**
at least one transport mover or functional mover is configured for taking up energy from the track system, in particular by electromagnetic induction, and/or
**in that** at least one transport mover is provided with a display device, in particular an optical display device, for at least one piece of information relating to at least one property of the transport mover or of a portion, with a piece of information relating to the weight of a portion, said weight in particular being determined by means of a scale integrated in the transport mover or at a weighing region of the track system, preferably being able to be displayed by means of the display device.

10. An apparatus in accordance with any one of the preceding claims,
**characterized in that**,
in at least one transport mover, the carrier comprises a conveyor device for a portion or is configured as a conveyor device, with the conveyor device in particular comprising at least one conveyor belt, preferably a continuous conveyor belt and/or a tipping belt, and/or
**in that** the carrier is configured to be moved relative to the holder by means of the handling device or to be removed from the holder, at least temporarily, in particular as a whole or in parts.

11. An apparatus in accordance with any one of the preceding claims,
**characterized in that**
the control device is configured to carry out a portioning operation and/or a portion completing operation in at least one region of the track system associated with a slicing apparatus and having at least one transport mover,
wherein, in particular in the portioning operation and/or the portion completing operation, the respective transport mover or the carrier of the transport mover or a placement region of the carrier is movable in and/or against the direction of transport coordinated with the operation of the slicing apparatus.

12. An apparatus in accordance with any one of the preceding claims,
**characterized in that**
the track system comprises at least one functional region at which a plurality of transport movers can be grouped that are in particular incoming on multiple lanes, with the transport movers being able to be arranged in a predefined format relative to one another in the functional region, with the format comprising at least one row, at least one column or at least one n x m array (where n, m > 1).

13. An apparatus in accordance with any one of the preceding claims,
**characterized in that**
at least one transport mover and/or one track section is/are configured to determine the weight of a portion which is located on the transport mover or on a transport mover located in the track section, with at least one transport mover being provided with an integrated scale by means of which the weight of the portion can be determined, and/or
**in that** a weighing device is integrated in at least one track section of the track system that is in particular decoupled from directly adjacent track sections.

14. An apparatus in accordance with any one of the preceding claims,
**characterized in that**
the control device is configured to monitor the track system for the presence of problems, in particular caused by contamination and/or wear, in particular by means of sensors associated with the track system and/or with the transport movers, and/or by evaluating parameters relating to the operation of the track system and/or of the transport movers.

## Revendications

1. Dispositif pour déplacer des portions (11) qui comprennent chacune au moins une tranche (17) séparée d'un produit alimentaire (13), en particulier au moyen d'un dispositif de tranchage, en particulier d'une trancheuse à grande vitesse, comprenant
une pluralité d'organes de transport (19) pour au moins une portion (11) respective, qui peuvent être déplacés individuellement,
un système de voie (21) pour les organes de transport (19), dans lequel les organes de transport (19) peuvent être déplacés le long d'au moins une voie prédéfinie (23) dans une direction de transport (T), et
un dispositif de commande (25) pour commander les mouvements des organes de transport (19) dans le système de voie (21),
dans lequel
les organes de transport (19) comprennent chacun au moins un curseur (27), coopérant avec le système de voie (21), et au moins un support (29, 29') pour au moins une portion (11), qui est monté sur le curseur (27) au moyen d'un élément de retenue (31),
l'entraînement pour chacun des organes de transport (19) est formé par le curseur (27) et par le système de voie (21), qui forment ensemble un entraînement électromagnétique pour l'organe de transport (19),
**caractérisé en ce que**
pour au moins un organe de transport, le support comprend une pluralité de barres parallèles (89) disposées à distance les unes des autres et est conçu pour coopérer avec un dispositif de manipulation des portions, à savoir avec une bande de convoyage comportant une pluralité de bandes de convoyage étroites (88) aptes à être entraînées et disposées parallèlement à distance les unes des autres, de manière à permettre aux bandes de convoyage (88) de traverser le support à la manière d'un peigne.

2. Dispositif selon la revendication 1,
**caractérisé en ce que**
le curseur est un composant d'un moteur synchrone linéaire, en particulier, le curseur comprenant au moins un aimant permanent et le système de voie étant conçu comme un stator de moteur.

3. Dispositif selon la revendication 1 ou 2,
**caractérisé en ce que**
le système de voie est conçu pour un fonctionnement à plusieurs pistes et comprend en particulier plusieurs voies qui s'étendent au moins localement parallèlement les unes aux autres, et/ou
**en ce que** la section de voie est réglable dans un plan au moins approximativement horizontal transversalement à la direction de transport, et/ou en ce que la section de voie est réglable dans une direction au moins approximativement verticale.

4. Dispositif selon l'une des revendications précédentes,
**caractérisé en ce que**
une zone de chargement du système de voie est conçue pour recevoir, à l'aide des organes de transport, des tranches tombant sous l'effet de la gravité, et/ou pour recevoir des tranches provenant directement d'un dispositif de tranchage de produits alimentaires, en particulier d'une trancheuse à grande vitesse, et/ou
**en ce qu'**une zone de chargement du système de voie est conçue pour recevoir, à l'aide des organes de transport, des portions provenant d'un système de convoyage comprenant en particulier au moins une bande de convoyage.

5. Dispositif selon l'une des revendications précédentes,
**caractérisé en ce que**
le système de voie comprend, en plus d'au moins un trajet normal menant en particulier d'une zone de chargement à une zone de déchargement, au moins un trajet fonctionnel pour les organes de transport, et/ou
**en ce qu'**au moins un trajet fonctionnel est conçu comme un trajet de tri ou d'évacuation permettant de faire sortir d'un trajet normal, en particulier automatiquement, les organes de transport dont les portions satisfont ou ne satisfont pas à au moins un critère prédéfini ou prédéfinissable.

6. Dispositif selon l'une des revendications précédentes,
**caractérisé en ce que**
le système de voie comprend une zone fonctionnelle dans laquelle plusieurs voies sont temporairement réunies, en particulier précisément en une seule voie, et qui est conçue pour exécuter une fonction supplémentaire pour les organes de transport et/ou pour les portions, en particulier une fonction de classification, de contrôle, de surveillance, de pesage, d'alignement et/ou de maintenance, et/ou
**en ce que** le système de voie comprend au moins une zone fonctionnelle qui présente, en plus d'au moins un trajet normal, au moins un trajet de dépassement, d'attente ou de stationnement qui bifurque à un endroit du trajet normal et rejoint le trajet normal à un autre endroit, et/ou
**en ce qu'**il est prévu au moins un organe fonctionnel mobile dans le système de voie, qui comprend un curseur, coopérant avec le système de voie, et au moins un moyen fonctionnel qui assure une fonction différente de la fonction de transport des organes de transport.

7. Dispositif selon l'une des revendications précédentes,
**caractérisé en ce que**
dans au moins un organe de transport, le support peut tourner par rapport au curseur, en particulier autour d'un axe perpendiculaire à une surface d'appui du support prévue pour la portion, et/ou
**en ce que**, dans au moins un organe de transport, le support comprend une pluralité de segments de support qui peuvent se déplacer les uns par rapport aux autres, et/ou
**en ce que**, dans au moins un organe de transport, le support est monté de manière amovible sur le curseur ou sur l'élément de retenue, et/ou
**en ce que**, dans au moins un organe de transport, le support est muni de moyens conçus pour coopérer avec un dispositif de manipulation conçu pour déplacer le support, en particulier pour former une portion sur le support et/ou pour aligner une portion.

8. Dispositif selon l'une des revendications précédentes,
**caractérisé en ce que**
au moins un point de transfert destiné à remettre et/ou à reprendre des organes de transport ou leurs supports est prévu sur une section de voie s'étendant verticalement, et/ou
**en ce qu'**au moins un point de transfert destiné à remettre et/ou à reprendre des organes de transport ou leurs supports est prévu dans une zone fonctionnelle du système de voie conçue pour tourner les portions.

9. Dispositif selon l'une des revendications précédentes,
**caractérisé en ce que**
au moins un organe de transport ou un organe fonctionnel est conçu pour absorber l'énergie du système de voie, en particulier par induction électromagnétique, et/ou
**en ce qu'**au moins un organe de transport est muni d'un dispositif d'affichage, en particulier optique, pour afficher au moins une information concernant au moins une propriété de l'organe de transport ou d'une portion, de préférence, le dispositif d'affichage permettant d'afficher une information concernant le poids d'une portion, déterminé en particulier au moyen d'une balance, intégrée dans l'organe de transport, ou au niveau d'une zone de pesage du système de voie.

10. Dispositif selon l'une des revendications précédentes,
**caractérisé en ce que**
dans au moins un organe de transport, le support comprend un dispositif de convoyage d'une portion ou est conçu comme un dispositif de convoyage, en particulier, le dispositif de convoyage comprenant au moins une bande de convoyage, de préférence une bande de convoyage sans fin et/ou une bande déroulante, et/ou
**en ce que** le support est conçu pour être déplacé par rapport l'élément de retenue ou pour être retiré, au moins temporairement, de l'élément de retenue, en particulier dans son ensemble ou en parties, à l'aide de l'organe de manipulation.

11. Dispositif selon l'une des revendications précédentes,
**caractérisé en ce que**
le dispositif de commande est conçu pour effectuer une opération de portionnement et/ou de complétion de portions dans au moins une zone du système de voie associée à un dispositif de tranchage et munie d'au moins un organe de transport,
en particulier, lors de l'opération de portionnement et/ou de complétion de portions, l'organe de transport ou le support de l'organe de transport ou une zone de dépôt du support peut être déplacé(e) dans la direction de transport et/ou en sens inverse, en fonction du fonctionnement du dispositif de tranchage.

12. Dispositif selon l'une des revendications précédentes,
**caractérisé en ce que**
le système de voie comprend au moins une zone fonctionnelle dans laquelle plusieurs organes de transport, en particulier entrant sur plusieurs pistes, peuvent être regroupés, et dans la zone fonctionnelle, les organes de transport peuvent être disposés les uns par rapport aux autres selon un format prédéfini, le format comprenant au moins une rangée, au moins une colonne ou au moins un réseau n x m (avec n, m > 1).

13. Dispositif selon l'une des revendications précédentes,
**caractérisé en ce que**
au moins un organe de transport et/ou une section de voie est conçu(e) pour déterminer le poids d'une portion qui se trouve sur l'organe de transport ou sur un organe de transport situé dans la section de voie, au moins un organe de transport étant équipé d'une balance intégrée permettant de déterminer le poids de la portion, et/ou
**en ce qu'**un dispositif de pesage est intégré dans au moins une section de voie du système de voie, en particulier découplée des section de voie immédiatement adjacentes.

14. Dispositif selon l'une des revendications précédentes,
**caractérisé en ce que**
le dispositif de commande est conçu pour surveiller le système de voie afin de détecter la présence de dysfonctionnements, en particulier ceux causés par un encrassement et/ou par une usure, en particulier à l'aide de capteurs associés au système de voie et/ou aux organes de transport et/ou grâce à une évaluation des paramètres relatifs au fonctionnement du système de voie et/ou des organes de transport.
